(19) Europäisches Patentamt
European Patent Office
Office européen des brevets

(11) **EP 4 250 775 B1**

(12) **EUROPEAN PATENT SPECIFICATION**

(45) Date of publication and mention
of the grant of the patent:
**25.03.2026 Bulletin 2026/13**

(21) Application number: **21922597.6**

(22) Date of filing: **16.12.2021**

(51) International Patent Classification (IPC):
*H04W 4/02* (2018.01)        *H04M 1/72457* (2021.01)
*H04M 1/72448* (2021.01)    *H04M 1/72403* (2021.01)
*H04W 4/80* (2018.01)        *H04M 1/72412* (2021.01)
*H04L 12/28* (2006.01)        *H04M 1/72454* (2021.01)

(52) Cooperative Patent Classification (CPC):
**H04M 1/72457; H04M 1/72454; H04W 4/026;**
**H04W 4/80;** H04L 12/282; H04L 2012/2841;
H04M 1/72412; H04M 1/72415; H04W 4/70

(86) International application number:
**PCT/CN2021/138918**

(87) International publication number:
**WO 2022/161007 (04.08.2022 Gazette 2022/31)**

(54) **METHOD AND SYSTEM FOR QUICKLY POPPING UP CONTROL WINDOW OF ELECTRONIC DEVICE, AND MOBILE DEVICE**

VERFAHREN UND SYSTEM ZUM SCHNELLEN AUFTAUCHEN EINES STEUERFENSTERS EINER ELEKTRONISCHEN VORRICHTUNG UND MOBILE VORRICHTUNG

PROCÉDÉ ET SYSTÈME POUR FAIRE RAPIDEMENT APPARAÎTRE UNE FENÊTRE DE COMMANDE D'UN DISPOSITIF ÉLECTRONIQUE, ET DISPOSITIF MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.01.2021 CN 202110106639**

(43) Date of publication of application:
**27.09.2023 Bulletin 2023/39**

(73) Proprietor: **Huawei Technologies Co., Ltd.**
**Shenzhen, Guangdong 518129 (CN)**

(72) Inventors:
• **XUE, Qingfeng**
  **Shenzhen, Guangdong 518129 (CN)**
• **XU, Xuejun**
  **Shenzhen, Guangdong 518129 (CN)**

(74) Representative: **Thun, Clemens**
**Mitscherlich PartmbB**
**Karlstraße 7**
**80333 München (DE)**

(56) References cited:
CN-A- 106 256 133          CN-A- 107 852 567
CN-A- 109 282 811          CN-A- 109 283 565
US-A1- 2011 254 683      US-A1- 2011 312 311
US-A1- 2017 013 112      US-B1- 10 701 661

## Description

This application claims priority to Chinese Patent Application No. 202110106639.8, filed with the China National Intellectual Property Administration on January 26, 2021 and entitled "METHOD AND SYSTEM FOR QUICKLY POPPING UP CONTROL WINDOW FOR ELECTRONIC DEVICE AND MOBILE DEVICE".

## TECHNICAL FIELD

This application relates to the communication field, and in particular, to a method and system for quickly popping up a control window for an electronic device, and a mobile device.

## BACKGROUND

An internet of things (internet of things, IoT) device is controlled by using an application (application, APP) installed on a mobile device. Control functions of different control devices (for example, a remote control of a smart television and a remote control of a smart air conditioner) of different IoT devices may be integrated into one mobile device for extensive application. However, a user still needs to open the foregoing app on the mobile device and identify a specific IoT device from a plurality of IoT devices. The mobile device enters a specific control window only after the user selects the specific IoT device, and then the user performs specific control. In this way, user operations are still cumbersome and time-consuming, especially for people who are less able to operate, such as elderly people, user operations are more time-consuming.

A circuit or module for implementing accurate locating is configured for an electronic device. Therefore, after the mobile device of the user points to the electronic device, the electronic device can be located, and a control window for the electronic device is displayed. This can reduce user operations and reduce time consumption. However, costs of electronic devices are greatly increased. In particular, configuring the foregoing circuit or module for all electronic devices in the home, in an office, or the like may lead to a significant increase in costs. An ordinary family or company is able to afford costs of upgrading one or more electronic devices, but usually is unable to afford costs of upgrading all electronic devices. Therefore, for another electronic device that is not upgraded, how to locate the electronic device after the mobile device of the user points to the electronic device that is not upgraded is a technical problem that needs to be resolved. Document US 2017/013112 A1 describes a user equipment (UE) device, which is pointed at an appliance to be controlled and which determines its position and orientation within an environment with respect to a fixed frame of reference. Document US 2011/312311 A1 describes methods and apparatuses that may be implemented in and/or with a mobile device to allow gesture based remote control of one or more controllable devices. Document US 10 701 661 B1 describes systems and methods for determining locations and configuring controllable devices. Document US 2011/254683 A1 describes controllable device selection based on controller location.

## SUMMARY

To resolve the foregoing technical problem, this application provides a method and system for quickly popping up a control window for an electronic device, and a mobile device. When at least one electronic device is configured with a circuit or module for implementing accurate locating, and another electronic device does not have the foregoing circuit or module, a mobile device of a user can point to the electronic device that is not configured with the foregoing circuit or module, the electronic device can be located, and a control window for the electronic device can be quickly displayed. This facilitates control by the user and save time.

According to a first aspect, a mobile device is provided. The mobile device communicates wirelessly with an annotation device and a to-be-annotated electronic device. The mobile device includes a processor, a memory, an ultra-bandwidth UWB label, a direction sensor, and a computer program. The computer program is stored in the memory, and when the computer program is executed by the processor, the mobile device is enabled to perform the following steps: receiving a first input after the mobile device moves to a location of the electronic device; recording a location of the mobile device in response to the first input, where the location of the mobile device is the location of the electronic device; and popping up, by the mobile device, a first control window for the electronic device after the mobile device moves to another location and points to the electronic device. According to the mobile device provided in the first aspect, a location of an electronic device on which no UWB chip is installed is annotated, so that the location of the electronic device on which no UWB chip is installed can be located. Then, when it is determined that an included angle of the mobile device (for example, a smartphone) pointing to the electronic device meets a specific condition, it may be determined that the mobile device points to the electronic device on which no UWB chip is installed, and then a control window for the electronic device on which no UWB chip is installed is popped up. In this way, a user can conveniently control the electronic device on which no UWB chip is installed.

For example, the mobile device may be a smartphone, an air mouse, a PDA, a smart remote control, a tablet computer, or the like. The annotation device may be an electronic device, for example, a smart television or a smart wall clock. The electronic device may be a device, for example, a smart air conditioner, a smart light, a smart socket, a smart speaker, or a smart printer.

According to the first aspect, the mobile device further performs the following steps: displaying the first control window on the mobile device within preset duration elapsing after the mobile device pops up the first control window for the electronic device, where the first control window is used to receive a first user input for controlling the electronic device; and skipping displaying the first control window if the first user input is not received within the preset duration. In this implementation, even if the user moves or rotates the mobile device, for example, moves the mobile device from a current location to another location, or rotates the mobile device from a current pointing direction to another pointing direction, the control window is continuously displayed on the mobile device. This can facilitate use by the user and improve user experience.

According to the first aspect or any implementation of the first aspect, the mobile device communicates wirelessly with the annotation device and the electronic device by using a routing device. The mobile device pops up a second control window for the annotation device after the mobile device points to the annotation device. In this implementation, directivity control of the annotation device may be implemented.

According to the first aspect or any implementation of the first aspect, the mobile device further performs the following steps: displaying the second control window on the mobile device within preset duration elapsing after the mobile device pops up the second control window for the annotation device, where the second control window is used to receive a second user input for controlling the annotation device; and skipping displaying the second control window if the second user input is not received within the preset duration. In this implementation, even if the user moves or rotates the mobile device, for example, moves the mobile device from a current location to another location, or rotates the mobile device from a current pointing direction to another pointing direction, the control window is continuously displayed on the mobile device. This can facilitate use by the user and improve user experience.

According to the first aspect or any implementation of the first aspect, the annotation device includes at least two UWB base stations and a display, the at least two UWB base stations include a first UWB base station, and the electronic device does not include a UWB base station. Before the mobile device moves to the location of the electronic device, the mobile device further performs the following steps: obtaining a distance between the first UWB base station and another UWB base station, a distance between the UWB label and each of the at least two UWB base stations, and a location of the UWB label, where the another UWB base station is a UWB base station other than the first UWB base station in the at least two UWB base stations; and obtaining a first included angle between a pointing direction of the mobile device and a vertical line between the mobile device and the display based on the distance between the first UWB base station and the another UWB base station, the distance between the UWB label and each of the at least two UWB base stations, and the location of the UWB label.

According to the first aspect or any implementation of the first aspect, before the mobile device moves to the location of the electronic device, the mobile device further performs the following steps: when the mobile device moves to a first location, obtaining a first initial azimuth and a first initial roll angle of the mobile device based on the direction sensor; when the mobile device moves to a second location, obtaining a first real-time azimuth and a first real-time roll angle of the mobile device based on the direction sensor; and obtaining a second azimuth in a second direction and a second roll angle in a first direction based on the first initial azimuth, the first initial roll angle, the first real-time azimuth, and the first real-time roll angle, where the first direction is vertical to the second direction.

According to the first aspect or any implementation of the first aspect, the mobile device further performs the following step: obtaining a second included angle between the pointing direction of the mobile device and the vertical line between the mobile device and the display based on the second azimuth and the second roll angle.

According to the first aspect or any implementation of the first aspect, that the mobile device pops up a first control window for the electronic device after the mobile device moves to another location and points to the electronic device includes: When the mobile device moves to the another location, and a difference between the first included angle and the second included angle falls within a preset first range, the mobile device points to the electronic device, and the mobile device pops up the first control window for the electronic device.

For example, if the difference between the second included angle $\theta$ and the first included angle $\alpha$ falls within a preset difference range, for example, the difference between the first included angle and the second included angle $\theta$ is $\theta$ degrees, it indicates that the mobile device points to the electronic device, so that the mobile device pops up the control window for the electronic device, and the mobile device can control the electronic device.

If the difference between the second included angle $\theta$ and the first included angle $\alpha$ does not fall within the preset difference range, it indicates that the mobile device does not point to the electronic device, so that the mobile device does not pop up the control window for the electronic device, and the mobile device cannot control the electronic device.

According to the first aspect or any implementation of the first aspect, the first included angle may be decomposed into a first azimuth and a first roll angle; the first azimuth represents an included angle between a straight line in the pointing direction of the mobile device and a vertical line from the mobile device to the annotation device; and the first roll angle represents an included angle the straight line in the pointing direction of the mobile device and the vertical line from the mobile device to the annotation device in the first direction.

According to the first aspect or any implementation of the first aspect, that the mobile device pops up a first control window for the electronic device after the mobile device moves to another location and points to the electronic device includes: When the mobile device moves to the another location, a difference between the first azimuth and the second azimuth falls within a preset second range, and a difference between the first roll angle and the second roll angle falls within a preset third range, the mobile device points to the electronic device, and the mobile device pops up the first control window for the electronic device.

For example, if the difference between the first azimuth and the second azimuth falls within a preset first difference range, for example, the first azimuth is equal to the second azimuth, and the difference between the first roll angle and the second roll angle falls within a preset second difference range, for example, if values of the first roll angle and the second roll angle are equal, it indicates that the mobile device points to the electronic device, so that the mobile device pops up the control window for the electronic device, and the mobile device can control the electronic device.

If the difference between the first azimuth and the second azimuth falls within the preset first difference range, for example, the first azimuth is equal to the second azimuth, and the difference between the first roll angle and the second roll angle does not fall within the preset second difference range, it indicates that the mobile device does not point to the electronic device, so that the mobile device does not pop up the control window for the electronic device, and the mobile device cannot control the electronic device.

If the difference between the first azimuth and the second azimuth does not fall within the preset first difference range, for example, the first azimuth is equal to the second azimuth, and the difference between the first roll angle and the second roll angle falls within the preset second difference range, it indicates that the mobile device does not point to the electronic device, so that the mobile device does not pop up the control window for the electronic device, and the mobile device cannot control the electronic device.

If the difference between the first azimuth and the second azimuth does not fall within the preset first difference range, for example, the first azimuth is equal to the second azimuth, and the difference between the first roll angle and the second roll angle does not fall within the preset second difference range, it indicates that the mobile device does not point to the electronic device, so that the mobile device does not pop up the control window for the electronic device, and the mobile device cannot control the electronic device.

According to the first aspect or any implementation of the first aspect, the obtaining a distance between the first UWB base station and another UWB base station, a distance between the UWB label and each of the at least two UWB base stations, and a location of the UWB label includes: The mobile device sends a ranging message by using the UWB label; receives a ranging response message from each of the at least two UWB base stations; obtains the distance between the UWB label and each of the at least two UWB base stations in response to the ranging response message from each of the at least two UWB base stations; receives a message from the annotation device; obtains the distance between the first UWB base station and the another UWB base station from the message; selects a location of the first UWB base station in the at least two UWB base stations as a coordinate origin of a three-dimensional coordinate system; and obtains location coordinates of another UWB base station in the at least two UWB base stations and location coordinates of the UWB label based on the coordinate origin.

According to the first aspect or any implementation of the first aspect, the first input is used to select an identifier of an electronic device, and the identifier of the electronic device corresponds to a parameter of the electronic device.

According to the first aspect or any implementation of the first aspect, the parameter includes one or more of a media access control MAC address, an internet protocol IP address, a sequence number SN, or a device identifier of the electronic device.

According to the first aspect or any implementation of the first aspect, the direction sensor is an inertial measurement unit IMU; and the IMU is a nine-axis IMU, and the nine-axis IMU includes an accelerometer sensor, a gyroscope sensor, and a magnetic sensor; or the IMU is a six-axis IMU, and the six-axis IMU includes an accelerometer sensor and a gyroscope sensor.

According to the first aspect or any implementation of the first aspect, the first direction is a horizontal direction, and the second direction is a vertical direction; or the first direction is a vertical direction, and the second direction is a horizontal direction.

According to a second aspect, an annotation device is provided. The annotation device wirelessly communicates with the mobile device according to the first aspect or any implementation of the first aspect and a to-be-annotated electronic device. The annotation device includes: a processor; a memory; at least two UWB base stations, where the at least two UWB base stations include a first UWB base station; and a computer program. The computer program is stored in the memory, and when the computer program is executed by the processor, the annotation device performs the following steps: receiving a ranging message by using each of the at least two UWB base stations; in response to the ranging message, sending a ranging response message to the mobile device by using each of the at least two UWB base stations;

and sending a message to the mobile device by using any one of the at least two UWB base stations, where the message includes a distance between the first UWB base station and another UWB base station. According to the annotation device provided in the second aspect, distances between the UWB label and the at least two UWB base stations may be determined by using ranging information sent to the UWB label on the mobile device by the at least two UWB base stations on the annotation device. Further, a first included angle is determined. The first included angle is an included angle between a connection line between the mobile device and the electronic device and a vertical line from the mobile device to the annotation device, so that the mobile device can determine whether to point to the electronic device, where no UWB chip is installed on the electronic device.

According to the second aspect, the annotation device further includes a display. The display includes a first edge, a second edge, a third edge, and a fourth edge. The first edge is parallel to the second edge, and the third edge is parallel to the fourth edge. The first edge and the second edge are parallel to a first direction, the third edge and the fourth edge are parallel to a second direction, and the first direction is vertical to the second direction. The at least two UWB base stations are distributed in different locations on a front side or a back side of the display. All or a part of vertical projections of the at least two UWB base stations on the display are located on the display.

According to the second aspect, the at least two UWB base stations include the first UWB base station, a second UWB base station, and a third UWB base station. All or a part of a vertical projection of the first UWB base station on the display is located at an intersection point of the third edge and the second edge; all or a part of a vertical projection of the second UWB base station on the display is located at an intersection point of the third edge and the first edge; and all or a part of a vertical projection of the third UWB base station on the display is located at an intersection point of the second edge and the fourth edge.

For example, the annotation device may be a device whose relative location does not change (or is fixed), for example, a smart television, a smart screen, a wall clock, or a smart air conditioner.

According to the second aspect or any implementation of the second aspect, the first direction is a horizontal direction, and the second direction is a vertical direction; or the first direction is a vertical direction, and the second direction is a horizontal direction.

According to a third aspect, a method for quickly popping up a control window for an electronic device is provided. The method is applied to a mobile device. The mobile device communicates wirelessly with an annotation device and a to-be-annotated electronic device. The mobile device includes a processor, a memory, an ultra-bandwidth UWB label, and a direction sensor. The method includes: receiving a first input after the mobile device moves to a location of the electronic device; recording a location of the mobile device in response to the first input, where the location of the mobile device is the location of the electronic device; and popping up, by the mobile device, a first control window for the electronic device after the mobile device moves to another location and points to the electronic device. According to the method provided in the third aspect, a location of an electronic device on which no UWB chip is installed is annotated, so that the location of the electronic device on which no UWB chip is installed can be located. Then, when it is determined that an included angle of the mobile device (for example, a smartphone) pointing to the electronic device meets a specific condition, it may be determined that the mobile device points to the electronic device on which no UWB chip is installed, and then a control window for the electronic device on which no UWB chip is installed is popped up. In this way, a user can conveniently control the electronic device on which no UWB chip is installed.

For example, the mobile device may be a smartphone, an air mouse, a PDA, a smart remote control, a tablet computer, or the like. The annotation device may be an electronic device, for example, a smart television or a smart wall clock. The electronic device may be a device, for example, a smart air conditioner, a smart light, a smart socket, a smart speaker, or a smart printer.

According to the third aspect, the method further includes: displaying the first control window on the mobile device within preset duration elapsing after the mobile device pops up the first control window for the electronic device, where the first control window is used to receive a first user input for controlling the electronic device; and skipping displaying, by the mobile device, the first control window if the first user input is not received within the preset duration. In this implementation, even if the user moves or rotates the mobile device, for example, moves the mobile device from a current location to another location, or rotates the mobile device from a current pointing direction to another pointing direction, the control window is continuously displayed on the mobile device. This can facilitate use by the user and improve user experience.

According to the third aspect or any implementation of the third aspect, the mobile device communicates wirelessly with the annotation device and the electronic device by using a routing device. The method further includes: The mobile device pops up a second control window for the annotation device after the mobile device points to the annotation device.

According to the third aspect or any implementation of the third aspect, the method further includes: displaying the second control window on the mobile device within preset duration elapsing after the mobile device pops up the second control window for the annotation device, where the second control window is used to receive a second user input for controlling the annotation device; and skipping displaying, by the mobile device, the second control window if the second user input is not received within the preset duration. In this implementation, even if the user moves or rotates the mobile device, for example, moves the mobile device from a current location to another location, or rotates the mobile device from a current pointing direction to another pointing direction, the control window is continuously displayed on the mobile device. This can facilitate use by the user and improve user experience.

According to the third aspect or any implementation of the third aspect, the annotation device includes at least two UWB base stations and a display, the at least two UWB base stations include a first UWB base station, and the electronic device does not include a UWB base station. Before the mobile device moves to the location of the electronic device, the method further includes: obtaining a distance between the first UWB base station and another UWB base station, a distance between the UWB label and each of the at least two UWB base stations, and a location of the UWB label, where the another UWB base station is a UWB base station other than the first UWB base station in the at least two UWB base stations; and obtaining a first included angle between a pointing direction of the mobile device and a vertical line between the mobile device and the display based on the distance between the first UWB base station and the another UWB base station, the distance between the UWB label and each of the at least two UWB base stations, and the location of the UWB label.

According to the third aspect or any implementation of the third aspect, before the mobile device moves to the location of the electronic device, the method further includes: when the mobile device moves to a first location, obtaining a first initial azimuth and a first initial roll angle of the mobile device based on the direction sensor; when the mobile device moves to a second location, obtaining a first real-time azimuth and a first real-time roll angle of the mobile device based on the direction sensor; and obtaining a second azimuth in a second direction and a second roll angle in a first direction based on the first initial azimuth, the first initial roll angle, the first real-time azimuth, and the first real-time roll angle, where the first direction is vertical to the second direction.

According to the third aspect or any implementation of the third aspect, the method further includes: obtaining a second included angle between the pointing direction of the mobile device and the vertical line between the mobile device and the display based on the second azimuth and the second roll angle.

According to the third aspect or any implementation of the third aspect, that the mobile device pops up a first control window for the electronic device after the mobile device moves to another location and points to the electronic device includes: When the mobile device moves to the another location, and a difference between the first included angle and the second included angle falls within a preset first range, the mobile device points to the electronic device, and the mobile device pops up the first control window for the electronic device.

For example, if the difference between the second included angle $\theta$ and the first included angle $\alpha$ falls within a preset difference range, for example, the difference between the first included angle and the second included angle $\theta$ is 0 degrees, it indicates that the mobile device points to the electronic device, so that the mobile device pops up the control window for the electronic device, and the mobile device can control the electronic device.

If the difference between the second included angle $\theta$ and the first included angle $\alpha$ does not fall within the preset difference range, it indicates that the mobile device does not point to the electronic device, so that the mobile device does not pop up the control window for the electronic device, and the mobile device cannot control the electronic device.

According to the third aspect or any implementation of the third aspect, the first included angle may be decomposed into a first azimuth and a first roll angle; the first azimuth represents an included angle between a straight line in the pointing direction of the mobile device and a vertical line from the mobile device to the annotation device in the second direction; and the first roll angle represents an included angle between the straight line in the pointing direction of the mobile device and the vertical line from the mobile device to the annotation device in the first direction.

According to the third aspect or any implementation of the third aspect, that the mobile device pops up a first control window for the electronic device after the mobile device moves to another location and points to the electronic device includes: When the mobile device moves to the another location, a difference between the first azimuth and the second azimuth falls within a preset second range, and a difference between the first roll angle and the second roll angle falls within a preset third range, the mobile device points to the electronic device, and the mobile device pops up the first control window for the electronic device.

For example, if the difference between the first azimuth and the second azimuth falls within a preset first difference range, for example, the first azimuth is equal to the second azimuth, and the difference between the first roll angle and the second roll angle falls within a preset second difference range, for example, if values of the first roll angle and the second roll angle are equal, it indicates that the mobile device points to the electronic device, so that the mobile device pops up the control window for the electronic device, and the mobile device can control the electronic device.

If the difference between the first azimuth and the second azimuth falls within the preset first difference range, for example, the first azimuth is equal to the second azimuth, and the difference between the first roll angle and the second roll angle does not fall within the preset second difference range, it indicates that the mobile device does not point to the electronic device, so that the mobile device does not pop up the control window for the electronic device, and the mobile device cannot control the electronic device.

If the difference between the first azimuth and the second azimuth does not fall within the preset first difference range, for example, the first azimuth is equal to the second azimuth, and the difference between the first roll angle and the second roll angle falls within the preset second difference range, it indicates that the mobile device does not point to the electronic device, so that the mobile device does not pop up the control window for the electronic device, and the mobile device cannot control the electronic device.

If the difference between the first azimuth and the second azimuth does not fall within the preset first difference range, for example, the first azimuth is equal to the second azimuth, and the difference between the first roll angle and the second roll angle does not fall within the preset second difference range, it indicates that the mobile device does not point to the electronic device, so that the mobile device does not pop up the control window for the electronic device, and the mobile device cannot control the electronic device.

According to the third aspect or any implementation of the third aspect, the obtaining a distance between the first UWB base station and another UWB base station, a distance between the UWB label and each of the at least two UWB base stations, and a location of the UWB label includes: The mobile device sends a ranging message by using the UWB label; receives a ranging response message from each of the at least two UWB base stations; obtains the distance between the UWB label and each of the at least two UWB base stations in response to the ranging response message from each of the at least two UWB base stations; receives a message from the annotation device; obtains the distance between the first UWB base station and the another UWB base station from the message; selects a location of the first UWB base station in the at least two UWB base stations as a coordinate origin of a three-dimensional coordinate system; and obtains location coordinates of another UWB base station in the at least two UWB base stations and location coordinates of the UWB label based on the coordinate origin.

According to the third aspect or any implementation of the third aspect, the first input is used to select an identifier of an electronic device, and the identifier of the electronic device corresponds to a parameter of the electronic device.

According to the third aspect or any implementation of the third aspect, the parameter includes one or more of a media access control MAC address, an internet protocol IP address, a sequence number SN, or a device identifier of the electronic device.

According to the third aspect or any implementation of the third aspect, the direction sensor is an inertial measurement unit IMU; and the IMU is a nine-axis IMU, and the nine-axis IMU includes an accelerometer sensor, a gyroscope sensor, and a magnetic sensor; or the IMU is a six-axis IMU, and the six-axis IMU includes an accelerometer sensor and a gyroscope sensor.

According to the third aspect or any implementation of the third aspect, the first direction is a horizontal direction, and the second direction is a vertical direction; or the first direction is a vertical direction, and the second direction is a horizontal direction.

According to the third aspect or any implementation of the third aspect, the mobile device includes a smartphone and an air mouse.

According to a fourth aspect, a method for quickly popping up a control window for an electronic device is provided. The method is applied to an annotation device. The annotation device wirelessly communicates with a mobile device and a to-be-annotated electronic device. The annotation device includes a processor, a memory, and at least two UWB base stations, where the at least two UWB base stations include a first UWB base station. The method includes: receiving a ranging message by using each of the at least two UWB base stations; in response to the ranging message, sending a ranging response message to the mobile device by using each of the at least two UWB base stations; and sending a message to the mobile device by using any one of the at least two UWB base stations, where the message includes a distance between the first UWB base station and another UWB base station. According to the method provided in the fourth aspect, distances between the UWB label and the at least two UWB base stations may be determined by using ranging information sent to the UWB label on the mobile device by the at least two UWB base stations on the annotation device. Further, a first included angle is determined. The first included angle is an included angle between a connection line between the mobile device and the electronic device and a vertical line from the mobile device to the annotation device, so that the mobile device can determine whether to point to the electronic device, where no UWB chip is installed on the electronic device.

According to the fourth aspect, the annotation device further includes a display, and the display includes a first edge, a second edge, a third edge, and a fourth edge. The first edge is parallel to the second edge, and the third edge is parallel to the fourth edge. The first edge and the second edge are parallel to a first direction, the third edge and the fourth edge are parallel to a second direction, and the first direction is vertical to the second direction. The at least two UWB base stations are distributed in different locations on a front side or a back side of the display. All or a part of vertical projections of the at least two UWB base stations on the display are located on the display.

According to the fourth aspect or any implementation of the fourth aspect, the first direction is a horizontal direction, and the second direction is a vertical direction; or the first direction is a vertical direction, and the second direction is a horizontal direction.

According to the fourth aspect or any implementation of the fourth aspect, the at least two UWB base stations include the first UWB base station, a second UWB base station, and a third UWB base station. All or a part of a vertical projection of the first UWB base station on the display is located at an intersection point of the third edge and the second edge; all or a part of a vertical projection of the second UWB base station on the display is located at an intersection point of the third edge and the first edge; and all or a part of a vertical projection of the third UWB base station on the display is located at an intersection point of the second edge and the fourth edge.

For example, the annotation device may be a device whose relative location does not change (or is fixed), for example, a smart television, a smart screen, a wall clock, or a smart air conditioner.

According to a fifth aspect, a method for quickly popping up a control window for an electronic device is provided. The method is applied to a system. The system includes a mobile device, an annotation device, and a to-be-annotated electronic device. The mobile device communicates wirelessly with the annotation device and the electronic device. The mobile device includes an ultra-bandwidth UWB label and a direction sensor. The annotation device includes at least two UWB base stations, and the at least two UWB base stations include a first UWB base station. The electronic device does not include a UWB base station. The method includes: The mobile device receives a first input after the mobile device moves to a location of the electronic device; the mobile device records a location of the mobile device in response to the first input, where the location of the mobile device is the location of the electronic device; and the mobile device pops up a first control window for the electronic device after the mobile device moves to another location and points to the electronic device. According to the method provided in the fifth aspect, a location of an electronic device on which no UWB chip is installed is annotated, so that the location of the electronic device on which no UWB chip is installed can be located. Then, when it is determined that an included angle of the mobile device (for example, a smartphone) pointing to the electronic device meets a specific condition, it may be determined that the mobile device points to the electronic device on which no UWB chip is installed, and then a control window for the electronic device on which no UWB chip is installed is popped up. In this way, a user can conveniently control the electronic device on which no UWB chip is installed.

For example, the mobile device may be a smartphone, an air mouse, a PDA, a smart remote control, a tablet computer, or the like. The annotation device may be an electronic device, for example, a smart television or a smart wall clock. The electronic device may be a device, for example, a smart air conditioner, a smart light, a smart socket, a smart speaker, or a smart printer.

According to the fifth aspect, the method further includes: displaying the first control window on the mobile device within preset duration elapsing after the mobile device pops up the first control window for the electronic device, where the first control window is used to receive a first user input for controlling the electronic device; and skipping displaying, by the mobile device, the first control window if the first user input is not received within the preset duration. In this implementation, even if the user moves or rotates the mobile device, for example, moves the mobile device from a current location to another location, or rotates the mobile device from a current pointing direction to another pointing direction, the control window is continuously displayed on the mobile device. This can facilitate use by the user and improve user experience.

According to the fifth aspect or any implementation of the fifth aspect, the mobile device communicates wirelessly with the annotation device and the electronic device by using a routing device. The method further includes: The mobile device pops up a second control window for the annotation device after the mobile device points to the annotation device.

According to the fifth aspect or any implementation of the fifth aspect, the method further includes: displaying the second control window on the mobile device within preset duration elapsing after the mobile device pops up the second control window for the annotation device, where the second control window is used to receive a second user input for controlling the annotation device; and skipping displaying, by the mobile device, the second control window if the second user input is not received within the preset duration.

According to the fifth aspect or any implementation of the fifth aspect, before the mobile device moves to the location of the electronic device, the method further includes: The mobile device obtains a distance between the first UWB base station and another UWB base station, a distance between the UWB label and each of the at least two UWB base stations, and a location of the UWB label, where the another UWB base station is a UWB base station other than the first UWB base station in the at least two UWB base stations; and the mobile device obtains a first included angle between a pointing direction of the mobile device and a vertical line between the mobile device and the display based on the distance between the first UWB base station and the another UWB base station, the distance between the UWB label and each of the at least two UWB base stations, and the location of the UWB label.

According to the fifth aspect or any implementation of the fifth aspect, before the mobile device moves to the location of the electronic device, the method further includes: When the mobile device moves to a first location, the mobile device obtains a first initial azimuth and a first initial roll angle of the mobile device based on the direction sensor; when the mobile device moves to a second location, the mobile device obtains a first real-time azimuth and a first real-time roll angle of the mobile device based on the direction sensor; and the mobile device obtains a second azimuth in a second direction and a second roll angle in a first direction based on the first initial azimuth, the first initial roll angle, the first real-time azimuth, and the first real-time roll angle, where the first direction is vertical to the second direction.

According to the fifth aspect or any implementation of the fifth aspect, the method further includes: The mobile device obtains a second included angle between the pointing direction of the mobile device and the vertical line between the mobile device and the display based on the second azimuth and the second roll angle.

According to the fifth aspect or any implementation of the fifth aspect, that the mobile device pops up a first control window for the electronic device after the mobile device moves to another location and points to the electronic device includes: When the mobile device moves to the another location, and a difference between the first included angle and the second included angle falls within a preset first range, the mobile device points to the electronic device, and the mobile device pops up the first control window for the electronic device.

For example, if the difference between the second included angle $\theta$ and the first included angle $\alpha$ falls within a preset difference range, for example, the difference between the first included angle and the second included angle $\theta$ is 0 degrees, it indicates that the mobile device points to the electronic device, so that the mobile device pops up the control window for the electronic device, and the mobile device can control the electronic device.

If the difference between the second included angle $\theta$ and the first included angle $\alpha$ does not fall within the preset difference range, it indicates that the mobile device does not point to the electronic device, so that the mobile device does not pop up the control window for the electronic device, and the mobile device cannot control the electronic device.

According to the fifth aspect or any implementation of the fifth aspect, the first included angle may be decomposed into a first azimuth and a first roll angle; the first azimuth represents an included angle between a straight line in the pointing direction of the mobile device and a vertical line from the mobile device to the annotation device in the second direction; and the first roll angle represents an included angle between the straight line in the pointing direction of the mobile device and the vertical line from the mobile device to the annotation device in the first direction.

According to the fifth aspect or any implementation of the fifth aspect, that the mobile device pops up a first control window for the electronic device after the mobile device moves to another location and points to the electronic device includes: When the mobile device moves to the another location, a difference between the first azimuth and the second azimuth falls within a preset second range, and a difference between the first roll angle and the second roll angle falls within a preset third range, the mobile device points to the electronic device, and the mobile device pops up the first control window for the electronic device.

For example, if the difference between the first azimuth and the second azimuth falls within a preset first difference range, for example, the first azimuth is equal to the second azimuth, and the difference between the first roll angle and the second roll angle falls within a preset second difference range, for example, if values of the first roll angle and the second roll angle are equal, it indicates that the mobile device points to the electronic device, so that the mobile device pops up the control window for the electronic device, and the mobile device can control the electronic device.

If the difference between the first azimuth and the second azimuth falls within the preset first difference range, for example, the first azimuth is equal to the second azimuth, and the difference between the first roll angle and the second roll angle does not fall within the preset second difference range, it indicates that the mobile device does not point to the electronic device, so that the mobile device does not pop up the control window for the electronic device, and the mobile device cannot control the electronic device.

If the difference between the first azimuth and the second azimuth does not fall within the preset first difference range, for example, the first azimuth is equal to the second azimuth, and the difference between the first roll angle and the second roll angle falls within the preset second difference range, it indicates that the mobile device does not point to the electronic device, so that the mobile device does not pop up the control window for the electronic device, and the mobile device cannot control the electronic device.

If the difference between the first azimuth and the second azimuth does not fall within the preset first difference range, for example, the first azimuth is equal to the second azimuth, and the difference between the first roll angle and the second roll angle does not fall within the preset second difference range, it indicates that the mobile device does not point to the electronic device, so that the mobile device does not pop up the control window for the electronic device, and the mobile device cannot control the electronic device.

According to the fifth aspect or any implementation of the fifth aspect, that the mobile device obtains a distance between the first UWB base station and another UWB base station, a distance between the UWB label and each of the at least two UWB base stations, and a location of the UWB label includes: The mobile device sends a ranging message by using the UWB label; the annotation device receives the ranging message by using each of the at least two UWB base stations; in response to the ranging message, the annotation device sends a ranging response message to the mobile device by using each of the at least two UWB base stations; the mobile device receives the ranging response message from each of the at least two UWB base stations; the mobile device obtains the distance between the UWB label and each of the at least two UWB base stations in response to the ranging response message from each of the at least two UWB base stations; and the annotation device sends a message to the mobile device by using any one of the at least two UWB base stations, where the message includes the distance between the first UWB base station and another UWB base station. The mobile device receives a message from the annotation device. The mobile device obtains a distance between the first UWB base station and another UWB base station from the message. The mobile device selects a location of the first UWB base station in the at least two UWB base stations as a coordinate origin of a three-dimensional coordinate system. The mobile device obtains location coordinates of another UWB base station in the at least two UWB base stations and location coordinates of the UWB label based on the coordinate origin.

According to the fifth aspect or any implementation of the fifth aspect, the first input is used to select an identifier of an electronic device, and the identifier of the electronic device corresponds to a parameter of the electronic device.

According to the fifth aspect or any implementation of the fifth aspect, the parameter includes one or more of a media access control MAC address, an internet protocol IP address, a sequence number SN, or a device identifier of the electronic device.

According to the fifth aspect or any implementation of the fifth aspect, the direction sensor is an inertial measurement unit IMU; and the IMU is a nine-axis IMU, and the nine-axis IMU includes an accelerometer sensor, a gyroscope sensor, and a magnetic sensor; or the IMU is a six-axis IMU, and the six-axis IMU includes an accelerometer sensor and a gyroscope sensor.

According to the fifth aspect or any implementation of the fifth aspect, the first direction is a horizontal direction, and the second direction is a vertical direction; or the first direction is a vertical direction, and the second direction is a horizontal direction.

According to the fifth aspect or any implementation of the fifth aspect, the annotation device further includes a display. The display includes a first edge, a second edge, a third edge, and a fourth edge. The first edge is parallel to the second edge, and the third edge is parallel to the fourth edge. The first edge and the second edge are parallel to a first direction, the third edge and the fourth edge are parallel to a second direction, and the first direction is vertical to the second direction. The at least two UWB base stations are distributed in different locations on a front side or a back side of the display. All or a part of vertical projections of the at least two UWB base stations on the display are located on the display.

According to the fifth aspect or any implementation of the fifth aspect, the at least two UWB base stations include the first UWB base station, a second UWB base station, and a third UWB base station. All or a part of a vertical projection of the first UWB base station on the display is located at an intersection point of the third edge and the second edge; all or a part of a vertical projection of the second UWB base station on the display is located at an intersection point of the third edge and the first edge; and all or a part of a vertical projection of the third UWB base station on the display is located at an intersection point of the second edge and the fourth edge.

According to a sixth aspect, a system for quickly popping up a control window for an electronic device is provided. The system includes a mobile device, an annotation device, and a to-be-annotated electronic device. The mobile device communicates wirelessly with the annotation device and the electronic device, the mobile device includes an ultra-wideband UWB label and a direction sensor, the annotation device includes at least two UWB base stations, the at least two UWB base stations include a first UWB base station, and the electronic device does not include a UWB base station. The mobile device is configured to perform the steps performed by the mobile device in the fifth aspect or any implementation of the fifth aspect, and the annotation device is configured to perform the steps performed by the annotation device in the fifth aspect or any implementation of the fifth aspect.

Other implementations of the sixth aspect correspond to other implementations of the fifth aspect. Details are not described herein again.

For technical effects corresponding to any one of the sixth aspect or the implementations of the sixth aspect, refer to technical effects corresponding to any one of the fifth aspect or the implementations of the fifth aspect. Details are not described herein again.

According to a seventh aspect, a computer-readable storage medium is provided. The computer-readable storage medium stores a computer program (which may also be referred to as an instruction or code). When the computer program is executed by a mobile device, the mobile device is enabled to perform the method in any one of the third aspect or the implementations of the third aspect.

For technical effects corresponding to any one of the seventh aspect or the implementations of the seventh aspect, refer to technical effects corresponding to any one of the third aspect or the implementations of the third aspect. Details are not described herein again.

According to an eighth aspect, a computer-readable storage medium is provided. The computer-readable storage medium stores a computer program (which may also be referred to as an instruction or code). When the computer program is executed by an annotation device, the annotation device is enabled to perform the method in any one of the fourth aspect or the implementations of the fourth aspect.

For technical effects corresponding to any one of the eighth aspect or the implementations of the eighth aspect, refer to technical effects corresponding to any one of the fourth aspect or the implementations of the fourth aspect. Details are not described herein again.

According to a ninth aspect, a chip is provided. The chip includes a processor and a memory. The processor is configured to read and execute a computer program stored in the memory, to perform the method in any one of the third aspect and the implementations of the third aspect.

For technical effects corresponding to any one of the ninth aspect or the implementations of the ninth aspect, refer to technical effects corresponding to any one of the third aspect or the implementations of the third aspect. Details are not described herein again.

According to a tenth aspect, a chip is provided. The chip includes a processor and a memory. The processor is configured to read and execute a computer program stored in the memory, to perform the method in any one of the fourth aspect or the implementations of the fourth aspect.

For technical effects corresponding to any one of the tenth aspect or the implementations of the tenth aspect, refer to technical effects corresponding to any one of the fourth aspect or the implementations of the fourth aspect. Details are not described herein again.

According to an eleventh aspect, a computer program product is provided. The computer program product includes a computer program (which may also be referred to as an instruction or code). When the computer program is executed by a mobile device, the mobile device is enabled to perform the method in any one of the third aspect or the implementations of the third aspect.

For technical effects corresponding to any one of the eleventh aspect or the implementations of the eleventh aspect, refer to technical effects corresponding to any one of the third aspect or the implementations of the third aspect. Details are not described herein again.

According to a twelfth aspect, a computer program product is provided. The computer program product includes a computer program (which may also be referred to as an instruction or code). When the computer program is executed by an annotation device, the annotation device is enabled to perform the method in any one of the fourth aspect or the implementations of the fourth aspect.

For technical effects corresponding to any one of the twelfth aspect or the implementations of the twelfth aspect, refer to technical effects corresponding to any one of the fourth aspect or the implementations of the fourth aspect. Details are not described herein again.

**BRIEF** DESCRIPTION OF DRAWINGS

FIG. 1 is a schematic diagram of a scenario of a method for quickly popping up a control window for an electronic device according to an embodiment of this application;

FIG. 2 is a schematic diagram of a hardware structure of a mobile device according to an embodiment of this application;

FIG. 3 is a schematic diagram of a hardware structure of an annotation device according to an embodiment of this application;

FIG. 4 is a partial flowchart of a method for quickly popping up a control window for an electronic device according to an embodiment of this application;

FIG. 5A is a flowchart that is in a method for quickly popping up a control window for an electronic device and that is executed before the partial flowchart shown in FIG. 4 according to an embodiment of this application;

FIG. 5B is a partial flowchart of a method for quickly popping up a control window for an electronic device according to an embodiment of this application;

FIG. 6 is a flowchart of an internal implementation related to the procedure steps shown in FIG. 4 in a method for quickly popping up a control window for an electronic device according to an embodiment of this application;

FIG. 7 is a schematic diagram of a principle of reference coordinate axes;

FIG. 8 is a schematic diagram of a principle of an azimuth;

FIG. 9 is a schematic diagram of a principle of a tilt angle;

FIG. 10 is a schematic diagram of a principle of a roll angle;

FIG. 11 is a schematic diagram of an x axis, a y axis, and a z axis on a mobile device according to an embodiment of this application;

FIG. 12 is a schematic diagram in which a mobile device faces a display of an annotation device according to an embodiment of this application;

FIG. 13 is a schematic diagram of a roll angle $\sigma$ between a mobile device and a display of an annotation device according to an embodiment of this application;

FIG. 14 is a schematic diagram of an azimuth $\psi$ between a mobile device and a display of an annotation device according to an embodiment of this application;

FIG. 15 is a schematic diagram of a second angle $\theta$ between a straight line in a pointing direction of a mobile device and a vertical line between the mobile device and a display of an annotation device according to an embodiment of this application;

FIG. 16 is a schematic diagram of a first included angle $\alpha$ according to an embodiment of this application;

FIG. 17 is a schematic diagram of relative locations of a mobile device, an annotation device, and an electronic device according to an embodiment of this application;

FIG. 18 is a schematic diagram of a principle of determining a distance between two devices by using a UWB technology and a two-way time-of-flight method;

FIG. 19 is a schematic diagram of determining location coordinates of an electronic device and a first included angle $\alpha$

after a mobile device moves to a location of the electronic device according to this application;

FIG. 20a and FIG. 20b are schematic diagrams of interfaces displayed on a mobile device when an electronic device is annotated according to an embodiment of this application;

FIG. 21 is a schematic diagram of calculation of a first included angle α according to an embodiment of this application;

FIG. 22 is a schematic diagram in which a second included angle θ is the same as a first included angle α and a mobile device points to an electronic device according to an embodiment of this application;

FIG. 23 is a schematic diagram in which a difference between a second included angle θ and a first included angle α does not fall within a preset difference range and a mobile device does not point to an electronic device according to an embodiment of this application;

FIG. 24 is a schematic diagram in which a mobile device points to an electronic device in both a vertical direction and a horizontal direction according to an embodiment of this application;

FIG. 25 is a schematic diagram in which a mobile device points to an electronic device in a vertical direction and does not point to the electronic device in a horizontal direction according to an embodiment of this application;

FIG. 26 is a schematic diagram in which a mobile device does not point to an electronic device in a vertical direction and points to an electronic device in a horizontal direction according to an embodiment of this application;

FIG. 27 is a schematic diagram in which a mobile device does not point to an electronic device in a vertical direction and a horizontal direction according to an embodiment of this application; and

FIG. 28 is a schematic diagram of an interface of a mobile device displayed when the mobile device points to an electronic device according to an embodiment of this application.

## DESCRIPTION OF EMBODIMENTS

The following clearly describes the technical solutions in embodiments of this application with reference to the accompanying drawings in embodiments of this application.

Terms used in the following embodiments are merely intended to describe specific embodiments, but are not intended to limit this application. The terms "a", "the", "the foregoing", "this", and "the one" of singular forms used in this specification and the appended claims of this application are also intended to include expressions such as "one or more", unless otherwise specified in the context clearly. It should be further understood that in embodiments of this application, "one or more" means one or two or more (including two), and the term "and/or" is an association relationship for describing associated objects, and represents that three relationships may exist. For example, A and/or B may represent the following cases: Only A exists, both A and B exist, and only B exists, where A and B may be singular or plural. The character "/" generally represents an "or" relationship between the associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean reference to a same embodiment, instead, they mean "one or more but not all of embodiments", unless otherwise specifically emphasized. The terms "include", "have", and their variants all mean "include but are not limited to", unless otherwise specifically emphasized in another manner.

"A plurality of" in embodiments of this application indicates two or more. It should be noted that in the descriptions of embodiments of this application, terms such as "first" and "second" are merely intended for distinction in description, but should not be construed as indicating or implying relative importance or indicating or implying a sequence.

In a home scenario, an office scenario, or another scenario, there are a large quantity of IoT devices. On some of these IoT devices, ultra-wideband (ultra-wideband, UWB) chips (where the UWB chip may be a UWB base station or a UWB label) are installed, and on some of these IoT devices, no UWB chip is installed. A user can use a mobile device (for example, a smartphone, an air mouse, or a smart remote control) on which a UWB chip and a direction sensor are installed. This implements directivity control on an IoT device on which a UWB chip is installed. For example, when the user uses a mobile device to point to an IoT device (for example, a large-screen device) on which a UWB chip is installed, after the mobile device perceives that the mobile device has pointed to the IoT device, the mobile device displays, to the user, a control interface for controlling the IoT device, and the user may implement a function of controlling the IoT device on which the UWB chip is installed by using the control interface displayed on the mobile device for controlling the IoT device. However, in this directivity control manner, a UWB chip also needs to be deployed on a pointed target device. No UWB chip is installed on many old electronic devices such as an air conditioner, a washing machine, a socket, a smart light, and a printer in a home or an office. In this way, when the user points, by using the mobile device, to an electronic device on which no UWB chip is deployed, the mobile device cannot perceive whether the electronic device is pointed. Therefore, the mobile device cannot display, to the user, a control interface for controlling the electronic device. As a result, the user cannot control, by using the mobile device, the electronic device on which no UWB chip is installed. In this case, user experience is poor.

In view of this, this application provides a method and system for quickly popping up a control window for an electronic device. A location of an electronic device on which no UWB chip is installed is annotated, so that the location of the electronic device on which no UWB chip is installed can be located. Then, when it is determined that an included angle of a mobile device (for example, a smartphone) pointing to the electronic device meets a specific condition, it may be determined that the mobile device points to the electronic device on which no UWB chip is installed, and then a control window for the electronic device on which no UWB chip is installed is popped up. In this way, a user can conveniently control the electronic device on which no UWB chip is installed.

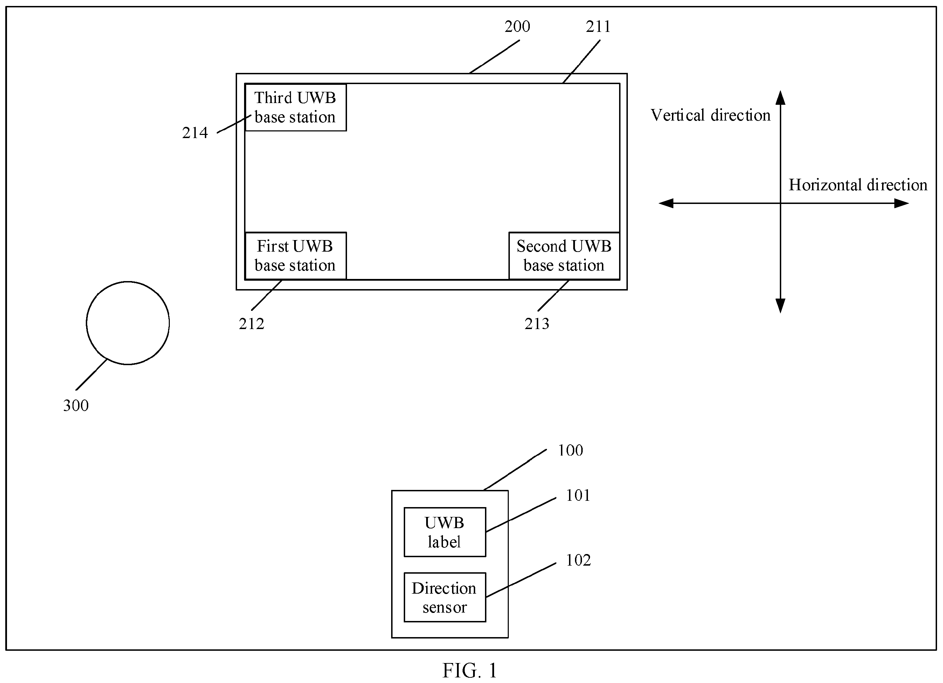

FIG. 1 is a schematic diagram of a scenario of a method for quickly popping up a control window for an electronic device according to an embodiment of this application. As shown in FIG. 1, a mobile device 100 is a portable electronic device on which a UWB label 101 and a direction sensor 102 are installed. An annotation device 200 is an IoT device on which UWB base stations are installed. An electronic device 300 is an IoT device on which no UWB circuit is installed. The UWB base station and the UWB label may be understood as two types of devices or modules required by a UWB ranging technology. A distance between the UWB base station and the UWB label may be determined by using a ranging message sent between the UWB base station and the UWB label, so that a distance between the mobile device 100 and the annotation device 200 may be determined.

For example, the mobile device 100 may be a portable electronic device, for example, a smartphone, an air mouse, a personal digital assistant (personal digital assistant, PDA), a smart remote control, or a tablet computer. The annotation device 200 may be an electronic device, for example, a smart television or a smart wall clock. The electronic device 300 may be a device, for example, a smart air conditioner, a smart light, a smart socket, a smart speaker, or a smart printer.

It should be understood that, in this embodiment of this application, a quantity of UWB base stations on the annotation device 200 is greater than or equal to 2. In the scenario shown in FIG. 1, the annotation device 200 further includes a display 211. A first UWB base station 212, a second UWB base station 213, and a third UWB base station 214 on the annotation device 200 may be distributed in different locations on a front side of or a back side of the display 211. All or a part of vertical projections of the first UWB base station 212, the second UWB base station 213, and the third UWB base station 214 on the display 211 is located on the display 211. The following uses an example in which the display of the annotation device 200 shown in FIG. 1 is a rectangle for description.

The rectangular display 211 includes a first edge, a second edge, a third edge, and a fourth edge. The first edge is parallel to the second edge, the third edge is parallel to the fourth edge, the first edge and the second edge are parallel to a first direction, the third edge and the fourth edge are parallel to a second direction, and the first direction is vertical to the second direction. In the following descriptions, an example in which the first direction is a horizontal direction, the second direction is a vertical direction, the first edge is an upper edge (or an upper boundary) of the display, the second edge is a lower edge (or a lower boundary) of the display, the third edge is a left edge (or a left boundary) of the display, and the fourth edge is a right edge (or a right boundary) of the display is used for description.

All or a part of a vertical projection of the first UWB base station 212 on the display 211 is located at an intersection point of the third edge and the second edge. All or a part of a vertical projection of the second UWB base station 213 on the display 211 is located at an intersection point of the fourth edge and the second edge. All or part of a vertical projection of the third UWB base station 214 on the display 211 is located at an intersection point of the first edge and the third edge.

It should be noted that, two UWB base stations are deployed in the annotation device 200. This can also implement the technical solutions of this application. For ease of description, an example in which the first UWB base station 212, the second UWB base station 213, and the third UWB base station 214 are deployed in the annotation device 200 is used for description. It should be understood that, in this embodiment of this application, a quantity of UWB base stations on the display 211 may be greater than or equal to 2, for example, 4 or 5. The quantity of UWB base stations on the display is not limited in this embodiment of this application provided that left and right boundary locations and upper and lower boundary locations of the display can be determined by using a plurality of UWB base stations on the display.

It should be understood that, in this embodiment of this application, locations of the first UWB base station 212, the second UWB base station 213, and the third UWB base station 214 on the display 211 may be exchanged. This is not limited in this application.

It should be understood that, in this embodiment of this application, a specific shape of the display of the annotation device 200 is not limited. For example, the display may be a rectangle, or a parallelogram, a hexagon, an octagon, a decagon, a circle, or the like. This is not limited in this application.

Optionally, in this embodiment of this application, the direction sensor 102 on the mobile device 100 may include an inertial measurement unit (inertial measurement unit, IMU). For example, the direction sensor may be a nine-axis IMU that includes an accelerometer sensor (accelerometer sensor), a gyroscope sensor (gyroscope sensor), and a magnetic sensor (magnetic sensor). Alternatively, the direction sensor may be a six-axis IMU or the like combined by an accelerometer sensor (accelerometer sensor) and a gyroscope sensor (gyroscope sensor). This is not limited in this application.

It should be understood that, in the scenario shown in FIG. 1, the electronic device 300 is only an example. In addition to the electronic device 300, another electronic device (not shown in FIG. 1) may be further included in the scenario. The another electronic device may also be annotated by using the mobile device 100 and the annotation device 200.

It should be understood that, in this embodiment of this application, every two of the mobile device 100, the annotation device 200, and the electronic device 300 may establish a communication connection in a plurality of different short-range wireless communication manners, such as a Wi-Fi connection, Bluetooth, or a routing device. In this way, messages can be transmitted between two devices.

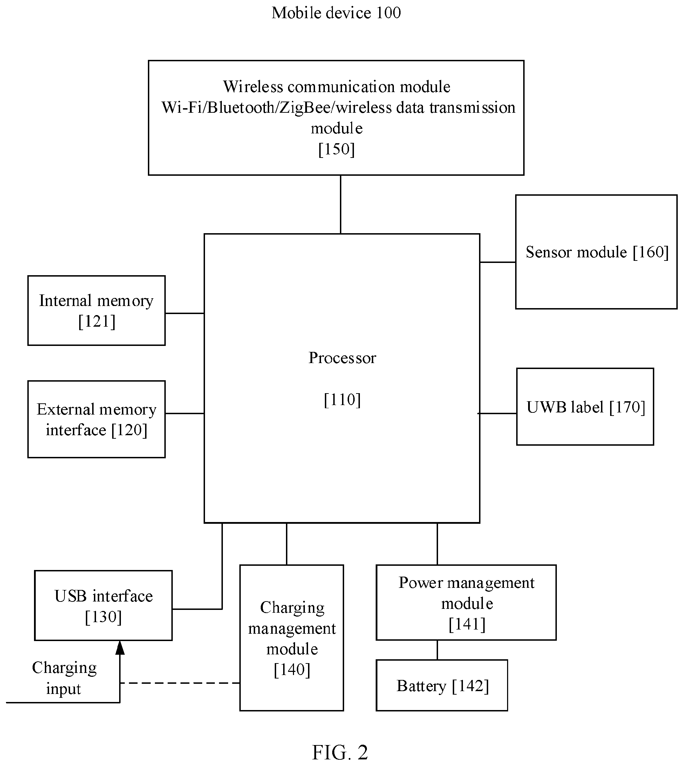

For example, FIG. 2 shows a hardware structure of the mobile device 100 according to an embodiment of this application. As shown in FIG. 2, the mobile device 100 includes a processor 110, an external memory interface 120, an internal memory 121, a universal serial bus (universal serial bus, USB) interface 130, a charging management module 140, a power management module 141, a battery 142, an antenna, and a wireless communication module 150, a sensor module 160, a UWB label 170, and the like. The sensor module 160 may include a direction sensor. Optionally, the mobile device 100 may further include a display. The display is configured to display a control interface for an electronic device to the user, so that the user controls the electronic device.

It may be understood that an example structure in FIG. 2 does not constitute a specific limitation on the mobile device 100. In some other embodiments of this application, the mobile device 100 may include more or fewer components than those shown in the figure, or combine some components, or split some components, or have different component arrangements. The components in the figure may be implemented by using hardware, software, or a combination of software and hardware.

The processor 110 may include one or more processing units. For example, the processor 110 may include an application processor (application processor, AP), a modem, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors. In some embodiments, the mobile device 100 may also include one or more processors 110. The controller may generate an operation control signal based on instruction operation code and a time sequence signal, to complete control of instruction reading and instruction execution.

In some embodiments, the processor 110 may include one or more interfaces. The interface may include an inter-integrated circuit (inter-integrated circuit, I2C) interface, an integrated circuit sound (integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 130 is an interface that conforms to USB standard specifications, and may be specifically a mini USB interface, a micro USB interface, a USB type-C interface, or the like. The USB interface 130 may be configured to connect to the charger to charge the mobile device 100, or may be configured to transmit data between the mobile device 100 and a peripheral device.

It may be understood that an interface connection relationship between the modules shown in this embodiment of this application is merely an example for description, and constitutes no limitation on the structure of the mobile device 100. In some other embodiments of this application, the mobile device 100 may alternatively use an interface connection manner different from that in the foregoing embodiment, or use a combination of a plurality of interface connection manners.

A wireless communication function of the mobile device 100 may be implemented through the antenna, the wireless communication module 150, and the like. The wireless communication module 150 may provide a solution that is applied to the mobile device 100 and that includes wireless communication such as Wi-Fi (including Wi-Fi aware and a Wi-Fi AP), Bluetooth (Bluetooth, BT), and a wireless data transmission module (for example, 433 MHz, 868 MHz, and 915 MHz). The wireless communication module 150 may be one or more components integrating at least one communication processor module. The wireless communication module 150 receives an electromagnetic wave by the antenna, performs filtering processing and frequency modulation on an electromagnetic wave signal, and sends a processed signal to the processor 110. The wireless communication module 150 may further receive a to-be-sent signal from the processor 110, perform frequency modulation and amplification on the to-be-sent signal, and convert the signal into an electromagnetic wave through an antenna and radiate the signal. Optionally, the antenna may be one antenna, or may be a plurality of antennas. When there are a plurality of antennas, only some of the plurality of antennas may be used.

The external memory interface 120 may be configured to connect to an external storage card, for example, a Micro SD card, to extend a storage capability of the mobile device 100. The external storage card communicates with the processor 110 through the external memory interface 120, to implement a data storage function. For example, files such as music and a video are stored in the external storage card.

The internal memory 121 may be configured to store one or more computer programs, and the one or more computer programs include instructions. The processor 110 may run the instructions stored in the internal memory 121, so that the mobile device 100 performs a method for quickly popping up a control window for an electronic device provided in some embodiments of this application, other applications, and data processing. The internal memory 121 may include a code storage area and a data storage area. The code storage area may store an operating system. The data storage area may store data created during use of the mobile device 100, and the like. In addition, the internal memory 121 may include a high-speed random access memory, or may include a nonvolatile memory, for example, one or more magnetic disk storage devices, a flash memory, or a universal flash storage (universal flash storage, UFS). In some embodiments, the processor 110 may run the instructions stored in the internal memory 121 and/or instructions stored in the memory that is disposed in the processor 110, to enable the mobile device 100 to perform the method for quickly popping up a control window for an electronic device provided in embodiments of this application, other applications, and data processing.

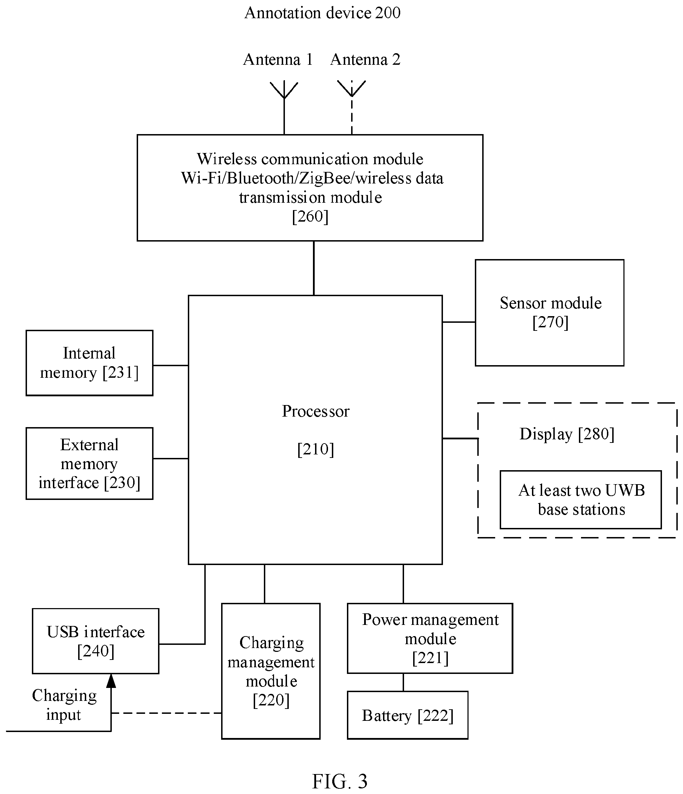

For example, FIG. 3 shows a hardware structure of the annotation device 200 according to this application. As shown in FIG. 3, the annotation device 200 may include a processor 210, an external memory interface 230, an internal memory 231, a universal serial bus (universal serial bus, USB) interface 240, a charging management module 220, a power management module 221, a battery 222, an antenna 1, an antenna 2, a wireless communication module 260, a sensor module 270, and at least two UWB base stations. Optionally, the annotation device 200 may further include a display 280. If the annotation device 200 includes the display 280, the at least two UWB base stations may be deployed on the display 280. For example, when three UWB base stations are deployed on the display 280, locations of the three UWB base stations may be locations shown in FIG. 1. If the annotation device 200 does not include the display 280, the at least two UWB base stations may be disposed at other locations of the annotation device 200. This is not limited in this application.

It may be understood that an example structure in FIG. 3 does not constitute a specific limitation on the annotation device 200. In some other embodiments of this application, the annotation device 200 may include more or fewer components than those shown in the figure, or combine some components, or split some components, or have different component arrangements. The components in the figure may be implemented by using hardware, software, or a combination of software and hardware.

It may be understood that an interface connection relationship between the modules shown in this embodiment of this application is merely an example for description, and constitutes no limitation on the structure of the annotation device 200. In some other embodiments of this application, the annotation device 200 may alternatively use an interface connection manner different from that in the foregoing embodiment, or use a combination of a plurality of interface connection manners.

The mobile device 100 and the annotation device 200 provided in embodiments cooperate with each other to implement a method for quickly popping up a control window for an electronic device.

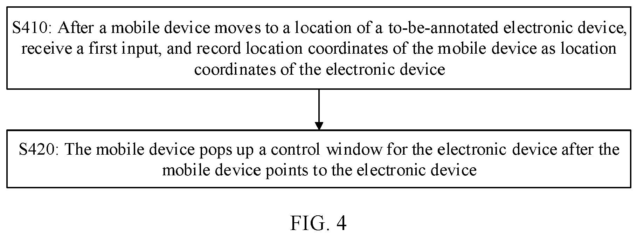

FIG. 4 is a partial flowchart of a method for quickly popping up a control window for an electronic device according to an embodiment of this application. Before performing a procedure shown in FIG. 4, the mobile device 100 has established a communication connection to the annotation device 200, established a three-dimensional coordinate system, obtained location coordinates of the three UWB base stations in the annotation device 200, and obtained real-time location coordinates of the mobile device 100. In other words, the method for quickly popping up a control window for an electronic device provided in embodiments of this application includes the procedure shown in FIG. 4 and steps before the procedure shown in FIG. 4. As shown in FIG. 4, the method includes the following steps: S410: After the mobile device moves to a location of a to-be-annotated electronic device, receive a first input, and record location coordinates of the mobile device as location coordinates of the electronic device. S420: The mobile device pops up a control window for the electronic device after the mobile device points to the electronic device.

Optionally, a step of calibrating a pointing direction of the mobile device 100 may be further added before S410, for calibrating the pointing direction of the mobile device 100, and even for calibrating a direction of a vertical line from the mobile device 100 to the annotation device 200.

For example, when a user holds the mobile device 100 and makes the pointing direction of the mobile device 100 "vertical to" (the user thinks artificially, but not actually vertical) the display 211 of the annotation device 200, an angle of the mobile device 100 may be adjusted, so that prompt information fed back on the mobile device 100 by the direction sensor of the mobile device 100 notifies the user that, in this case, the mobile device 100 is vertical to (which is determined based on a measured angle) the display 211 of the annotation device 200. In this case, the mobile device 100 may set a straight line direction of the pointing direction of the mobile device 100 as a vertical line direction from the mobile device 100 to the annotation device 200.

For example, when the user holds the mobile device 100 and makes the pointing direction of the mobile device 100 "vertical to" (vertical that the user thinks artificially, but not actually vertical) the display 211 of the annotation device 200, because there is an error in manually adjusted verticality, the mobile device 100 may set the straight line direction of the pointing direction of the mobile device 100 as a first direction. Then, the mobile device 100 may set a straight line direction of a subsequent pointing direction of the mobile device 100 as a second direction. A difference angle between the second direction and the first direction is determined as an included angle between a straight line in the subsequent pointing direction of the mobile device 100 and the vertical line from the mobile device 100 to the annotation device 200.

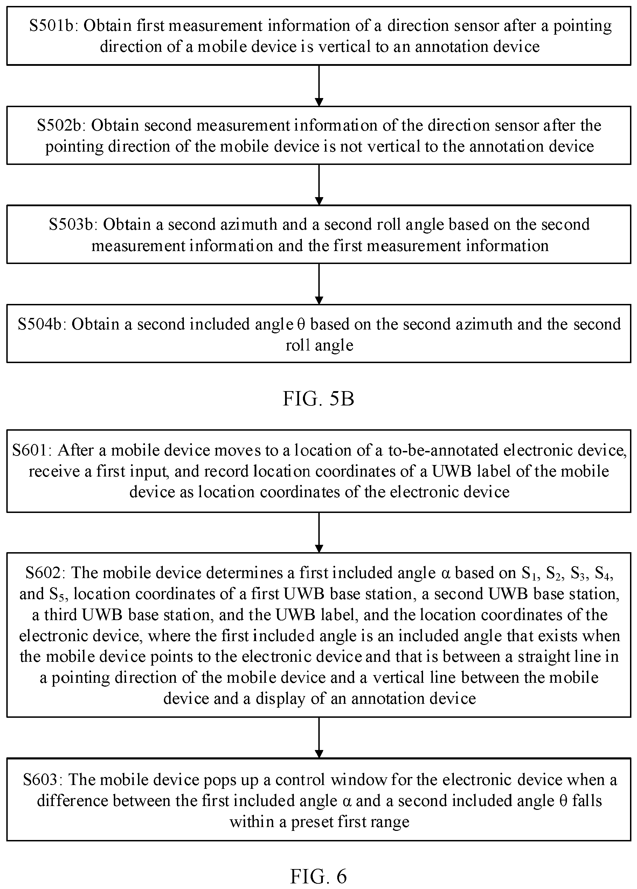

A procedure shown in FIG. 5B may be performed before S410. The procedure shown in FIG. 5B includes a procedure of calibrating the pointing direction of the mobile device 100 and determining a second included angle θ between the pointing direction of the mobile device 100 and a vertical line between the mobile device 100 and the display 211.

The procedure shown in FIG. 5B specifically includes the following steps.

S501b: Obtain first measurement information of the direction sensor after the pointing direction of the mobile device is vertical to the annotation device.

Specifically, vertical in S501b is "vertical" that the user thinks artificially, and may not actually be vertical.

In an implementation, the first measurement information includes an included angle between a straight line in the pointing direction of the mobile device 100 and a fixed direction.

S502b: Obtain second measurement information of the direction sensor after the pointing direction of the mobile device is not vertical to the annotation device.

In an implementation, the second measurement information includes an included angle between the straight line in the pointing direction of the mobile device 100 and a fixed direction. The fixed direction in S502b is the same as the fixed direction in S501b.

S503b: Obtain a second azimuth and a second roll angle based on the second measurement information and the first measurement information.

S504b: Obtain the second included angle θ based on the second azimuth and the second roll angle.

As shown in S501b in FIG. 5B, after the pointing direction (or may also be referred to as the straight line in the pointing direction of the mobile device) of the mobile device is vertical to the display 211 of the annotation device 200, the first measurement information (an initial azimuth and an initial roll angle) of the direction sensor on the mobile device 100 may be obtained. For example, in a process in which the user holds the mobile device 100, so that the pointing direction of the mobile device 100 is vertical to the display 211 of the annotation device 200, the user may rotate the mobile device 100, so that when an upper surface (namely, a surface that the user faces when using the mobile device 100) of the mobile device 100 is parallel to the upper edge and the lower edge of the display 211, and is vertical to the left edge and the right edge of the display, an angle between the upper surface of the mobile device 100 and the upper edge and the lower edge of the display 211 is 0 degrees, an angle between the upper surface of the mobile device 100 and the left edge and the right edge of the display is 90 degrees, the mobile device 100 is vertical to the display 211, and the pointing direction of the mobile device 100 is vertical to the display 211 of the annotation device 200.

Optionally, the mobile device 100 may further provide a prompt to the user based on measurement information of the direction sensor. For example, a prompt is provided on a display interface of the mobile device 100 to prompt the user whether the pointing direction of the mobile device 100 is vertical to the display 211 of the annotation device 200, so that the user performs adjustment based on the prompt, and finally the pointing direction of the mobile device 100 is vertical to the display 211 of the annotation device 200.

It should be understood that, in this embodiment of this application, S501b is optional. For example, if the mobile device 100 has been calibrated before delivery, that is, S501b has been performed, in actual use by the user, the mobile device 100 may directly perform S502b to S504b without performing S501b. After the user rotates the mobile device 100, the pointing direction of the mobile device 100 changes, and the pointing direction of the mobile device 100 is not vertical to the display 211 of the annotation device 200. It may be understood from the process of S502b to S504b that, after the mobile device 100 rotates, an actual azimuth and an actual roll angle (the second measurement information) of the mobile device are obtained in real time based on the direction sensor on the mobile device. In addition, an actual rotation angle of the mobile device is obtained through calculation based on the actual azimuth and the actual roll angle, and the initial azimuth and the initial roll angle (the first measurement information). The actual rotation angle includes the second azimuth and the second roll angle. The second azimuth may be understood as an included angle, in the second direction, between the pointing direction of the mobile device 100 and the vertical line between the mobile device 100 and the display 211. The second roll angle may be understood as an included angle, in the first direction, between the pointing direction of the mobile device 100 and the vertical line between the mobile device 100 and the display 211. The first direction is vertical to the second direction. For example, the first direction is a horizontal direction of the display 211, and the second direction is a vertical direction of the display 211.

In S504b, the mobile device may determine the second included angle θ based on the second azimuth and the second roll angle. The second included angle θ is an included angle between the pointing direction of the mobile device 100 and the vertical line between the mobile device 100 and the display 211.

In this embodiment of this application, the second included angle θ may be decomposed into the second azimuth and the second roll angle. The second azimuth may be understood as a component of the second included angle θ in the second direction, and the second roll angle may be understood as a component of the second included angle θ in the first direction.

It should be understood that the procedure shown in FIG. 5B is performed in real time and continuously. Alternatively, in the procedure shown in FIG. 5B, S501b may be performed only once, and S502b to S504b are performed in real time and continuously.

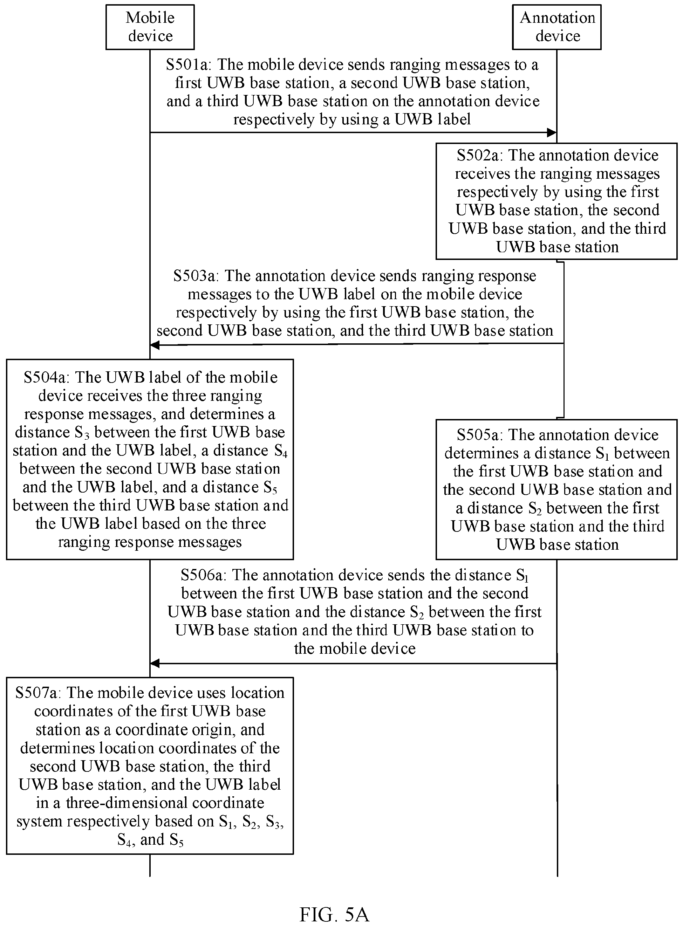

A procedure shown in FIG. 5A may be performed before S410. The procedure shown in FIG. 5A is used to obtain a distance between the UWB label on the mobile device 100 and each UWB base station on the annotation device 200, and a distance between every two UWB base stations on the annotation device, and determine location coordinates of the UWB label, the first UWB base station, the second UWB base station, and the third UWB base station in a three-dimensional coordinate system based on these distances.

The procedure shown in FIG. 5A includes the following steps.

S501a: The mobile device sends ranging messages to the first UWB base station, the second UWB base station, and the third UWB base station on the annotation device respectively by using the UWB label.

S502a: The annotation device receives the ranging messages respectively by using the first UWB base station, the second UWB base station, and the third UWB base station.

S503a: After the first UWB base station, the second UWB base station, and the third UWB base station on the annotation device respectively receive the ranging messages, the annotation device sends ranging response messages to the UWB label on the mobile device respectively by using the first UWB base station, the second UWB base station, and the third UWB base station.

S504a: The mobile device determines a distance $S_3$ between the first UWB base station and the UWB label, a distance $S_4$ between the second UWB base station and the UWB label, and a distance $S_5$ between the third UWB base station and the UWB label based on the plurality of ranging response messages and the plurality of ranging messages.

S505a: The annotation device determines a distance $S_1$ between the first UWB base station and the second UWB base station and a distance $S_2$ between the first UWB base station and the third UWB base station.

S506a: The annotation device sends the distance $S_1$ between the first UWB base station and the second UWB base station and the distance $S_2$ between the first UWB base station and the third UWB base station to the mobile device.

S507a: The mobile device uses a location of the first UWB base station as a coordinate origin, and determines location coordinates of the second UWB base station, the third UWB base station, and the UWB label in a three-dimensional coordinate system respectively based on $S_1$, $S_2$, $S_3$, $S_4$, and $S_5$.

Alternatively, in S507a, the mobile device may also use a location of the second UWB base station or a location of the third UWB base station as a coordinate origin. Using the location of the first UWB base station as the coordinate origin is merely an example. That is, the mobile device may use a location of any UWB base station in the at least two UWB base stations on the annotation device as a coordinate origin. This is not limited in this application.

It should be understood that, in this embodiment of this application, the procedure shown in FIG. 5A may be performed only once. For example, the procedure shown in FIG. 5A is performed once in a connection process between the mobile device and the annotation device after the mobile device and the annotation device are powered on for the first time, and is not performed subsequently.

It should be further understood that, in this embodiment of this application, the ranging response messages in S503a and the distance $S_L$ and the distance $S_2$ in S506a may alternatively be combined into one message and sent to the mobile device. To be specific, the annotation device may send a ranging response message to the mobile device, where the ranging response message includes the distance $S_1$ between the first UWB base station and the second UWB base station and the distance $S_2$ between the first UWB base station and the third UWB base station. In this way, S506a does not need to be performed. This reduces signaling overheads. If S503a and S506a are not combined, that is, both S503a and S506a need to be performed, the mobile device can receive the ranging response message more quickly, and time used by the mobile device to determine the distance $S_3$, the distance $S_4$, and the distance $S_5$ is shortened. This ensures timeliness of communication.

It should be further understood that, in this embodiment of this application, an execution sequence of the procedure shown in FIG. 5A and the procedure shown in FIG. 5B is not limited. The procedure shown in FIG. 5A and the procedure shown in FIG. 5B may be performed simultaneously or may be performed sequentially. This is not limited herein in this embodiment of this application.

It should be further understood that, in this embodiment of this application, both the procedure shown in FIG. 5A and the procedure shown in FIG. 5B are performed before the steps shown in FIG. 4.

FIG. 6 is a flowchart of an internal implementation related to the procedure steps shown in FIG. 4 in a method for quickly popping up a control window for an electronic device according to an embodiment of this application. A procedure shown in FIG. 6 is a specific procedure in which the mobile device determines whether to pop up a control window for an electronic device. The procedure shown in FIG. 6 is performed after the procedure shown in FIG. 5A and the procedure shown in FIG. 5B. The procedure shown in FIG. 6 includes the following steps.

S601: After the mobile device moves to the location of the to-be-annotated electronic device, receive the first input, and record the location coordinates of the mobile device as the location coordinates of the electronic device.

S602: The mobile device determines a first included angle $\alpha$ based on $S_1$, $S_2$, $S_3$, $S_4$, and $S_5$, the location coordinates of the first UWB base station, the second UWB base station, the third UWB base station, the UWB label, and the location coordinates of the electronic device, where the first included angle $\alpha$ represents the included angle that exists when the mobile device points to the electronic device and that is between the straight line in the pointing direction of the mobile device and the vertical line between the mobile device and the display of the annotation device.

S603: The mobile device pops up a control window for the electronic device when a difference between the first included angle α and the second included angle θ falls within a preset range.

It should be understood that, in the procedure shown in FIG. 6, S601 is performed based on the first input of the user, and is not performed in real time and is not always being performed. S602 and S603 are performed in real time and are always being performed. S602 and S603 may be understood as a specific process of S420. The first input may be a user input, for example, a voice input or a touch input (including but not limited to one of touch and hold, tap, and sliding after selection).

Specifically, there are two possible implementations in S603.

Implementation 1: The mobile device 100 determines the difference between the first included angle α and the second included angle θ, and if the difference falls within the preset difference range, for example, the difference between the first included angle α and the second included angle θ is 0 degrees, it indicates that the mobile device 100 points to the electronic device 300, the mobile device 100 can control the electronic device 300, and the mobile device 100 pops up the control window for the electronic device 300; or if the difference does not fall within the preset difference range, it indicates that the mobile device 100 does not point to the electronic device 300, and the mobile device 100 cannot control the electronic device 300.

Implementation 2: The mobile device may further determine the actual azimuth (namely, the second azimuth) and the actual roll angle (namely, the second roll angle) of the mobile device based on the second included angle θ; and the mobile device determines an azimuth component (namely, the first azimuth) and a roll angle component (namely, the first roll angle) of the first included angle α based on the first included angle α, where the roll angle component represents an included angle, existing when the mobile device points to the electronic device, that is in the first direction and that is between the straight line in the pointing direction of the mobile device and the vertical line between the mobile device and the display, and the azimuth component represents an included angle, existing when the mobile device points to the electronic device, that is in the second direction and that is between the straight line in the pointing direction of the mobile device and the vertical line between the mobile device and the display.

If a difference between an azimuth and an azimuth component falls within a preset range, for example, a value of the azimuth is equal to a value of the azimuth component, and a difference between a value of a roll angle and a value of a roll angle component also falls within the preset range, for example, the value of the roll angle is equal to the value of the roll angle component, it indicates that the mobile device points to the electronic device, the mobile device pops up the control window for the electronic device, and the mobile device can control the electronic device.

If a difference between an azimuth and an azimuth component falls within a preset range, for example, a value of the azimuth is equal to a value of the azimuth component, but a difference between a roll angle and a roll angle component does not fall within a preset range, it indicates that the mobile device does not point to the electronic device, the mobile device does not pop up the control window for the electronic device, and the mobile device cannot control the electronic device.

If a difference between an azimuth and an azimuth component does not fall within a preset range, but a difference between a roll angle and a roll angle component falls within a preset range, it indicates that the mobile device does not point to the electronic device, and the mobile device cannot control the electronic device.

If a difference between an azimuth and an azimuth component does not fall within a preset range, and a difference between a roll angle and a roll angle component does not fall within a preset range, it indicates that the mobile device does not point to the electronic device, the mobile device does not pop up the control window for the electronic device, and the mobile device cannot control the electronic device.

Optionally, before the procedure shown in FIG. 5A or the procedure shown in FIG. 5B, the method may further include the following procedure: The mobile device sends indication information to the annotation device, where the indication information indicates to control the electronic device by using the mobile device. In other words, before the mobile device performs S410, the mobile device may communicate with the annotation device, and information or a message transmitted in the communication process notifies the annotation device that the mobile device needs to control the electronic device.

In this embodiment of this application, the vertical line between the mobile device and a plane of the display (or from the mobile device to a plane of the display) may be understood as: a vertical line made from any point (for example, any point on the UWB label on the mobile device or a central location point on the top of the mobile device) on the mobile device as an end point (denoted as a point Q) of a line segment to the plane of the display, where an intersection point between the vertical line and the display is another end point (denoted as a point P) of the line segment. The line segment QP is the vertical line between the mobile device and the plane of the display (or from the mobile device to the plane of the display). That is, the mobile device may be considered as a point, and a vertical line from the point to the plane of the display is made. The vertical line is the vertical line between the mobile device and the plane of the display, and the vertical line between the mobile device and the plane of the display is vertical to the display.

The straight line in the pointing direction of the mobile device may be understood as: a straight line with any point (for example, any point on the UWB label on the mobile device or the central location point on the top of the mobile device) on the mobile device as a start point of the straight line, where a direction of the straight line is a direction that the mobile device actually points to. In addition, the start point of the straight line in the pointing direction of the mobile device is the same as the start point (point Q) of the vertical line between the mobile device and the display. The mobile device may rotate in the first direction or the second direction around the point (the point Q). When the mobile device rotates leftward or rightward in the first direction around the point Q, a roll angle between the mobile device and the display changes. When the mobile device rotates upward or downward in the second direction around the point Q, an azimuth between the mobile device and the display changes. That is, the mobile device may be considered as a point, and the point (point Q) is used as the start point of the straight line in the pointing direction of the mobile device, and the direction of the straight line (or may be understood as a half line starting from the point Q) is the direction that the mobile device actually points to.

In the following descriptions, steps of the method for quickly popping up a control window for an electronic device provided in this application is described by using an example in which the annotation device 200 is a smart television (which may also be referred to as a large-screen device) and the mobile device 100 is a smartphone. In addition, in the following descriptions, unless otherwise specified, the electronic device is an electronic device on which no UWB base station or UWB label is installed. It should be understood that this should not impose any limitation on the mobile device and the annotation device in embodiments of this application. For example, the mobile device may alternatively be an air mouse, a remote control, another wearable device, or the like.

First, a concept of a course angle is introduced briefly. The course angle includes an azimuth, a tilt angle, and a roll angle.

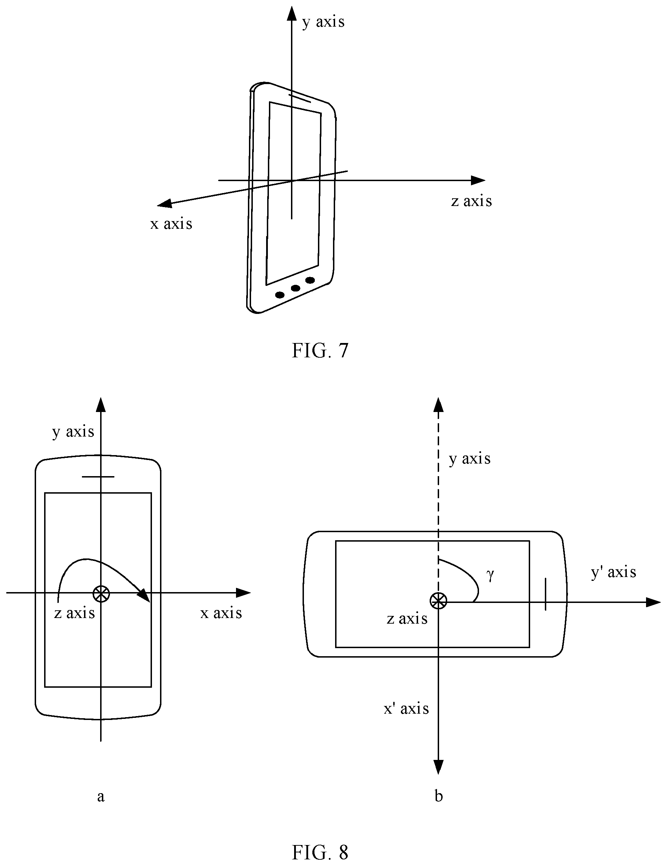

FIG. 7 is a schematic diagram of a principle of a reference coordinate axis. In FIG. 7, meanings of an azimuth (represented by $\gamma$), a tilt angle (represented by $\eta$), and a roll angle (represented by $\theta$) are described by using a mobile phone as an example. As shown in FIG. 7, a y axis and an x axis are directions parallel to a plane of a display of the mobile phone, and a z axis is a direction vertical to the display of the mobile phone. The y axis is a direction along a length of the mobile phone, and the x axis is a direction along a width of the mobile phone.

The azimuth $\gamma$ represents an angle at which the mobile phone rotates (rotates) around the z axis shown in FIG. 7. FIG. 8 is a schematic diagram of a principle of the azimuth. FIG. 8 is a schematic diagram of rotating (rotating) around the z axis shown in FIG. 7 by 90 degrees by the mobile phone, where a in FIG. 8 is a schematic diagram before the mobile phone rotates around the z axis, and b in FIG. 8 is a schematic diagram after the mobile phone rotates around the z axis. After the mobile phone rotates around the z axis (a direction indicated by an arrow on the z axis in a in FIG. 8 is a rotation direction of the mobile phone), a location of the y axis changes to a location of a y' axis shown in b in FIG. 8, a location of the x axis changes to a location of an x' axis shown in b in FIG. 8, and a value of $\gamma$ is equivalent to an included angle (an included angle between the y axis and the y' axis shown in FIG. 8) of the y axis before and after the mobile phone rotates (rotates) around the z axis. The mobile phone rotates around the z axis by 0 degrees to indicate a due north (North) direction, 90 degrees to indicate a due east (East) direction, 180 degrees to indicate a due south (South) direction, and 270 degrees to indicate a due west (West) direction.

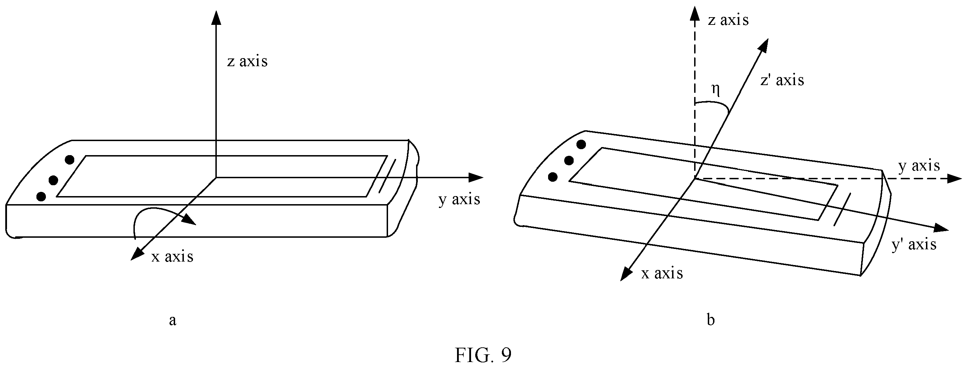

The tilt angle $\eta$ is an angle at which the mobile phone rotates or rotates around the x axis shown in FIG. 7. When the mobile phone rotates or rotates around the x axis, a value of the tilt angle changes. FIG. 9 is a schematic diagram of a principle of the tilt angle. FIG. 9 is a schematic diagram of rotating (rotating) around the x axis shown in FIG. 7 by the mobile phone. As shown in FIG. 9, a in FIG. 9 is a schematic diagram before the mobile phone rotates around the x axis, and b in FIG. 9 is a schematic diagram after the mobile phone rotates around the x axis. After the mobile phone rotates around the x axis (a direction indicated by an arrow on the x axis in a in FIG. 9 is a rotation direction of the mobile phone), a location of the z axis changes to a location of a z' axis shown in b in FIG. 9, a location of the y axis changes to a location of a y' axis shown in b in FIG. 9, and a value of $\eta$ is equivalent to an included angle (an included angle between the z axis and the z' axis shown in b in FIG. 9) of the z axis before and after the mobile phone rotates (rotates) around the x axis. A value range of the tilt angle $\eta$ is [-180°, 180°]. For example, if the mobile phone is placed on a desk and the desk is completely horizontal, the value of $\eta$ is 0 degrees. The mobile phone is lifted from the top of the mobile phone until the mobile phone rotates around the x axis by 180 degrees. In this case, the display of the mobile phone faces downward and horizontally touches the desk. During the rotation, the value of $\eta$ changes between 0 degrees and -180 degrees. That is, when the mobile phone is lifted, the value of $\eta$ gradually decreases until it is equal to -180 degrees. It is assumed that the mobile phone is lifted from the bottom of the mobile phone until the mobile phone rotates 180 degrees around the x axis. In this case, the value of $\eta$ changes from 0 degrees to 180 degrees.

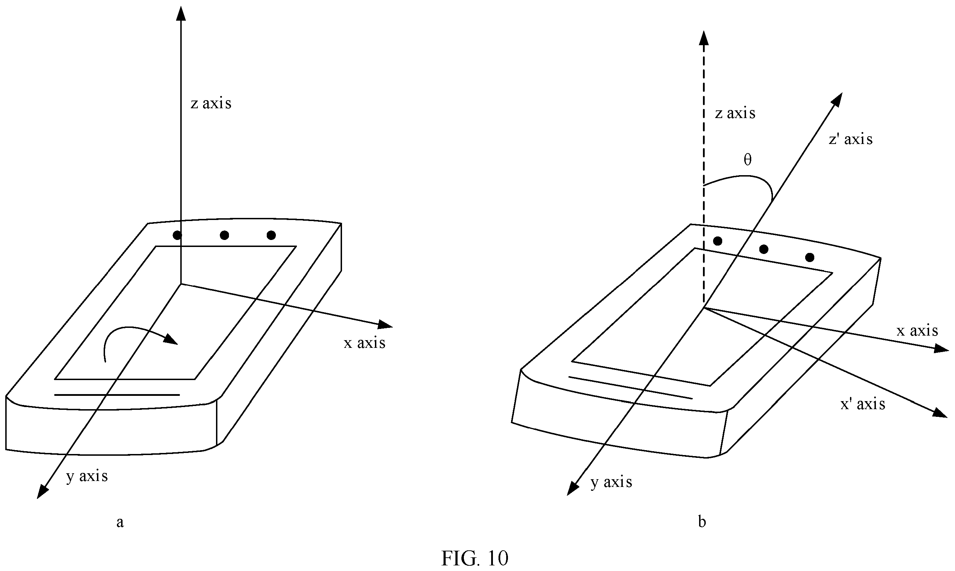

The roll angle $\theta$ is an angle at which the mobile phone rotates or rotates around the y axis shown in FIG. 7. The value range of $\theta$ is [-90°, 90°]. FIG. 10 is a schematic diagram of a principle of the roll angle. FIG. 10 is a schematic diagram of rotating (rotating) around the y axis shown in FIG. 7 by the mobile phone, a in FIG. 10 is a schematic diagram before the mobile phone rotates around the y axis, and b in FIG. 10 is a schematic diagram after the mobile phone rotates around the y axis. As shown in FIG. 10, after the mobile phone rotates around the y axis (a direction indicated by an arrow on the y axis in a in FIG. 10 is a rotation direction of the mobile phone), a location of the z axis changes to a location of a z' axis shown in b in FIG. 10, a location of the x axis changes to a location of an x' axis shown in b in FIG. 10, and a value of $\theta$ is equivalent to an

19

included angle (an included angle between the z axis and the z' axis shown in b in FIG. 10) of the z axis before and after the mobile phone rotates (rotates) around the y axis. It is assumed that the mobile phone is placed horizontally on a desk with the display facing upward. If the desk is flat, the value of θ should be 0 degrees. The mobile phone is lifted from the left side of the mobile phone, and the value of θ gradually decreases until the mobile phone is vertical to the desk. In this case, the value of θ is -90 degrees. The mobile phone is lifted from the right side of the mobile phone, and the value of θ gradually increases until the mobile phone is vertical to the desk. In this case, the value of θ is 90 degrees. If the mobile phone continues to roll rightward or leftward while vertical to the desk, the value of θ continues to change between -90 degrees and 90 degrees.

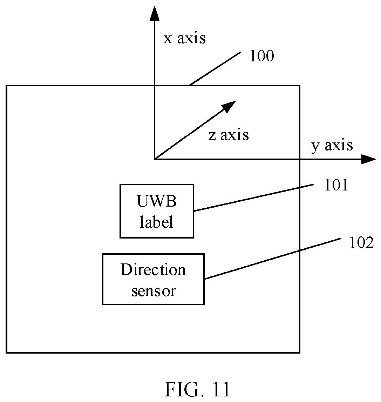

A course angle of a smartphone: values of the x axis and y axis detected by the direction sensor on the smartphone, where the x axis represents an amplitude at which the smartphone tilts upward and downward, and the y axis represents an amplitude of the smartphone tilts leftward and rightward. FIG. 11 is a schematic diagram of an x axis, a y axis, and a z axis on the smartphone 100. The z axis is vertical to a surface of the smartphone 100, the x axis and the y axis are located on a same plane, and the z axis is vertical to the plane on which the x axis and the y axis are located.

The direction sensor 102 on the smartphone 100 may detect changes of an azimuth, a tilt angle, and a roll angle of the smartphone 100. In this embodiment of this application, the values detected by the direction sensor 102 on the smartphone 100 are values of the azimuth and the roll angle. The roll angle represents an included angle that is in the first direction (the horizontal direction) and that is between a straight line in a pointing direction of the smartphone and a vertical line between the smartphone and the display, and the azimuth represents an included angle that is in the second direction (the vertical direction) and that is between the straight line in the pointing direction of the smartphone and the vertical line between the smartphone and the display.

The vertical line between the smartphone and a plane of the display (or from the smartphone to a plane of the display) may be understood as: a vertical line made from any point (for example, any point on a UWB label on the smartphone or a central location point on the top of the smartphone) on the smartphone 100 as an end point (denoted as a point Q) of a line segment to the plane of the display 211 of the annotation device 200, where an intersection point between the vertical line and the display 211 is another end point (denoted as a point P) of the line segment. The line segment QP is the vertical line between the smartphone and the plane of the display (or from the smartphone to the plane of the display). That is, the smartphone may be considered as a point, and a vertical line from the point to the plane of the display is made. The vertical line is the vertical line between the smartphone and the plane of the display, and the vertical line between the smartphone and the plane of the display is vertical to the display.

The straight line in the pointing direction of the smartphone (in this embodiment of this application, the straight line in the pointing direction of the smartphone may also be referred to as the pointing direction of the smartphone) may be understood as: a straight line with any point (for example, any point on the UWB label on the smartphone or the central location point on the top of the smartphone) on the smartphone as a start point of the straight line, where a direction of the straight line is a direction that the smartphone actually points to. In addition, the start point of the straight line in the pointing direction of the smartphone is the same as the start point (point Q) of the vertical line between the smartphone and the display. That is, the smartphone may be considered as a point, and the point (point Q) is used as the start point of the straight line in the pointing direction of the smartphone, and the direction of the straight line (or may be understood as a half line starting from the point Q) is the direction that the smartphone actually points to.

The following describes a process of calibrating the smartphone 100. This process may correspond to steps S501b to S504b shown in FIG. 5B.

Because a display 211 of a smart television 200 is fastened, calibration is performed when the smartphone 100 faces the display 211.

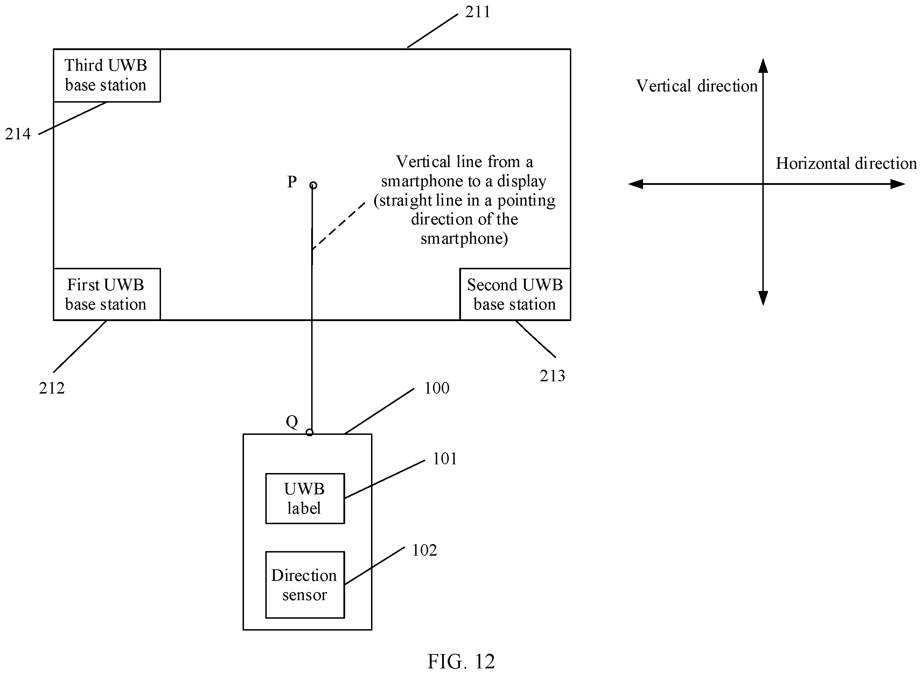

Specifically, when the user places an upper surface of the smartphone (namely, a surface that the user faces when using the smartphone) parallel to an upper edge and a lower edge of the display and vertical to a left edge and a right edge of the display, an angle between the upper surface of the smartphone and the upper edge and the lower edge of the display is 0 degrees, an angle between the upper surface of the smartphone and the left edge and the right edge of the display is 90 degrees, and the smartphone is vertical to the display. FIG. 12 is a schematic diagram in which the smartphone 100 faces the display 211. As shown in FIG. 12, the straight line in the pointing direction of the smartphone 100 coincides with the vertical line between the smartphone 100 and the plane of the display 211 (or from the smartphone to the plane of the display), and the line segment QP is the vertical line between the smartphone 100 and the plane of the display 211 (or from the smartphone to the plane of the display). In this embodiment of this application, in a process in which the user holds the smartphone 100 artificially vertical to the display 211 of the smart television 200, the smartphone 100 may further provide a prompt to the user based on measurement information of the direction sensor, for example, prompt, on a display interface of the smartphone 100, the user whether the straight line in the pointing direction of the smartphone 100 is vertical to the display 211 of the smart television 200, so that the user performs adjustment based on the prompt, and finally the pointing direction of the smartphone 100 is vertical to the display 211 of the smart television 200.

If the smartphone tilts toward the upper edge of the display, a tilt angle is recorded as ψ.

If the smartphone tilts toward the lower edge of the display, a tilt angle is recorded as λ.

If the smartphone tilts toward the left edge of the display, a tilt angle is recorded as σ.

If the smartphone tilts toward the right edge of the display, a tilt angle is recorded as ω.

Optionally, in this embodiment of this application, when the smartphone tilts toward the lower edge of the display, a tilt angle is recorded as a negative value. When the smartphone tilts toward the upper edge of the display, a tilt angle is recorded as a positive value. When the smartphone tilts toward the left edge of the display, a tilt angle is recorded as a positive value. When the smartphone tilts toward the right edge of the display, a tilt angle is recorded as a negative value. The upper edge, the lower edge, the left edge, and the right edge are respectively four edges (which may also be referred to as four boundaries) of the display.

In this embodiment of this application, each of ψ and λ may be understood as an actual azimuth between the smartphone and the display. Optionally, a value of λ is defined as a negative value, and a value of ψ is defined as a positive value. For example, the value of λ may be -40°, and the value of ψ may be +60°.

Herein, each of σ and ω may be understood as an actual roll angle between the smartphone and the display. Optionally, a value of σ is defined as a positive value, and a value of ω is defined as a negative value. For example, the value of σ is +30°, and the value of ω is -45°.

In this embodiment of this application, an actual rotation angle of the smartphone includes: an actual azimuth ψ or λ) between the smartphone and the display, and an actual roll angle (σ or ω) between the smartphone and the display.

In this embodiment of this application, the actual roll angle between the smartphone and the display represents an included angle that is in the first direction (the horizontal direction) and that is between the straight line in the pointing direction of the smartphone and the vertical line between the smartphone and the display.

The actual azimuth between the smartphone and the display represents an included angle that is in the second direction (the vertical direction) and that is between the straight line in the pointing direction of the smartphone and the vertical line between the smartphone and the display.

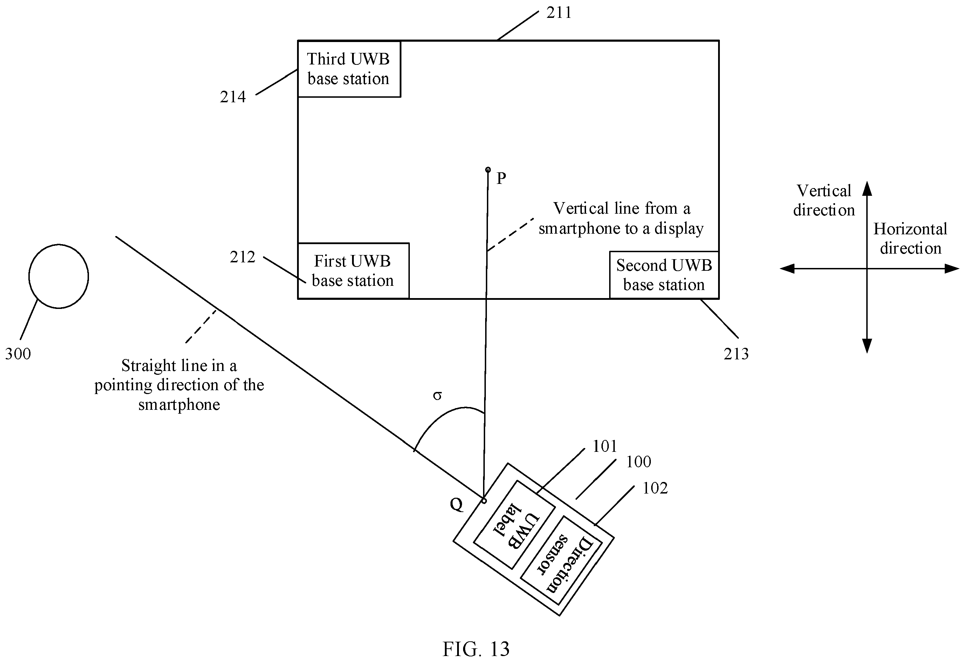

For example, FIG. 13 is a schematic diagram of the actual roll angle σ between the smartphone and the display according to this application. In FIG. 13, a line segment QP is a vertical line between the smartphone 100 and the plane of the display 211 (or from the smartphone 100 to the display 211). When the smartphone 100 is at a location shown in FIG. 12, when the smartphone 100 rotates leftward or rightward in the horizontal direction around a point Q, the roll angle σ between the smartphone 100 and the display 211 changes.

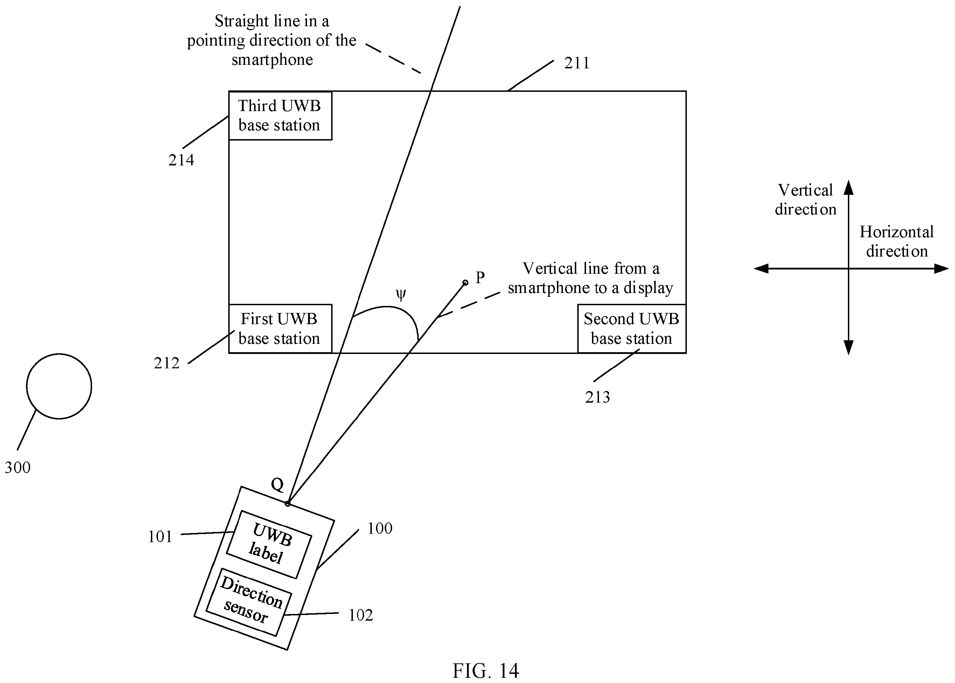

FIG. 14 is a schematic diagram of the actual azimuth ψ between the smartphone and the display according to this application. A line segment QP is a vertical line between the smartphone 100 and the plane of the display 211 (or from the smartphone 100 to the display 211). When the smartphone 100 is at a location shown in FIG. 14, when the smartphone 100 rotates upward or downward in the vertical direction around a point Q, the azimuth between the smartphone 100 and the display 211 changes.

Optionally, in this embodiment of this application, the straight line in the pointing direction of the smartphone may also be referred to as an extension line of a central axis of the smartphone. The straight line in the pointing direction of the smartphone means that there is a straight line based on a shape of an outer edge contour of the smartphone, so that the smartphone is symmetrical about the central axis. That is, vertical distances from a point on the central axis to the upper surface and a lower surface of the smartphone are equal, and vertical distances from a point on the central axis to a left surface and a right surface of the smartphone are equal. For example, a smartphone is a mobile phone with a touch display, and a shape of an outer edge contour of the mobile phone is generally symmetrical. For example, the shape of the outer edge contour of the mobile phone is a cuboid. A start point of the extension line of the central axis is the same as the start point (the point Q) of the vertical line between the smartphone and the display.

After angle calibration of the smartphone is completed, in S501b, after the straight line in the pointing direction of the smartphone is vertical to the display of the annotation device, the smartphone may obtain an initial direction measurement message (namely, the first measurement information) on the direction sensor. The initial measurement information includes an initial azimuth and an initial roll angle of the smartphone existing when the straight line in the pointing direction of the smartphone is vertical to the display of the annotation device.

The smartphone may determine the initial azimuth and the initial roll angle based on the initial direction measurement message.

In S502b, after the smartphone rotates, that is, after the pointing direction of the smartphone is not vertical to the display 211, the smartphone may obtain a current direction measurement message (the second measurement information) on the direction sensor.

The smartphone determines a current azimuth and a current roll angle based on the current direction measurement message.

In S503b, the smartphone determines the second azimuth ψ or λ, based on the current azimuth and the initial azimuth, and determines the second roll angle σ or ω based on the current roll angle and the initial roll angle.

For example, the second azimuth ψ or λ may be obtained by subtracting the initial azimuth from the current azimuth.

The second azimuth ψ or λ represents the actual azimuth between the smartphone and the display. The second

roll angle $\sigma$ or $\omega$ represents the actual roll angle between the smartphone and the display.

The second azimuth $\psi$ or $\lambda$, is the included angle that is in the second direction (the vertical direction) and that is between the pointing direction of the smartphone 100 and the vertical line between the smartphone 100 and the display 211 of the smart television 200.

The second roll angle $\sigma$ or $\omega$ is the included angle that is in the first direction (the horizontal direction) and that is between the pointing direction of the smartphone 100 and the vertical line between the smartphone 100 and the display 211 of the smart television 200.

In S504b, the smartphone 100 may further determine the second included angle $\theta$ based on the second azimuth $\psi$ or $\lambda$, and the second roll angle $\sigma$ or $\omega$. The second included angle $\theta$ (namely, the actual rotation angle of the smartphone) is the included angle between the pointing direction of the smartphone and the vertical line between the smartphone and the display, and $\theta$ may be understood as an angle obtained after combination of the actual azimuth $\psi$ or $\lambda$, between the smartphone and the display and the actual roll angle $\sigma$ or $\omega$ between the smartphone and the display. In other words, the second included angle $\theta$ may be decomposed into the second azimuth and the second roll angle. The second azimuth may be understood as a component of the second included angle $\theta$ in the second direction, and the second roll angle may be understood as a component of the second included angle $\theta$ in the first direction.

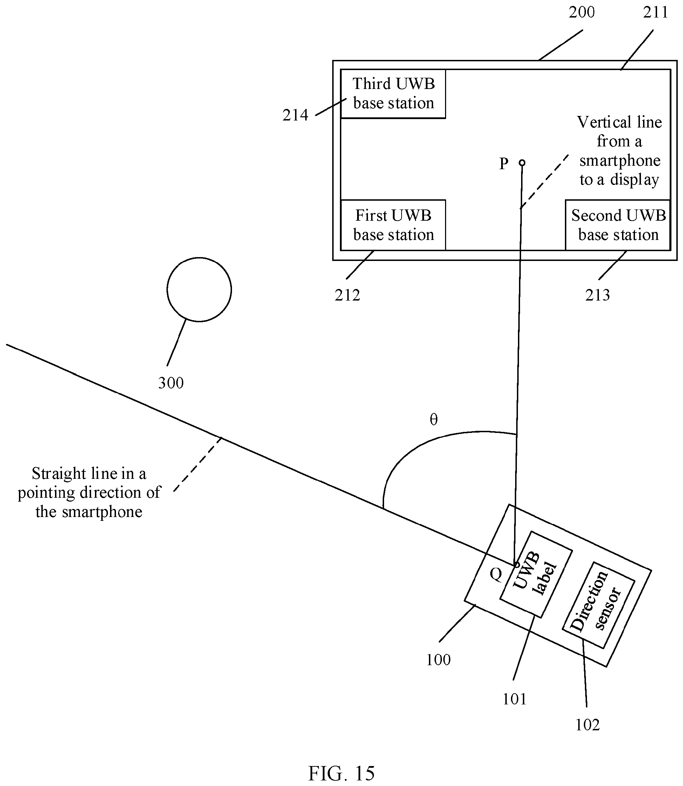

For example, FIG. 15 is a schematic diagram of the second included angle $\theta$ between the straight line in the pointing direction of the smartphone 100 and the vertical line between the smartphone 100 and the display 211.

It should be understood that, in this embodiment of this application, the direction sensor on the smartphone detects direction information in real time, that is, the smartphone may calculate the second included angle $\theta$ in real time.

Optionally, in this embodiment of this application, a positive value and a negative value of the second included angle $\theta$ may be defined. For example, in this embodiment of this application, when the straight line in the pointing direction of the smartphone is located on a left side of the vertical line between the smartphone and the display, the second included angle $\theta$ is a positive value. For example, FIG. 15 shows a case in which the straight line in the pointing direction of the smartphone 100 is located on the left side of the vertical line between the smartphone 100 and the display 211.

When the straight line in the pointing direction of the smartphone is located on a right side of the vertical line between the smartphone and the display, the second included angle $\theta$ is a negative value.

Optionally, the smartphone 100 may further determine, by using the second included angle $\theta$, the actual azimuth $\psi$ or $\lambda$, between the smartphone and the display, and the actual roll angle $\sigma$ or $\omega$ between the smartphone and the display, that is, decompose the second included angle $\theta$ into the actual azimuth $\psi$ or $\lambda$, between the smartphone and the display, and the actual roll angle $\sigma$ or $\omega$ between the smartphone and the display. The azimuth $\psi$ or $\lambda$ may be considered as a component of the second included angle $\theta$ in the second direction, that is, the included angle that is in the second direction (the vertical direction) and that is between the straight line in the pointing direction of the smartphone and the vertical line between the smartphone and the display. The roll angle $\sigma$ or $\omega$ may be considered as a component of the second included angle $\theta$ in the first direction, that is, the included angle that is in the first direction (the horizontal direction) and that is between the straight line in the pointing direction of the smartphone and the vertical line between the smartphone and the display.

By using the foregoing method, the actual azimuth and the actual roll angle of the smartphone are determined.

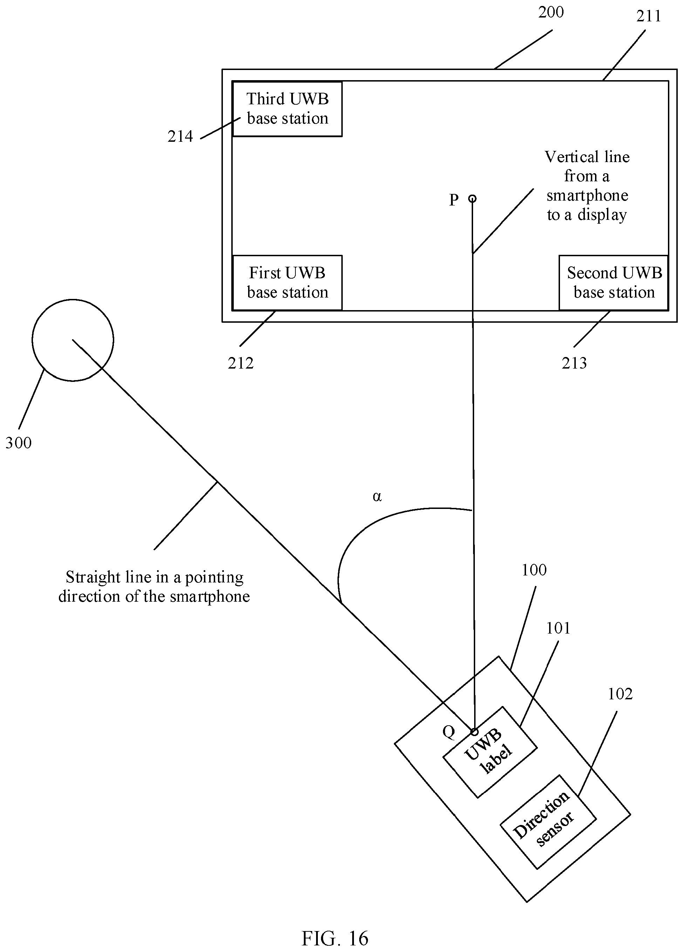

After angle calibration of the smartphone 100 is completed, a value of the first included angle (represented by $\alpha$) may be calculated. FIG. 16 is a schematic diagram of the first included angle $\alpha$. The first included angle $\alpha$ represents an included angle between a connection line between the electronic device 300 and the smartphone 100 and the vertical line between the smartphone 100 and the plane of the display 211. The connection line between the electronic device 300 and the smartphone 100 may be understood as: a straight line with any point (for example, any point on the UWB label on the smartphone 100 or the central location point on the top of the smartphone 100) on the smartphone 100 as a start point of the straight line, where an end point of the straight line is any point on the electronic device 300. In addition, the start point of the connection line between the electronic device 300 and the smartphone 100 is the same as the start point (point Q) of the vertical line between the smartphone 100 and the display 211. In other words, each of the electronic device 300 and the smartphone 100 may be considered as a point, and a connection line between the two points is the connection line between the electronic device 300 and the smartphone 100. In other words, the first included angle $\alpha$ represents an included angle that exists when the smartphone 100 points to the electronic device 300 and that is between the straight line in the pointing direction of the smartphone 100 and the vertical line between the smartphone 100 and the display 211.

The following describes a process of calculating the first included angle $\alpha$.

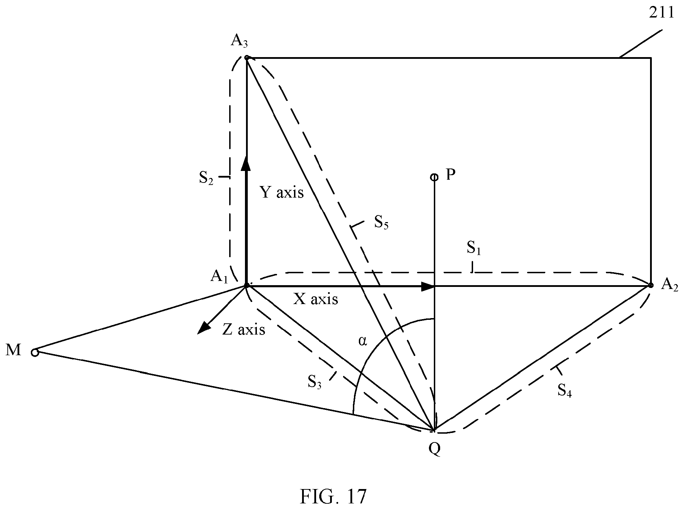

In this embodiment of this application, when angle calibration of the smartphone 100 is performed, location coordinates of the smartphone 100 may be determined. FIG. 17 is a schematic diagram of a relative position relationship between the smartphone, the smart television, and the electronic device. FIG. 17 is a schematic diagram of an X axis, a Y axis, and a Z axis on the display 211 of the smart television. The Z axis is vertical to a surface of the display 211, the X axis and the Y axis are located on a same plane, and the Z axis is vertical to the plane on which the X axis and the Y axis are located.

As shown in FIG. 17, a point $A_1$ represents a location of a first UWB base station 212 on the display 211 (the point

$A_1$ may be any point on the first UWB base station 212), a point $A_2$ represents a location of a second UWB base station 213 on the display 211 (the point $A_2$ may be any point on the second UWB base station 213), a point $A_3$ represents a location of a third UWB base station 214 on the display 211 (the point $A_3$ may be any point on the third UWB base station 214), a point Q represents a relative location of the smartphone 100 in a coordinate system, and the point Q may be any point on the smartphone 100 (for example, any point on a UWB label 101 disposed on the smartphone 100). A point M represents a relative location of the electronic device 300 in the coordinate system, and the point M may be any point on the electronic device 300. A point P represents an intersection point between the display 211 and a vertical line between the smartphone 100 and the display 211, a line segment QP represents a vertical line between the smartphone 100 and the plane of the display 211, and the line segment QP is vertical to the display 211. In this embodiment of this application, location coordinates of the first UWB base station 212 are set to (0, 0, 0).

In the example shown in FIG. 17, $|A_1Q|$ represents a distance between the first UWB base station 212 and the UWB label 101, namely, $S_3$ in FIG. 17; $|A_2Q|$ represents a distance between the second UWB base station 213 and the UWB label 101, namely, $S_4$ in FIG. 17; $|A_3Q|$ represents a distance between the third UWB base station 214 and the UWB label 101, namely, $S_5$ in FIG. 17; $|A_1A_2|$ represents a distance between the first UWB base station 212 and the second UWB base station 213, namely, $S_1$ in FIG. 17; and $|A_1A_3|$ represents a distance between the first UWB base station 212 and the third UWB base station 214, namely, $S_2$ in FIG. 17. In the coordinate system shown in FIG. 17, location coordinates of the point $A_1$ are (0, 0, 0).

In this embodiment of this application, a distance between two UWB base stations and a distance between the UWB base station and the UWB label may be determined according to a UWB ranging principle. First, the UWB ranging principle is briefly described.

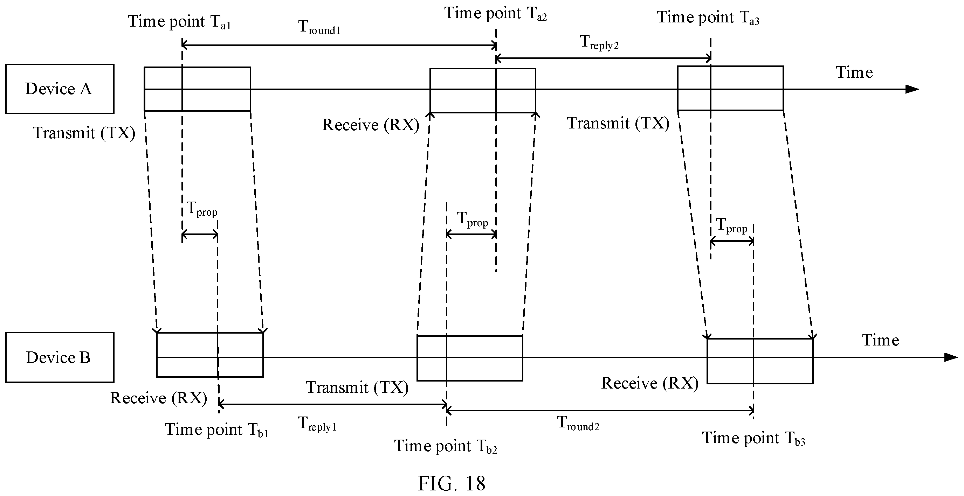

The UWB distance measurement is mainly to measure a distance between two devices by using a time of flight (time of flight, ToF) distance measurement method. In this method, a distance between nodes is measured by using time of flight of a signal between two asynchronous transceivers. FIG. 18 is a schematic diagram of determining a distance between two devices by using a two-way time-of-flight method. As shown in FIG. 18, a device A first sends a data packet to a device B, and records a time point $T_{a1}$ at which the data packet is sent. A time length in which the data packet is transmitted between the device A and the device B is $T_{prop}$. After receiving the data packet, the device B records a time point $T_{b1}$ at which the data packet is received. After waiting for a time length of $T_{reply1}$, the device B sends another data packet to the device A at a time point $T_{b2}$, where a time length in which the data packet is transmitted between the device A and the device B is $T_{prop}$. After receiving the data packet, the device A records a time point $T_{a2}$ at which the data packet is received. Then, after waiting for a time length of $T_{reply2}$, the device A sends another data packet to the device B at a time point $T_{a3}$, where a time length in which the data packet is transmitted between the device A and the device B is $T_{prop}$. After receiving the data packet, the device b records a time point $T_{b3}$ at which the data packet is received. A time length between the time point $T_{a1}$ and the time point $T_{a2}$ is $T_{round1}$, and a time length between the time point $T_{b2}$ and the time point $T_{b3}$ is $T_{round2}$. Therefore, time of flight $\hat{T}_{trop}$ of the data packet may be determined according to the following formula (1):

$$\hat{T}_{trop} = \frac{T_{round1} \times T_{round2} - T_{reply1} \times T_{reply2}}{T_{round1} + T_{round2} + T_{reply1} + T_{reply2}} \quad (1)$$

According to the formula (1), the time of flight $\hat{T}_{trop}$ of the data packet may be calculated, and a distance between the device A and the device B may be obtained by multiplying $\hat{T}_{trop}$ by a speed of light.

The procedure shown in FIG. 5A is a process of determining $S_1$ to $S_5$ by using the UWB ranging principle.

When measuring a distance by using the UWB ranging principle, the smart television 200 controls the first UWB base station 212 on the display 211 to send a first ranging message to the second UWB base station 213. The second UWB base station 213 may send, to the first UWB base station 212 based on the first ranging message, a first response message in response to the first ranging message. The smart television 200 may determine the distance $S_1$ between the first UWB base station 212 and the second UWB base station 213 based on a time difference between the first ranging message and the first response message, and further determine location coordinates of the second UWB base station 213 (namely, the location coordinates of the point $A_2$ in the coordinate system shown in FIG. 17). In the coordinate system shown in FIG. 17, the location coordinates of the point $A_1$ are (0, 0, 0).

The smart television 200 controls the first UWB base station 212 on the display 211 to send a second ranging message to the third UWB base station 214. The third UWB base station 214 may send, to the first UWB base station 212 based on the second ranging message, a second response message in response to the second ranging message. The smart television 200 may determine the distance $S_2$ between the first UWB base station 212 and the third UWB base station 214 based on a time difference between the second ranging message and the second response message, and further determine location coordinates of the third UWB base station 214 (namely, location coordinates of the point $A_3$ in the coordinate system shown in FIG. 17).

The smart television 200 sends the distance $S_2$ between the first UWB base station 212 and the third UWB base station 214, the location coordinates of the third UWB base station 214, the distance $S_1$ between the first UWB base station 212 and the second UWB base station 213, and the location coordinates of the second UWB base station 213 to the smartphone 100.

The smartphone 100 controls the UWB label 101 on the smartphone to send a third ranging message to the first UWB base station 212. The first UWB base station 212 may send, to the UWB label 101 based on the third ranging message, a third response message in response to the third ranging message. The smartphone 100 may determine the distance $S_3$ between the first UWB base station 212 and the UWB label 101 based on a time difference between the third ranging message and the third response message, and further determine location coordinates of the UWB label 101 (namely, location coordinates of the point Q in the coordinate system shown in FIG. 17).

The smartphone 100 controls the UWB label 101 on the smartphone to send a fourth ranging message to the second UWB base station 213. The second UWB base station 213 may send, to the UWB label 101 based on the fourth ranging message, a fourth response message in response to the fourth ranging message. The smartphone 100 may determine the distance $S_4$ between the second UWB base station 213 and the UWB label 101 based on a time difference between the fourth ranging message and the fourth response message.

The smartphone 100 controls the UWB label 101 on the smartphone to send a fifth ranging message to the third UWB base station 214. The third UWB base station 214 may send, to the UWB label 101 based on the fifth ranging message, a fifth response message in response to the fifth ranging message. The smartphone 100 may determine the distance $S_5$ between the third UWB base station 214 and the UWB label 101 based on a time difference between the fifth ranging message and the fifth response message.

After determining $S_1$ to $S_5$, and the relative location coordinates of the first UWB base station 212, the second UWB base station 213, the third UWB base station 214, and the UWB label 101, the smartphone 100 may further determine a relative location relationship between the first UWB base station 212, the second UWB base station 213, the third UWB base station 214, and the UWB label 101.

The foregoing process corresponds to S501a to S507a shown in FIG. 5A.

The following describes the procedure shown in FIG. 6.

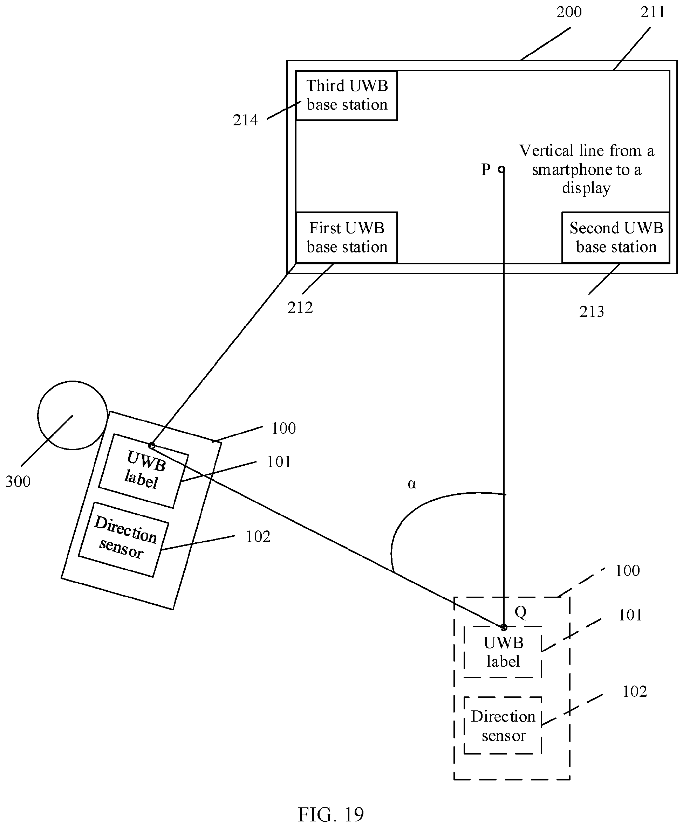

In S601, after an angle of the smartphone 100 is calibrated, a location of the electronic device 300 may be annotated. Specifically, the user may place the smartphone 100 in the location of the electronic device 300. For example, the smartphone 100 is placed near the electronic device 300, or the smartphone 100 is attached to the electronic device 300. In this case, a location of the smartphone 100 may replace the location of the electronic device 300, and location coordinates of the electronic device 300 may be determined by using the UWB label 101 on the smartphone 100. For example, FIG. 19 is a schematic diagram of attaching the smartphone 100 to the electronic device 300 to determine the location of the electronic device 300 and the first included angle $\alpha$. In other words, in the example shown in FIG. 17, the user moves the location of the smartphone 100 from the point Q to the point M, and the smartphone 100 is located at a location of the point M. After the smartphone 100 is located at the point M, the UWB label 101 on the smartphone sends a ranging message to the first UWB base station 212. The first UWB base station 212 may send, to the UWB label 101 based on the ranging message, a response message in response to the ranging message. The smartphone 100 may determine a distance $|MA_1|$ between the first UWB base station 212 and the UWB label 101 based on a time difference between the ranging message and the response message, that is, determine a distance $|MA_1|$ between the point M and the point $A_1$. After the distance $|MA_1|$ between the point M and the point $A_1$ is determined, because the location coordinates of the point $A_1$ are (0, 0, 0), location coordinates of the point M (that is, the electronic device 300) in the coordinate system shown in FIG. 17 may be determined based on a value of $|MA_1|$.

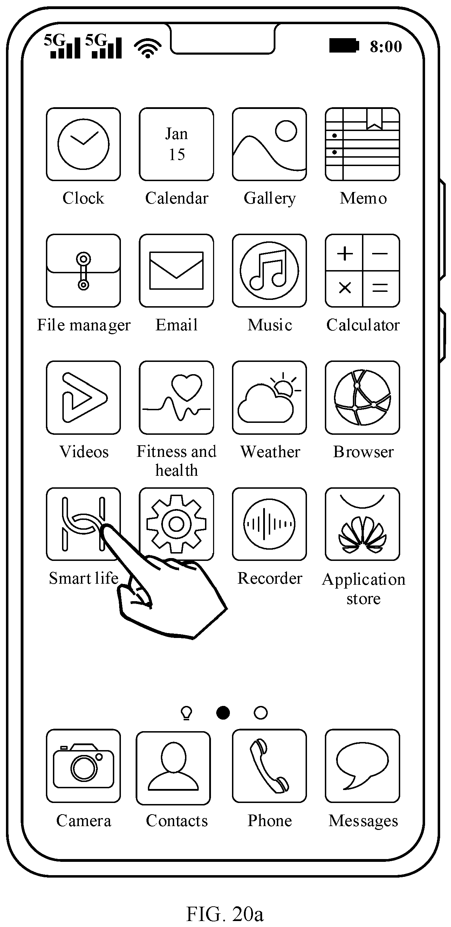

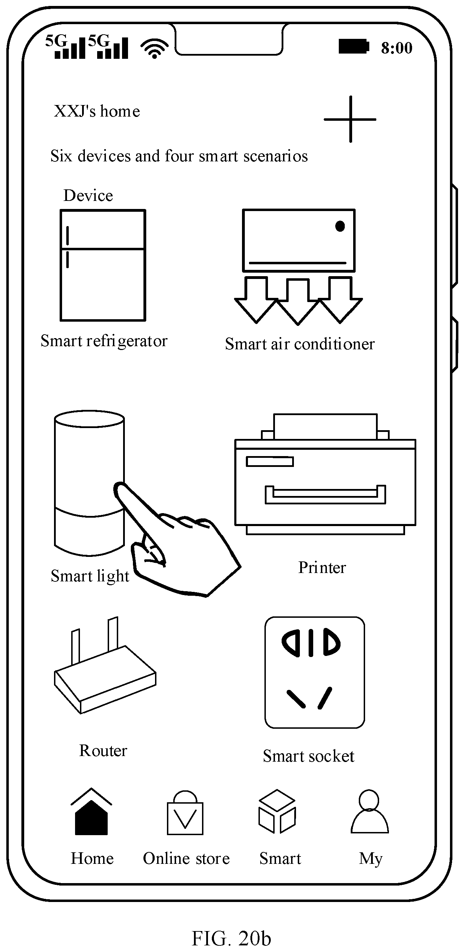

In this embodiment of this application, when the smartphone 100 is placed near the electronic device 300, the smartphone may receive the first input of the user. For example, FIG. 20a and FIG. 20b are a schematic diagram of an operation process of the first input of the user. As shown in FIG. 20a, the user may tap an icon of "Smart life" on the smartphone 100. A displayed interface is shown in FIG. 20b, and icons of various electronic devices in the home are displayed on the smartphone 100. The user may tap an icon of the electronic device 300. In FIG. 20a and FIG. 20b, for example, the electronic device 300 is a smart light. The user taps (that is, performs the first input on) an icon of "Smart light", so that the UWB label 101 on the smartphone is triggered to send a ranging message to the first UWB base station 212. Further, the smartphone 100 may determine the distance $|MA_1|$ between the first UWB base station 212 and the UWB label 101, to determine the location coordinates of the point M in the coordinate system of the electronic device 300 shown in FIG. 17, that is, determine a correspondence between the smart light and a location of the smart light. In other words, in the example shown in FIG. 17, after the location of the smartphone 100 is moved from the point Q to the point M, the smartphone 100 may determine that an electronic device corresponding to the location of the point M is the smart light. Further, the smartphone 100 may further obtain related information of the smart light. For example, when the user taps the icon of "Smart light" on the smartphone 100, the smartphone 100 may obtain the related information (or may also be referred to as annotation information) of the smart light. The related information of the smart light may include one or more of a media access control (media access control, MAC) address, an internet protocol (internet protocol, IP) address, a sequence number (sequence number, SN), or a device identifier (identification, ID) of the smart light. The MAC address, the IP address, the SN, or the device ID of the smart light uniquely correspond to the smart light. When the user annotates the electronic device 300 by using the smartphone 100, the smartphone 100 may determine a correspondence between related information of the electronic device 300 and the location of the electronic device 300, that is, determine a correspondence between the location coordinates of the point M in FIG. 17 and the related information of the smart light. The smartphone 100 may store the correspondence.

The following describes a process in which the smartphone determines the first included angle α in S602.

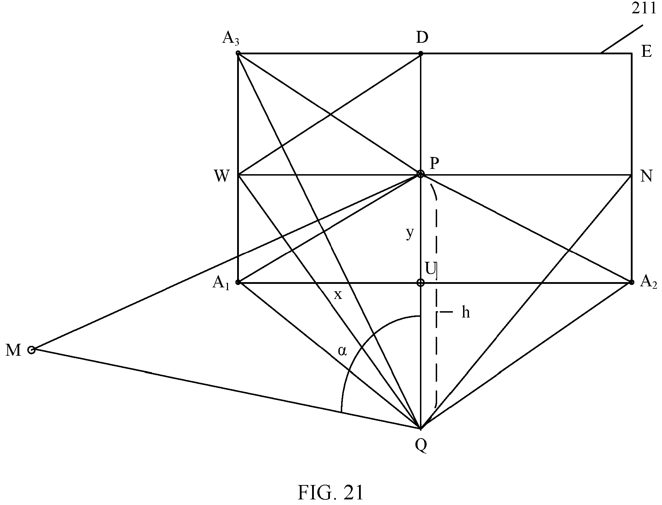

As shown in FIG. 21, meanings represented by points in FIG. 21 are the same as meanings represented by points in FIG. 17. In FIG. 21, after a distance $|MQ|$ between the point M and the point Q is determined, when the first included angle α is determined, a length of the line segment QP and a length of the line segment MP further need to be determined. In this embodiment of this application, in the example shown in FIG. 21, the point P represents the intersection point between the display 211 and the vertical line between the smartphone 100 and the display 211, the line segment QP represents the vertical line between the smartphone 100 and the plane of the display 211, the line segment QP is vertical to the display 211, and the length of the line segment QP is represented by h. An intersection point between the left edge of the display 211 and a vertical line from the point P to the left edge of the display 211 is W, and a line segment PW is vertical to a line segment $A_3A_1$. An intersection point between the right edge of the display 211 and a vertical line from the point P to the right edge of the display 211 is N, and a line segment PN is vertical to a line segment $A_2E$. A vertical line from the point P to the upper edge of the display 211 (namely, a line segment $A_3E$) is made. An intersection point between the upper edge of the display 211 and the vertical line from the point P to the upper edge of the display 211 is a point D, and a line segment PD is vertical to the line segment $A_3E$. A triangle $A_3PQ$ is a right triangle, and □$A_3PQ$ is a right angle. The point W and the point D are connected to form a line segment WD, a triangle WPD is a right triangle, and the □WPD is a right angle. A triangle WPQ is a right triangle, and □WPQ is a right angle. A triangle NPQ is a right triangle, and □NPQ is a right angle. $A_1$ and P are connected to make an auxiliary line, and $A_2$ and P are connected to make an auxiliary line. A triangle $A_1PU$ is a right triangle, and □$A_1UP$ is a right angle. A triangle $A_1PQ$ is a right triangle, and □$A_1PQ$ is a right angle. A triangle $A_2PU$ is a right triangle, and □$A_2UP$ is a right angle. A triangle $A_2PQ$ is a right triangle, and □$A_2PQ$ is a right angle. A quadrilateral $WPUA_1$ is a rectangle, and A quadrilateral $NPUA_2$ is a rectangle. A quadrilateral $WPDA_3$ is a rectangle. A length of the line segment WD is equal to a length of a line segment $A_3P$.

The following formulas are involved in the example shown in FIG. 21:

$$x^2 + y^2 = \left|A_1Q\right|^2 - h^2 \quad (2)$$

$$x^2 + (\left|A_1A_3\right| - y)^2 = \left|A_3Q\right|^2 - h^2 \quad (3)$$

$$y^2 + (\left|A_1A_2\right| - x)^2 = \left|A_2Q\right|^2 - h^2 \quad (4)$$

The formula (4) is subtracted from the formula (2) to obtain a formula (5):

$$x^2 - (\left|A_1A_2\right| - x)^2 = \left|A_1Q\right|^2 - \left|A_2Q\right|^2 \quad (5)$$

The formula (5) is simplified to obtain a formula (6):

$$x = \frac{\left|A_1Q\right|^2 - \left|A_2Q\right|^2 + \left|A_1A_2\right|^2}{2 \times \left|A_1A_2\right|} \quad (6)$$

The formula (3) is subtracted from the formula (2) to obtain a formula (7):

$$y^2 - (\left|A_1A_3\right| - y)^2 = \left|A_1Q\right|^2 - \left|A_3Q\right|^2 \quad (7)$$

The formula (7) is simplified to obtain a formula (8):

$$y = \frac{|A_1Q|^2 - |A_3Q|^2 + |A_1A_3|^2}{2 \times |A_1A_3|} \quad (8)$$

In this way, values of x and y are obtained.

After the values of x and y are calculated, because the location coordinates of the point $A_1$ are (0, 0, 0), location coordinates of a point U may be determined based on the value of x. After the location coordinates of the point U are determined, because the triangle $A_1$UP is a right triangle, and $A_1$UP is a right angle, location coordinates of the point P may be determined based on the location coordinates of the point U and the value of y.

After the location coordinates of the point P are determined, a distance |PQ| between the point P and the point Q may be determined, and a length value of |PQ| is equal to h.

After the location coordinates of the point P are determined, because the location coordinates of the point M are determined, a distance |PM| between the point P and the point M may be determined.

When lengths of three sides of the triangle PMQ are known, a value of the first included angle $\alpha$ may be determined.

In the triangle PMQ, a formula (9) is involved.

$$\cos\alpha = \frac{|MQ|^2 + |PQ|^2 - |MP|^2}{2 \times |MQ| \times |PQ|} \quad (9)$$

In this case, the value of the first included angle $\alpha$ may be determined, as shown in a formula (10):

$$\alpha = \arccos(\frac{|MQ|^2 + |PQ|^2 - |MP|^2}{2 \times |MQ| \times |PQ|}) \quad (10)$$

After the value of the first included angle $\alpha$ is calculated, annotation of the electronic device 300 is completed, that is, a relative location of the electronic device 300 relative to the smart television 200 is determined. The first included angle $\alpha$ is an angle obtained by rotating the line segment QP counterclockwise to a location of the line segment QM.

Optionally, in this embodiment of this application, a positive value and a negative value of the first included angle $\alpha$ may be defined. For example, in this embodiment of this application:

When the electronic device 300 is located at a left location of the smartphone 100, the first included angle $\alpha$ is a positive value; or
when the electronic device 300 is located at a right location of the smartphone 100, the first included angle $\alpha$ is a negative value.

For example, in the example shown in FIG. 21, if the electronic device 300 (the point M) is located on a left side of the smartphone 100 (the point Q), the value of the first included angle $\alpha$ may be a positive value. For example, $\alpha$ may be +75° (also referred to as +75 degrees).

After annotation of the electronic device 300 is completed, the user removes the smartphone 100 from the location of the electronic device 300. When the user places the smartphone 100 in a location at which the angle of the smartphone 100 is calibrated, for example, in the location shown in FIG. 12, when the user needs to control the electronic device 300 by using the smartphone 100, the user may rotate the smartphone 100. When the user rotates the smartphone 100, the direction sensor on the smartphone 100 may measure, in real time, the actual azimuth angle $\psi$ or $\lambda$ between the smartphone and the display, and the actual roll angle $\sigma$ or $\omega$ between the smartphone and the display. Further, the second included angle $\theta$ may be further determined based on the azimuth $\psi$ or $\lambda$ and the roll angle $\sigma$ or $\omega$.

In other words, after annotation of the electronic device 300 is completed, and the smartphone 100 is removed from the location of the electronic device 300, when the user rotates the smartphone 100, and the direction sensor on the smartphone detects that the second included angle $\theta$ changes, the smartphone 100 may determine that a comparison between the second included angle $\theta$ and the first included angle $\alpha$ needs to be performed, and determine whether the smartphone 100 points to and controls the electronic device 300.

The following describes a process of determining, based on the second included angle $\theta$ and the first included angle $\alpha$, whether the smartphone pops up the control window for the electronic device in S603. Specifically, there are two possible implementations.

Implementation 1: The smartphone determines whether the difference between the second included angle θ and the first included angle α falls within the preset range.

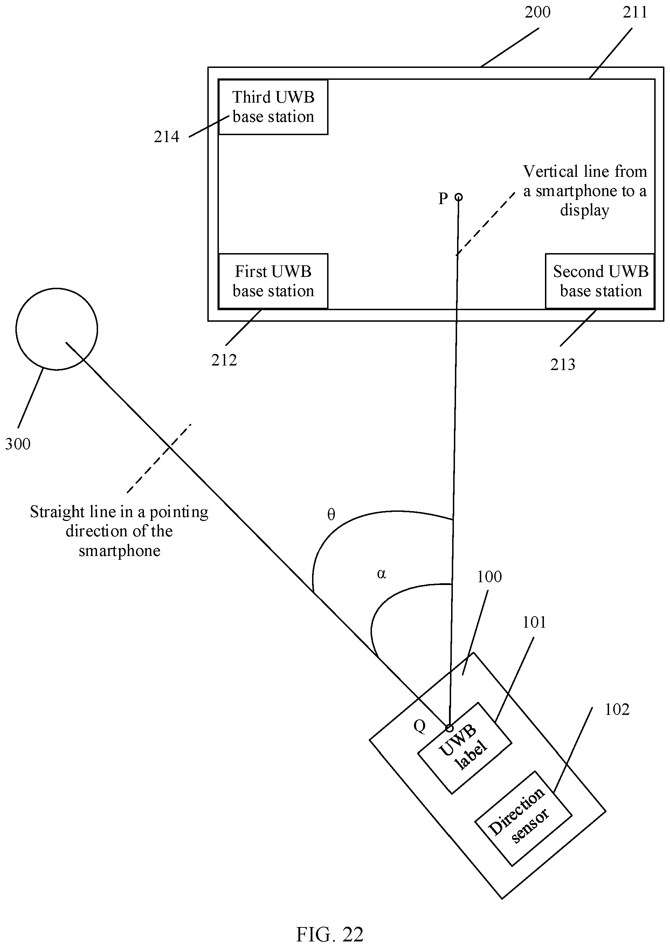

If the difference between the second included angle θ and the first included angle α falls within the preset difference range, for example, the difference between the first included angle and the second included angle θ is 0 degrees, it indicates that the smartphone points to the electronic device, the smartphone pops up the control window for the electronic device, and the smartphone can control the electronic device. For example, FIG. 22 is a schematic diagram in which the second included angle θ is the same as the first included angle α. In a scenario shown in FIG. 22, the smartphone 100 points to and can control the electronic device 300.

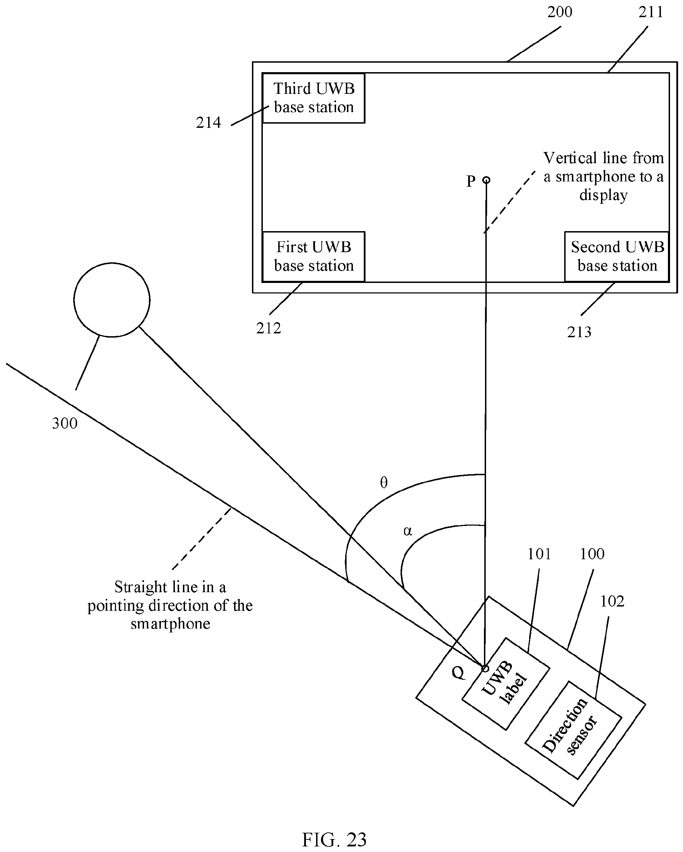

If the difference between the second included angle θ and the first included angle α does not fall within the preset difference range, for example, the difference between the first included angle and the second included angle θ is +7°, and the preset difference range is [-5°, +5°] , it indicates that the smartphone does not point to the electronic device, the smartphone does not pop up the control window for the electronic device, and the smartphone cannot control the electronic device. For example, FIG. 23 is a schematic diagram in which the difference between the second included angle θ and the first included angle α does not fall within the preset difference range, and the smartphone 100 does not point to the electronic device 300.

Implementation 2: After determining the value of the first included angle α, the smartphone 100 further determines the azimuth component (represented by β) and the roll angle component (represented by δ) of the first included angle α based on the value of the first included angle α, where the azimuth component of the first included angle α may also be referred to as the first azimuth, and the roll angle component of the first included angle α may also be referred to as the first roll angle. The roll angle component δ represents an included angle, existing when the smartphone 100 points to the electronic device 300, that is in the first direction (the horizontal direction) and that is between the straight line in the pointing direction of the smartphone 100 and the vertical line between the smartphone 100 and the display 211. The azimuth component β represents an included angle, existing when the smartphone 100 points to the electronic device 300, that is in the second direction (the vertical direction) and that is between the straight line in the pointing direction of the smartphone 100 and the vertical line between the smartphone 100 and the display 211.

When the user needs to control the electronic device 300 by using the smartphone 100, the direction sensor on the smartphone 100 detects, in real time, the values of the azimuth angle ψ or λ and the roll angle σ or ω. The smartphone 100 may determine, based on the values of the actual azimuth ψ or λ and the actual roll angle σ or ω, a value of the azimuth component β, and a value of the roll angle component δ, whether the smartphone points to the electronic device. In Implementation 2, there are specifically the following four cases.

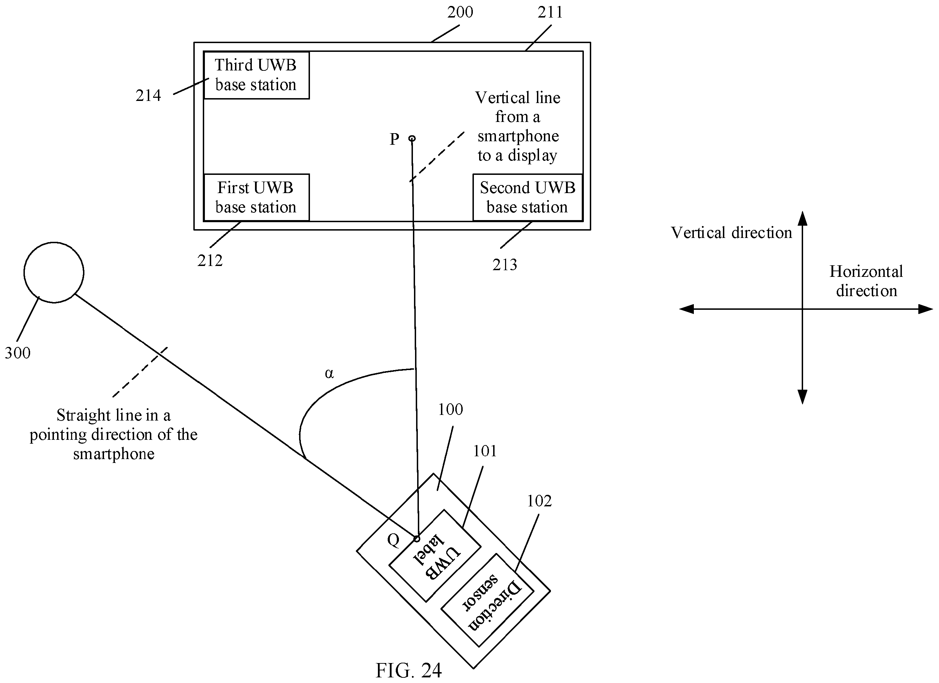

Case 1: If a difference between the value of the azimuth ψ or λ and the value of the azimuth component β falls within a preset first difference range, for example, the preset first difference range is [-3°, +3°], and the value of the azimuth ψ or λ is equal to the value of the azimuth component β, and a difference between the value of the roll angle σ or ω and the value of the roll angle component δ also falls within a preset second difference range, for example, the preset second difference range is [-2°, + 2°], and the value of the roll angle δ is equal to the value of the roll angle component σ or ω, it indicates that the smartphone 100 points to the electronic device 300, the smartphone 100 pops up the control window for the electronic device 300, and the smartphone 100 can control the electronic device 300. In other words, when the smartphone 100 points to the location of the electronic device 300, it indicates that the smartphone 100 points to the electronic device 300, and the smartphone 100 can control the electronic device 300. The smartphone 100 obtains previously stored related information corresponding to the location of the electronic device 300. For example, the related information includes one or more of a MAC address, an IP address, an SN, a device ID, or the like of the electronic device 300, where the MAC address, the IP address, the SN, the device ID, or the like of the electronic device 300 uniquely correspond to the electronic device 300. Based on the information, the user may send corresponding control information to the electronic device 300 by using the smartphone 100, to control the electronic device 300. For example, FIG. 24 is a schematic diagram in which the smartphone 100 points to the electronic device 300 in both the vertical direction and the horizontal direction.

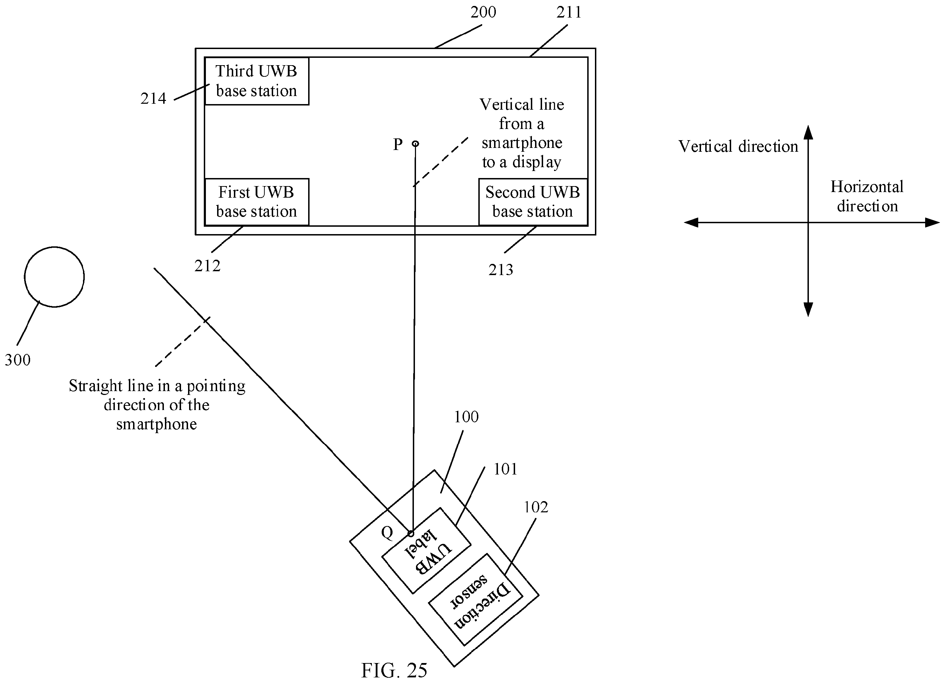

Case 2: If a difference between the value of the azimuth ψ or λ and the value of the azimuth component β falls within a preset first difference range, and a difference between the value of the roll angle σ or ω and the value of the roll angle component δ does not fall within a preset second difference range, for example, the difference between the value of the roll angle σ or ω and the value of the roll angle component δ is +5°, and the preset second difference range is [-2°, +2°] , it is determined that the smartphone points to the electronic device 300 in the vertical direction, but does not point to the electronic device 300 in the horizontal direction, the smartphone 100 does not pop up the control window for the electronic device 300, and the smartphone 100 cannot control the electronic device 300. For example, FIG. 25 is a schematic diagram in which the smartphone 100 points to the electronic device 300 in the vertical direction but does not point to the electronic device 300 in the horizontal direction.

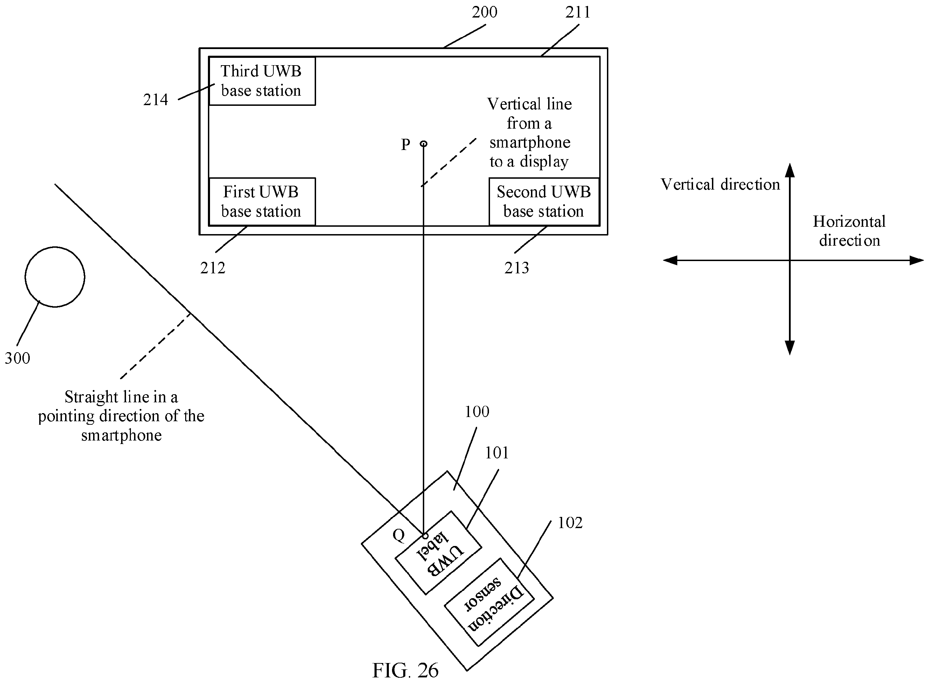

Case 3: If a difference between the value of the azimuth ψ or λ and the value of the azimuth component β does not fall within a preset first difference range, for example, if the difference between the value of the azimuth ψ or λ and the value of the azimuth component β is - 4°, and the preset first difference range is [-3°, +3°], the difference between the value of the azimuth ψ or λ and the value of the azimuth component β does not fall within the preset first difference range, and a difference between the value of the roll angle σ or ω and the value of the roll angle component δ falls within a preset second difference range, it is determined that the smartphone does not point to the electronic device 300 in the vertical direction, but points to the electronic device 300 in the horizontal direction, the smartphone 100 does not display the control window for the electronic device 300, and the smartphone 100 cannot control the electronic device 300. For example, FIG. 26 is a schematic diagram in which the smartphone 100 does not point to the electronic device 300 in the vertical direction but points to the electronic device 300 in the horizontal direction.

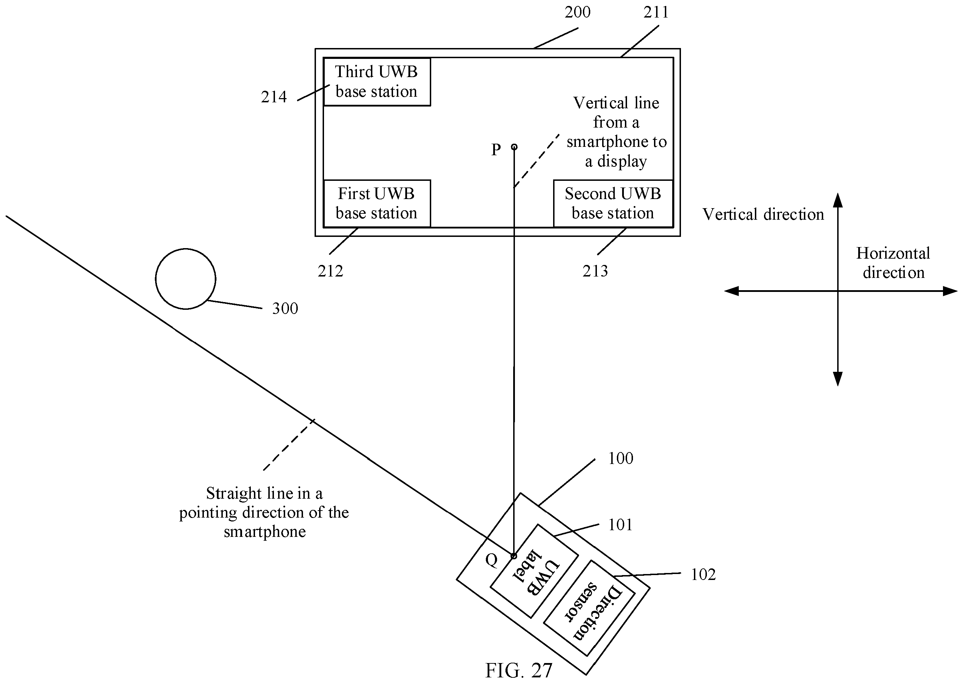

Case 4: If a difference between the value of the azimuth ψ or λ and the value of the azimuth component β does not fall within a preset first difference range, for example, if the difference between the value of the azimuth ψ or λ and the value of the azimuth component β is - 4°, and the preset first difference range is [-3°, +3°], the difference between the value of the azimuth ψ or λ and the value of the azimuth component β does not fall within the preset first difference range, and a difference between the value of the roll angle σ or ω and the value of the roll angle component δ does not fall within a preset second difference range, for example, the difference between the value of the roll angle σ or ω and the value of the roll angle component δ is +5°, and the preset second difference range is [-2°, +2°], it is determined that the smartphone does not point to the electronic device 300 in neither the vertical direction nor the horizontal direction, the smartphone 100 does not pop up the control window for the electronic device 300, and the smartphone 100 cannot control the electronic device 300. For example, FIG. 27 is a schematic diagram in which the smartphone 100 does not point to the electronic device 300 in neither the vertical direction nor the horizontal direction.

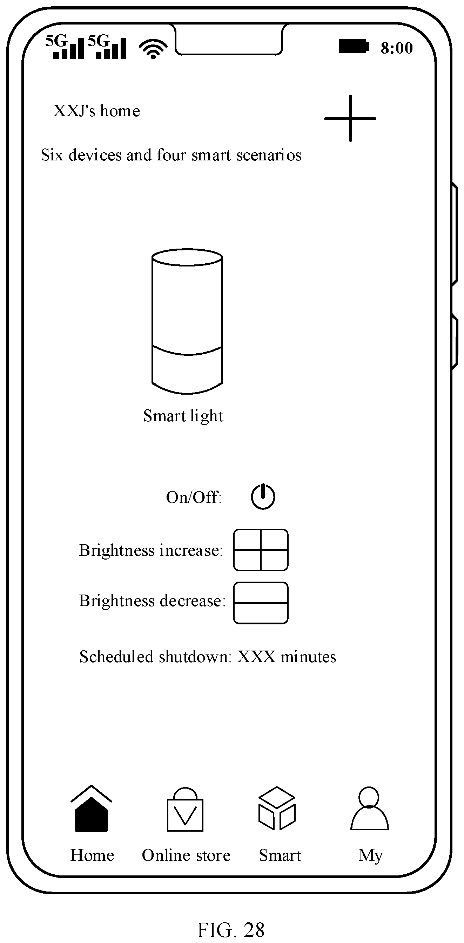

Optionally, in this embodiment of this application, when the smartphone 100 determines to point to the electronic device 300, the smartphone 100 pops up the control window for the electronic device 300. For example, FIG. 28 shows a control interface (which may also be referred to as a control window) displayed by the smartphone 100 to the user when the smartphone 100 points to the electronic device 300. The control interface is used to receive an input or an operation of the user for controlling the electronic device 300. In the example shown in FIG. 28, assuming that the electronic device 300 is a smart light, the control interface displayed by the smartphone 100 to the user may include an on/off control icon, a brightness control icon, a timing off icon, and the like of the smart light. The user controls the smart light on the smartphone 100 by using a corresponding control icon based on a requirement of the user.

Optionally, in this embodiment of this application, when the smartphone 100 points to the electronic device 300 and is used to control the electronic device 300, the electronic device 300 may further send, to the smartphone 100, information about a capability supported by the smartphone 100, and a corresponding control icon is displayed on the smartphone 100. For example, when the electronic device 300 is a smart refrigerator, capability information of the smart refrigerator may include: temperature control of different storage rooms of the smart refrigerator, on/off of the smart refrigerator, and the like. The user controls the electronic device 300 on the smartphone 100 by using a corresponding control icon based on a requirement of the user.

Optionally, in this embodiment of this application, within preset duration elapsing after the smartphone 100 pops up the control window for the electronic device 300, the control window is continuously displayed on the smartphone 100. Even if the user moves or rotates the smartphone 100, for example, moves the smartphone 100 from a current location to another location, or rotates the smartphone 100 from a current pointing direction to another pointing direction, the control window is continuously displayed on the smartphone 100. This can facilitate use by the user and improve user experience.

If the user does not perform any operation or input on the control window within the preset duration (for example, 5s), that is, the smartphone does not receive any input or operation of the user within the preset duration, the smartphone 100 does not display the control window.

If the smartphone receives an input or operation of the user within the preset duration, the smartphone 100 closes the control window after the input or operation of the user ends.

It should be understood that, in this embodiment of this application, a time length of the preset duration is not limited. The time length of the preset duration may be set by the user, or may be preset by the smartphone before delivery. This is not limited in this embodiment of this application.

The electronic device 300 is used as an example to describe the process of annotating the electronic device 300 and the process of pointing to and controlling the electronic device 300 by using the smartphone 100. In this embodiment of this application, for another electronic device on which no UWB label or UWB base station is installed, a process of annotating a location of the electronic device and a process of pointing to and controlling the electronic device by using the smartphone 100 are similar to the foregoing descriptions of the electronic device 300. For related descriptions, refer to the foregoing descriptions of the electronic device 300. For brevity, details are not described herein again.

According to the method for quickly popping up a control window for an electronic device provided in this application, a relative location of an electronic device on which no UWB chip is installed in the home is annotated, so that the location of the electronic device on which no UWB chip is installed can be located. Then, when it is determined that an included angle of a mobile device (for example, a smartphone) pointing to the electronic device meets a specific condition, it may be determined that the mobile device points to the electronic device on which no UWB chip is installed, so that the electronic device on which no UWB chip is installed is controlled by using the mobile device. This improves user experience.

It should be further understood that the foregoing descriptions are merely intended to help a person skilled in the art better understand embodiments of this application, but are not intended to limit the scope of embodiments of this application.

It should be further understood that the foregoing descriptions of embodiments of this application emphasize differences between the embodiments. For same or similar parts that are not mentioned, refer to embodiments. For brevity, details are not described herein again.

It should be further understood that a value of a sequence number of each of the foregoing processes does not mean an order of an execution sequence. The execution sequence of each process should be determined based on a function and internal logic of each process, and should not be construed as any limitation on the implementation processes of embodiments of this application.

It should be further understood that division into the manners, cases, categories, and embodiments in embodiments of this application is merely intended for ease of description, and should not constitute a particular limitation. The features in the manners, categories, cases, and embodiments may be combined without contradiction.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

With reference to FIG. 1 to FIG. 28, the foregoing describes embodiments of the method for quickly popping up a control window for an electronic device according to embodiments of this application. The following describes a mobile device, an annotation device, and a system for annotating an electronic device according to embodiments of this application.

In this embodiment, the mobile device and the annotation device may be divided into functional modules according to the foregoing method. For example, each functional module may be obtained through division based on a corresponding function, or two or more functions may be integrated into one processing module. The integrated module may be implemented in a form of hardware. It should be noted that, in this embodiment, module division is an example, and is merely logical function division. During actual implementation, another division manner may be used.

It should be noted that related content of all steps in the foregoing method embodiment may be cited in function descriptions of corresponding functional modules. Details are not described herein again.

The mobile device includes but is not limited to a terminal device used by a user, for example, a smartphone, an air mouse, a PDA, a smart remote control, various tablets, or a portable mobile device with another operating system.

The annotation device and the mobile device provided in this embodiment are configured to perform the foregoing method for quickly popping up a control window for an electronic device, and therefore can achieve the same effect as the foregoing implementation method. When an integrated unit is used, the annotation device and the mobile device each may include a processing module, a storage module, and a communication module. The processing module may be configured to control and manage an action of the annotation device or the mobile device. For example, the method may be configured to support the annotation device or the mobile device in performing steps performed by the processing unit. The storage module may be configured to support in storing program code, data, and the like. The communication module may be configured for communication between the annotation device or the mobile device and another device (for example, an electronic device).

For example, a schematic diagram of a hardware structure of the mobile device provided in this application may be shown in FIG. 2, and a schematic diagram of a hardware structure of the annotation device may be shown in FIG. 3.

An embodiment of this application further provides a system for annotating an electronic device. The system includes the electronic device, the mobile device, and the annotation device in the foregoing method examples.

An embodiment of this application further provides a computer-readable storage medium, configured to store computer program code. The computer program includes an instruction used to perform the method for quickly popping up a control window for an electronic device provided in embodiments of this application. The readable medium may be a read-only memory (read-only memory, ROM) or a random access memory (random access memory, RAM). This is not limited in this embodiment of this application.

This application further provides a computer program product. The computer program product includes instructions. When the instructions are executed, an annotation device and a mobile device separately perform corresponding operations in the foregoing method.

An embodiment of this application further provides a chip located in a communication apparatus. The chip includes a processing unit and a communication unit. The processing unit may be, for example, a processor, and the communication unit may be, for example, an input/output interface, a pin, or a circuit. The processing unit may execute computer instructions, so that the communication apparatus performs the method for quickly popping up a control window for an electronic device provided in the foregoing embodiments of this application.

Optionally, the computer instructions are stored in a storage unit.

Optionally, the storage unit is a storage unit in the chip, for example, a register or a cache; or the storage unit may be a storage unit in the terminal but outside the chip, for example, a read-only memory (read-only memory, ROM), another type of static storage device capable of storing static information and instructions, or a random access memory (random access memory, RAM). The processor mentioned above may be a CPU, a microprocessor, an ASIC, or one or more integrated circuits configured to control program execution of the foregoing method for quickly popping up a control window for an electronic device. The processing unit and the storage unit may be decoupled, are separately disposed on different physical devices, and are connected in a wired or wireless manner to implement functions of the processing unit and the storage unit, to support the system chip in implementing various functions in the foregoing embodiments. Alternatively, the processing unit and the memory may be coupled to a same device.

In addition, an embodiment of this application further provides an apparatus. The apparatus may be specifically a chip, a component, or a module. The apparatus may include a processor and a memory that are connected. The memory is configured to store computer-executable instructions, and when the apparatus runs, the processor may execute the computer-executable instructions stored in the memory, so that the chip performs the method for quickly popping up a control window for an electronic device in the foregoing embodiment.

The mobile device, the annotation device, the system for annotating an electronic device, the computer storage medium, the computer program product, or the chip provided in embodiments are all configured to perform the corresponding method provided above. Therefore, for beneficial effect that can be achieved, refer to beneficial effect in the corresponding method provided above. Details are not described herein again.

From the descriptions of the foregoing implementations, a person skilled in the art may understand that, for convenience and brevity of description, the division of the foregoing functional modules is merely used as an example for description. In actual application, the foregoing functions can be allocated to different functional modules and implemented according to a requirement, that is, an inner structure of an apparatus is divided into different functional modules to implement all or some of the functions described above.

It should be understood that the apparatus and method disclosed in the several embodiments provided in this application may be implemented in other manners. The apparatus embodiment described above is merely an example. For example, division of modules or units is merely logical function division. During actual implementation, there may be another division manner. For example, a plurality of units or components may be combined or may be integrated into another apparatus. In addition, some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate. A component displayed as a unit may be a physical unit or a plurality of physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, or may exist alone physically, or some units may be integrated into one unit, and some units exist alone physically. The integrated unit may be implemented in a form of hardware, or may be implemented in a form of a software function unit.

When the integrated unit is implemented in a form of a software function unit and sold or used as an independent product, the integrated unit may be stored in a readable storage medium. Based on such an understanding, all or some of the technical solutions of embodiments of this application may be implemented in a form of a software product. The software product is stored in a storage medium. The software product includes several instructions for enabling a device (which may be a single-chip microcomputer, a chip, or the like) or a processor (processor) to perform all or some of the steps of the methods in embodiments of this application. The foregoing storage medium includes any medium that can store program code, for example, a USB flash drive, a removable hard disk, a read only memory (read only memory, ROM), a random access memory (random access memory, RAM), a magnetic disk, or an optical disc.

It should be noted that all or a part (for example, a part or all of any feature) of the foregoing embodiments provided in this application may be used in any combination or in combination with each other.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

**Claims**

1. A mobile device (100), wherein the mobile device (100) communicates wirelessly with an annotation device (200) and a to-be-annotated electronic device (300),

• wherein the mobile device (100) comprises:

- a processor (110);
- a memory;
- an ultra-wideband, UWB, label (170);
- a direction sensor; and
- a computer program,

• wherein the annotation device (200) comprises at least two UWB base stations and a display (211, 280), the at least two UWB base stations comprise a first UWB base station,
• wherein the electronic device (300) does not comprise a UWB base station,
• wherein the computer program is stored in the memory, and when the computer program is executed by the processor (110), the mobile device (100) is caused to perform the following steps:

• before the mobile device (100) moves to a location of the electronic device (300):

○ when the mobile device (100) moves to a first location, and when the pointing direction of the mobile device (100) is vertical to the display (211, 280) of the annotation device, obtaining (S501b) a first initial azimuth angle and a first initial roll angle of the mobile device (100) based on the direction sensor, thereby calibrating the pointing direction of the mobile device (100),

- wherein an azimuth angle represents an included angle between a pointing direction of the mobile device (100) and a vertical line from the mobile device (100) to the annotation device (200) in a second direction, and a roll angle represents an included angle between the pointing direction of the mobile device (100) and the vertical line from the mobile device (100) to the annotation device (200) in a first direction, the first direction being perpendicular to the second direction;

○ after having calibrated the mobile device (100), starting to continuously and in real-time perform the following method steps a.) - b.):

a.) when the mobile device (100) moves to a second location, obtaining (S502b) a real-time azimuth angle and a real-time roll angle of the mobile device (100) based on the direction sensor; and
b.) obtaining (S502b, S503b, S504b) a second included angle θ between a current pointing direction of the mobile device (100) and the vertical line between the mobile device (100) and the display (211, 280) based on the real-time roll angle of the mobile device (100), the real-time azimuth angle of the mobile device (100), the first initial azimuth angle of the mobile device (100), and the first initial roll angle of the mobile device (100), wherein the second included angle θ is composed of a second azimuth angle and a second roll angle,

○ obtaining a distance between the first UWB base station and another UWB base station, a distance between the UWB label (170) and each of the at least two UWB base stations, and a location of the UWB label (170), wherein the another UWB base station is a UWB base station other than the first UWB base station in the at least two UWB base stations;
○ obtaining a first included angle α between a pointing direction of the mobile device (100) when the mobile device (100) points to the electronic device (100) and the vertical line between the mobile device (100) and the display (211, 280) based on the distance between the first UWB base station and the another UWB base station, the distance between the UWB label (170) and each of the at least two UWB base stations, and the location of the UWB label (170), and

• after the mobile device (100) has moved to the location of the electronic device (300):

○ receiving (S 410) a first input;
○ recording (S 410) a location of the mobile device (100) in response to the first input, wherein the location of the mobile device (100) is the location of the electronic device (300); and
○ popping up (S420) a first control window for the electronic device (300) when the mobile device (100) moves to another location and points to the electronic device (300), wherein the popping up the first control window for the electronic device (300) when the mobile device (100) moves to another location and points to the electronic device (300) comprises:

- when the mobile device (100) moves to the another location, and a difference between the first included angle α and the second included angle θ falls within a preset first range, determining that the mobile device points to the electronic device (300), and in response thereto, popping up the first control window for the electronic device (300).

2. The mobile device (100) according to claim 1, wherein the mobile device (100) further performs the following steps:

   ∘ displaying the first control window on the mobile device (100) within a preset duration elapsing after the mobile device (100) pops up the first control window for the electronic device (300), wherein the first control window is used to receive a first user input for controlling the electronic device (300); and
   ∘ skipping displaying the first control window if the first user input is not received within the preset duration.

3. The mobile device (100) according to claim 1 or 2, wherein the mobile device (100) communicates wirelessly with the annotation device (200) and the electronic device (300) by using a routing device; and
   the mobile device (100) pops up a second control window for the annotation device (200) after the mobile device (100) points to the annotation device (200).

4. The mobile device (100) according to claim 3, wherein the mobile device (100) further performs the following steps:

   ∘ displaying the second control window on the mobile device (100) within a preset duration elapsing after the mobile device (100) pops up the second control window for the annotation device (200), wherein the second control window is used to receive a second user input for controlling the annotation device (200); and
   ∘ skipping displaying the second control window if the second user input is not received within the preset duration.

5. The mobile device (100) according to any of the preceding claims, wherein the first included angle α is composed of a first azimuth angle and a first roll angle.

6. The mobile device (100) according to claim 5, wherein that the difference between the first included angle α and the second included angle θ falls within the preset first range means that a difference between the first azimuth angle and the second azimuth angle falls within a preset second range, and a difference between the first roll angle and the second roll angle falls within a preset third range..

7. The mobile device (100) according to any of the preceding claims, wherein the obtaining the distance between the first UWB base station and another UWB base station, the distance between the UWB label (170) and each of the at least two UWB base stations, and the location of the UWB label (170) comprises:

   ∘ sending a ranging message by using the UWB label (170);
   ∘ receiving a ranging response message from each of the at least two UWB base stations;
   ∘ obtaining the distance between the UWB label (170) and each of the at least two UWB base stations in response to the ranging response message from each of the at least two UWB base stations;
   ∘ receiving a message from the annotation device (200);
   ∘ obtaining the distance between the first UWB base station and the another UWB base station from the message;
   ∘ selecting a location of the first UWB base station in the at least two UWB base stations as a coordinate origin of a three-dimensional coordinate system; and
   ∘ obtaining location coordinates of another UWB base station in the at least two UWB base stations and location coordinates of the UWB label (170) based on the coordinate origin.

8. The mobile device (100) according to any one of claims 1 to 7,

   wherein the first input is used to select an identifier of an electronic device (300), and the identifier of the electronic device (300) corresponds to a parameter of the electronic device (300);
   wherein the parameter comprises one or more of a media access control MAC address, an internet protocol IP address, a sequence number SN, or a device identifier of the electronic device (300);
   wherein the direction sensor is an inertial measurement unit, IMU; and the IMU is a nine-axis IMU, and the nine-axis IMU comprises an accelerometer sensor, a gyroscope sensor, and a magnetic sensor; or the IMU is a six-axis IMU, and the six-axis IMU comprises an accelerometer sensor and a gyroscope sensor;
   wherein the first direction is a horizontal direction, and the second direction is a vertical direction; or the first direction is a vertical direction, and the second direction is a horizontal direction; or,

wherein the mobile device (100) comprises a smartphone (100) and an air mouse.

9. A method performed by a mobile device (100),

• wherein the mobile device (100) comprises:

- a processor (110);
- a memory;
- an ultra-wideband, UWB, label (170);
- a direction sensor; and
- a computer program,

◦ wherein the mobile device (100) communicates wirelessly with an annotation device (200) and a to-be-annotated electronic device (300),

◦ wherein the annotation device (200) comprises at least two UWB base stations and a display (211, 280), the at least two UWB base stations comprise a first UWB base station,

◦ wherein the electronic device (300) does not comprise a UWB base station,

◦ wherein the computer program is stored in the memory, and when the computer program is executed by the processor (110), the following method steps are performed by the mobile device (100):

• before the mobile device (100) moves to a location of the electronic device (300):

◦ when the mobile device (100) moves to a first location, and when the pointing direction of the mobile device (100) is vertical to the display (211, 280) of the annotation device, obtaining (S501b) a first initial azimuth angle and a first initial roll angle of the mobile device (100) based on the direction sensor, thereby calibrating the pointing direction of the mobile device (100),

- wherein an azimuth angle represents an included angle between a pointing direction of the mobile device (100) and a vertical line from the mobile device (100) to the annotation device (200) in a second direction, and a roll angle represents an included angle between the pointing direction of the mobile device (100) and the vertical line from the mobile device (100) to the annotation device (200) in a first direction, the first direction being perpendicular to the second direction;

◦ after having calibrated the mobile device (100), starting to continuously and in real-time perform the following method steps a.) - b.):

a.) when the mobile device (100) moves to a second location, obtaining (S502b) a real-time azimuth angle and a real-time roll angle of the mobile device (100) based on the direction sensor; and

b.) obtaining (S502b, S503b, S504b) a second included angle θ between a current pointing direction of the mobile device (100) and the vertical line between the mobile device (100) and the display (211, 280) based on the real-time roll angle of the mobile device (100), the real-time azimuth angle of the mobile device (100), the first initial azimuth angle of the mobile device (100), and the first initial roll angle of the mobile device (100), wherein the second included angle θ is composed of a second azimuth angle and a second roll angle,

◦ obtaining a distance between the first UWB base station and another UWB base station, a distance between the UWB label (170) and each of the at least two UWB base stations, and a location of the UWB label (170), wherein the another UWB base station is a UWB base station other than the first UWB base station in the at least two UWB base stations;

◦ obtaining a first included angle α between a pointing direction of the mobile device (100) when the mobile device (100) points to the electronic device (100) and the vertical line between the mobile device (100) and the display (211, 280) based on the distance between the first UWB base station and the another UWB base station, the distance between the UWB label (170) and each of the at least two UWB base stations, and the location of the UWB label (170), and

• after the mobile device (100) has moved to the location of the electronic device (300):

○ receiving (S 410) a first input;
○ recording (S 410) a location of the mobile device (100) in response to the first input, wherein the location of the mobile device (100) is the location of the electronic device (300); and
○ popping up (S420) a first control window for the electronic device (300) when the mobile device (100) moves to another location and points to the electronic device (300), wherein the popping up the first control window for the electronic device (300) when the mobile device (100) moves to another location and points to the electronic device (300) comprises:

- when the mobile device (100) moves to the another location, and a difference between the first included angle $\alpha$ and the second included angle $\theta$ falls within a preset first range, determining that the mobile device points to the electronic device (300), and in response thereto, popping up the first control window for the electronic device (300).

**Patentansprüche**

1. Mobile Vorrichtung (100), wobei die mobile Vorrichtung (100) drahtlos mit einer Annotationsvorrichtung (200) und einer zu annotierenden elektronischen Vorrichtung (300) kommuniziert,

• wobei die mobile Vorrichtung (100) Folgendes umfasst:

- einen Prozessor (110);
- einen Speicher;
- ein Ultrabreitband-Label, UWB-Label, (170);
- einen Richtungssensor; und
- ein Computerprogramm,

• wobei die Annotationsvorrichtung (200) mindestens zwei UWB-Basisstationen und eine Anzeige (211,280) umfasst, wobei die mindestens zwei UWB-Basisstationen eine erste UWB-Basisstation umfassen,
• wobei die elektronische Vorrichtung (300) keine UWB-Basisstation umfasst,
• wobei das Computerprogramm in dem Speicher gespeichert ist und, wenn das Computerprogramm durch den Prozessor (110) ausgeführt wird, die mobile Vorrichtung (100) dazu veranlasst wird, die folgenden Schritte durchzuführen:

• bevor sich die mobile Vorrichtung (100) an eine Position der elektronischen Vorrichtung (300) bewegt:

○ wenn sich die mobile Vorrichtung (100) an eine erste Position bewegt und wenn die Zeigerichtung der mobilen Vorrichtung (100) senkrecht zu der Anzeige (211, 280) der Annotationsvorrichtung steht, Erlangen (S501b) eines ersten anfänglichen Azimutwinkels und eines ersten anfänglichen Rollwinkels der mobilen Vorrichtung (100) basierend auf dem Richtungssensor, wodurch die Zeigerichtung der mobilen Vorrichtung (100) kalibriert wird,

- wobei ein Azimutwinkel einen eingeschlossenen Winkel zwischen einer Zeigerichtung der mobilen Vorrichtung (100) und einer vertikalen Linie von der mobilen Vorrichtung (100) zu der Annotationsvorrichtung (200) in einer zweiten Richtung darstellt und ein Rollwinkel den eingeschlossenen Winkel zwischen der Zeigerichtung der mobilen Vorrichtung (100) und der vertikalen Linie von der mobile Vorrichtung (100) zu der Annotationsvorrichtung (200) in einer ersten Richtung darstellt, wobei die erste Richtung senkrecht zu der zweiten Richtung steht;

○ nachdem die mobile Vorrichtung (100) kalibriert wurde, Beginnen, die folgenden Verfahrensschritte a.) - b.) kontinuierlich und in Echtzeit durchzuführen:

a.) wenn sich die mobile Vorrichtung (100) an eine zweite Position bewegt, Erlangen (S502b) eines Echtzeit-Azimutwinkels und eines Echtzeit-Rollwinkels der mobilen Vorrichtung (100) basierend auf dem Richtungssensor; und
b.) Erlangen (S502b, S503b, S504b) eines zweiten eingeschlossenen Winkels $\theta$ zwischen einer aktuellen Zeigerichtung der mobilen Vorrichtung (100) und der vertikalen Linie zwischen der mobilen Vorrichtung (100) und der Anzeige (211, 280) basierend auf dem Echtzeit-Rollwinkel der mobilen Vorrichtung (100), dem Echtzeit-Azimutwinkel der mobilen Vorrichtung (100), dem ersten anfänglichen Azimutwinkel der mobilen Vorrichtung (100) und dem ersten anfänglichen Rollwinkel der mobilen Vorrichtung (100), wobei der zweite eingeschlossene Winkel θ aus einem zweiten Azimutwinkel und einem zweiten Rollwinkel besteht,

◦ Erlangen einer Entfernung zwischen der ersten UWB-Basisstation und einer weiteren UWB-Basisstation, einer Entfernung zwischen dem UWB-Label (170) und jeder der mindestens zwei UWB-Basisstationen und einer Position des UWB-Labels (170), wobei es sich bei der weiteren UWB-Basisstation um eine andere UWB-Basisstation als die erste UWB-Basisstation unter den mindestens zwei UWB-Basisstationen handelt;
◦ Erlangen eines ersten eingeschlossenen Winkels α zwischen einer Zeigerichtung der mobilen Vorrichtung (100), wenn die mobile Vorrichtung (100) auf die elektronische Vorrichtung (100) zeigt, und der vertikalen Linie zwischen der mobilen Vorrichtung (100) und der Anzeige (211, 280) basierend auf der Entfernung zwischen der ersten UWB-Basisstation und der weiteren UWB-Basisstation, der Entfernung zwischen dem UWB-Label (170) und jeder der mindestens zwei UWB-Basisstationen und der Position des UWB-Labels (170), und

• nachdem sich die mobile Vorrichtung (100) zu der Position der elektronischen Vorrichtung (300) bewegt hat:

◦ Empfangen (S410) einer ersten Eingabe;
◦ Aufzeichnen (S410) einer Position der mobilen Vorrichtung (100) als Reaktion auf die erste Eingabe, wobei die Position der mobilen Vorrichtung (100) die Position der elektronischen Vorrichtung (300) ist; und
◦ Einblenden (S420) eines ersten Steuerfensters für die elektronische Vorrichtung (300), wenn sich die mobile Vorrichtung (100) an eine weitere Position bewegt und auf die elektronische Vorrichtung (300) zeigt, wobei das Einblenden des ersten Steuerfensters für die elektronische Vorrichtung (300), wenn sich die mobile Vorrichtung (100) an eine weitere Position bewegt und auf die elektronische Vorrichtung (300) zeigt, Folgendes umfasst:

- wenn sich die mobile Vorrichtung (100) an die weitere Position bewegt und eine Differenz zwischen dem ersten eingeschlossenen Winkel α und dem zweiten eingeschlossenen Winkel θ innerhalb eines voreingestellten ersten Bereichs liegt, Bestimmen, dass die mobile Vorrichtung auf die elektronische Vorrichtung (300) zeigt, und, als Reaktion darauf, Einblenden des ersten Steuerfensters für die elektronische Vorrichtung (300).

2. Mobile Vorrichtung (100) nach Anspruch 1, wobei die mobile Vorrichtung (100) ferner die folgenden Schritte durchführt:

◦Anzeigen des ersten Steuerfensters auf der mobilen Vorrichtung (100) innerhalb einer voreingestellten Zeitspanne, die abläuft, nachdem die mobile Vorrichtung (100) das erste Steuerfenster für die elektronische Vorrichtung (300) einblendet, wobei das erste Steuerfenster dazu verwendet wird, eine erste Benutzereingabe zum Steuern der elektronischen Vorrichtung (300) zu empfangen; und
◦ Überspringen von Anzeigen des ersten Steuerfensters, wenn die erste Benutzereingabe nicht innerhalb der voreingestellten Zeitspanne empfangen wird.

3. Mobile Vorrichtung (100) nach Anspruch 1 oder 2, wobei die mobile Vorrichtung (100) drahtlos mit der Annotationsvorrichtung (200) und der elektronischen Vorrichtung (300) unter Verwendung einer Routingvorrichtung kommuniziert; und
die mobile Vorrichtung (100) ein zweites Steuerfenster für die Annotationsvorrichtung (200) einblendet, nachdem die mobile Vorrichtung (100) auf die Annotationsvorrichtung (200) zeigt.

4. Mobile Vorrichtung (100) nach Anspruch 3, wobei die mobile Vorrichtung (100) ferner die folgenden Schritte durchführt:

◦ Einblenden des zweiten Steuerfensters auf der mobilen Vorrichtung (100) innerhalb einer voreingestellten Zeitspanne, die abläuft nachdem die mobile Vorrichtung (100) das zweite Steuerfenster für die Annotationsvorrichtung (200) einblendet, wobei das zweite Steuerfenster dazu verwendet wird, eine zweite Benutzereingabe zum Steuern der Annotationsvorrichtung (200) zu empfangen; und

○Überspringen von Anzeigen des zweiten Steuerfensters, wenn die zweite Benutzereingabe nicht innerhalb der voreingestellten Zeitspanne empfangen wird.

**5.** Mobile Vorrichtung (100) nach einem der vorhergehenden Ansprüche, wobei der erste eingeschlossene Winkel α aus einem ersten Azimutwinkel und einem ersten Rollwinkel besteht.

**6.** Mobile Vorrichtung (100) nach Anspruch 5, wobei die Tatsache, dass die Differenz zwischen dem ersten eingeschlossenen Winkel α und dem zweiten eingeschlossenen Winkel θ innerhalb des voreingestellten ersten Bereichs liegt, bedeutet, dass eine Differenz zwischen dem ersten Azimutwinkel und dem zweiten Azimutwinkel innerhalb eines voreingestellten zweiten Bereichs liegt und eine Differenz zwischen dem ersten Rollwinkel und dem zweiten Rollwinkel innerhalb eines voreingestellten dritten Bereichs liegt.

**7.** Mobile Vorrichtung (100) nach einem der vorhergehenden Ansprüche, wobei das Erlangen der Entfernung zwischen der ersten UWB-Basisstation und einer weiteren UWB-Basisstation, der Entfernung zwischen dem UWB-Label (170) und jeder der mindestens zwei UWB-Basisstationen und der Position des UWB-Labels (170) Folgendes umfasst:

○ Senden einer Ortungsnachricht unter Verwendung des UWB-Labels (170) ;
○ Empfangen einer Ortungsantwortnachricht von jeder der mindestens zwei UWB-Basisstationen;
○ Erlangen der Entfernung zwischen dem UWB-Label (170) und jeder der mindestens zwei UWB-Basisstationen als Reaktion auf die Ortungsantwortnachricht von jeder der mindestens zwei UWB-Basisstationen;
○ Empfangen einer Nachricht von der Annotationsvorrichtung (200) ;
○ Erlangen der Entfernung zwischen der ersten UWB-Basisstation und der weiteren UWB-Basisstation aus der Nachricht;
○ Auswählen einer Position der ersten UWB-Basisstation unter den mindestens zwei UWB-Basisstationen als einen Koordinatenursprung eines dreidimensionalen Koordinatensystems; und
○ Erlangen von Positionskoordinaten einer weiteren UWB-Basisstation unter den mindestens zwei UWB-Basisstationen und von Positionskoordinaten des UWB-Labels (170) basierend auf dem Koordinatenursprung.

**8.** Mobile Vorrichtung (100) nach einem der Ansprüche 1 bis 7, wobei die erste Eingabe dazu verwendet wird, eine Kennung einer elektronischen Vorrichtung (300) auszuwählen, und die Kennung der elektronischen Vorrichtung (300) einem Parameter der elektronischen Vorrichtung (300) entspricht;

wobei der Parameter eines oder mehrere aus einer Medienzugriffssteuerungs-Adresse, MAC-Adresse, einer Internetprotokoll-Adresse, IP-Adresse, einer Sequenznummer, SN, oder einer Vorrichtungskennung der elektronischen Vorrichtung (300) umfasst;
wobei der Richtungssensor eine inertiale Messeinheit, IMU, ist; und die IMU eine Neun-Achsen-IMU ist und die Neun-Achsen-IMU einen Beschleunigungsmessersensor, einen Gyroskopsensor und einen Magnetometersensor umfasst; oder die IMU eine Sechs-Achsen-IMU ist und die Sechs-Achsen-IMU einen Beschleunigungsmessersensor und einen Gyroskopsensor umfasst;
wobei die erste Richtung eine horizontale Richtung ist und die zweite Richtung eine vertikale Richtung ist; oder die erste Richtung eine vertikale Richtung ist und die zweite Richtung eine horizontale Richtung ist; oder
wobei die mobile Vorrichtung (100) ein Smartphone (100) und eine Air Mouse umfasst.

**9.** Verfahren, das durch eine mobile Vorrichtung (100) durchgeführt wird,

• wobei die mobile Vorrichtung (100) Folgendes umfasst:

- einen Prozessor (110);
- einen Speicher;
- ein Ultrabreitband-Label, UWB-Label, (170);
- einen Richtungssensor; und
- ein Computerprogramm,

○ wobei die mobile Vorrichtung (100) drahtlos mit einer Annotationsvorrichtung (200) und einer zu annotierenden elektronischen Vorrichtung (300) kommuniziert,
○ wobei die Annotationsvorrichtung (200) mindestens zwei UWB-Basisstationen und eine Anzeige (211,280) umfasst, wobei die mindestens zwei UWB-Basisstationen eine erste UWB-Basisstation umfassen,

◦wobei die elektronische Vorrichtung (300) keine UWB-Basisstation umfasst,

◦ wobei das Computerprogramm in dem Speicher gespeichert ist und, wenn das Computerprogramm durch den Prozessor (110) ausgeführt wird, die folgenden Verfahrensschritte durch die mobile Vorrichtung (100) durchgeführt werden:

• bevor sich die mobile Vorrichtung (100) an eine Position der elektronischen Vorrichtung (300) bewegt:

◦wenn sich die mobile Vorrichtung (100) an eine erste Position bewegt und wenn die Zeigerichtung der mobilen Vorrichtung (100) senkrecht zu der Anzeige (211, 280) der Annotationsvorrichtung steht, Erlangen (S501b) eines ersten anfänglichen Azimutwinkels und eines ersten anfänglichen Rollwinkels der mobilen Vorrichtung (100) basierend auf dem Richtungssensor, wodurch die Zeigerichtung der mobilen Vorrichtung (100) kalibriert wird,

- wobei ein Azimutwinkel einen eingeschlossenen Winkel zwischen einer Zeigerichtung der mobilen Vorrichtung (100) und einer vertikalen Linie von der mobilen Vorrichtung (100) zu der Annotationsvorrichtung (200) in einer zweiten Richtung darstellt und ein Rollwinkel den eingeschlossenen Winkel zwischen der Zeigerichtung der mobilen Vorrichtung (100) und der vertikalen Linie von der mobile Vorrichtung (100) zu der Annotationsvorrichtung (200) in einer ersten Richtung darstellt, wobei die erste Richtung senkrecht zu der zweiten Richtung steht;

◦ nachdem die mobile Vorrichtung (100) kalibriert wurde, Beginnen, die folgenden Verfahrensschritte a.) - b.) kontinuierlich und in Echtzeit durchzuführen:

a.) wenn sich die mobile Vorrichtung (100) an eine zweite Position bewegt, Erlangen (S502b) eines Echtzeit-Azimutwinkels und eines Echtzeit-Rollwinkels der mobilen Vorrichtung (100) basierend auf dem Richtungssensor; und

b.) Erlangen (S502b, S503b, S504b) eines zweiten eingeschlossenen Winkels $\theta$ zwischen einer aktuellen Zeigerichtung der mobilen Vorrichtung (100) und der vertikalen Linie zwischen der mobilen Vorrichtung (100) und der Anzeige (211, 280) basierend auf dem Echtzeit-Rollwinkel der mobilen Vorrichtung (100), dem Echtzeit-Azimutwinkel der mobilen Vorrichtung (100), dem ersten anfänglichen Azimutwinkel der mobilen Vorrichtung (100) und dem ersten anfänglichen Rollwinkel der mobilen Vorrichtung (100), wobei der zweite eingeschlossene Winkel $\theta$ aus einem zweiten Azimutwinkel und einem zweiten Rollwinkel besteht,

◦ Erlangen einer Entfernung zwischen der ersten UWB-Basisstation und einer weiteren UWB-Basisstation, einer Entfernung zwischen dem UWB-Label (170) und jeder der mindestens zwei UWB-Basisstationen und einer Position des UWB-Labels (170), wobei es sich bei der weiteren UWB-Basisstation um eine andere UWB-Basisstation als die erste UWB-Basisstation unter den mindestens zwei UWB-Basisstationen handelt;

◦ Erlangen eines ersten eingeschlossenen Winkels $\alpha$ zwischen einer Zeigerichtung der mobilen Vorrichtung (100), wenn die mobile Vorrichtung (100) auf die elektronische Vorrichtung (100) zeigt, und der vertikalen Linie zwischen der mobilen Vorrichtung (100) und der Anzeige (211, 280) basierend auf der Entfernung zwischen der ersten UWB-Basisstation und der weiteren UWB-Basisstation, der Entfernung zwischen dem UWB-Label (170) und jeder der mindestens zwei UWB-Basisstationen und der Position des UWB-Labels (170), und

• nachdem sich die mobile Vorrichtung (100) zu der Position der elektronischen Vorrichtung (300) bewegt hat:

◦ Empfangen (S410) einer ersten Eingabe;

◦ Aufzeichnen (S410) einer Position der mobilen Vorrichtung (100) als Reaktion auf die erste Eingabe, wobei die Position der mobilen Vorrichtung (100) die Position der elektronischen Vorrichtung (300) ist; und

o Einblenden (S420) eines ersten Steuerfensters für die elektronische Vorrichtung (300), wenn sich die mobile Vorrichtung (100) an eine weitere Position bewegt und auf die elektronische Vorrichtung (300) zeigt, wobei das Einblenden des ersten Steuerfensters für die elektronische Vorrichtung (300), wenn sich die mobile Vorrichtung (100) an eine weitere Position bewegt und auf die elektronische Vorrichtung (300) zeigt, Folgendes umfasst:

- wenn sich die mobile Vorrichtung (100) an die weitere Position bewegt und eine Differenz zwischen dem ersten eingeschlossenen Winkel α und dem zweiten eingeschlossenen Winkel θ innerhalb eines voreingestellten ersten Bereichs liegt, Bestimmen, dass die mobile Vorrichtung auf die elektronische Vorrichtung (300) zeigt, und, als Reaktion darauf, Einblenden des ersten Steuerfensters für die elektronische Vorrichtung (300).

**Revendications**

1. Dispositif mobile (100), dans lequel le dispositif mobile (100) communique sans fil avec un dispositif d'annotation (200) et un dispositif électronique à annoter (300),

   • dans lequel le dispositif mobile (100) comprend :

      - un processeur (110) ;
      - une mémoire ;
      - une étiquette ultra-large bande, UWB (170) ;
      - un capteur de direction ; et
      - un programme informatique,

   • dans lequel le dispositif d'annotation (200) comprend au moins deux stations de base UWB et un affichage (211,280), les au moins deux stations de base UWB comprennent une première station de base UWB,
   • dans lequel le dispositif électronique (300) ne comprend pas de station de base UWB,
   • dans lequel le programme informatique est stocké dans la mémoire, et lorsque le programme informatique est exécuté par le processeur (110), le dispositif mobile (100) est amené à réaliser les étapes suivantes :

      α avant que le dispositif mobile (100) ne se déplace vers un emplacement du dispositif électronique (300) :

         ◦ lorsque le dispositif mobile (100) se déplace vers un premier emplacement, et lorsque la direction de pointage du dispositif mobile (100) est verticale par rapport à l'affichage (211, 280) du dispositif d'annotation, l'obtention (S501b) d'un premier angle d'azimut initial et d'un premier angle de roulis initial du dispositif mobile (100) sur la base du capteur de direction, calibrant ainsi la direction de pointage du dispositif mobile (100),

            - dans lequel un angle d'azimut représente un angle inclus entre une direction de pointage du dispositif mobile (100) et une ligne verticale du dispositif mobile (100) au dispositif d'annotation (200) dans une seconde direction, et un angle de roulis représente un angle inclus entre la direction de pointage du dispositif mobile (100) et la ligne verticale du dispositif mobile (100) au dispositif d'annotation (200) dans une première direction, la première direction étant perpendiculaire à la seconde direction ;

         ◦ après avoir calibré le dispositif mobile (100), le démarrage de l'exécution en continu et en temps réel des étapes de procédé suivantes a.) à b.) :

            a) lorsque le dispositif mobile (100) se déplace vers un second emplacement, l'obtention (S502b) d'un angle d'azimut en temps réel et d'un angle de roulis en temps réel du dispositif mobile (100) sur la base du capteur de direction ; et
            b) l'obtention (S502b, S503b, S504b) d'un second angle inclus θ entre une direction de pointage actuelle du dispositif mobile (100) et la ligne verticale entre le dispositif mobile (100) et l'affichage (211, 280) sur la base de l'angle de roulis en temps réel du dispositif mobile (100), de l'angle d'azimut en temps réel du dispositif mobile (100), du premier angle d'azimut initial du dispositif mobile (100) et du premier angle de roulis initial du dispositif mobile (100), dans lequel le second angle inclus θ est composé d'un second angle d'azimut et d'un second angle de roulis,

         ◦ l'obtention d'une distance entre la première station de base UWB et une autre station de base UWB, d'une distance entre l'étiquette UWB (170) et chacune des au moins deux stations de base UWB, et d'un emplacement de l'étiquette UWB (170), dans lequel l'autre station de base UWB est une station de base UWB autre que la première station de base UWB parmi les au moins deux stations de base UWB ;

○ l'obtention d'un premier angle inclus α entre une direction de pointage du dispositif mobile (100) lorsque le dispositif mobile (100) pointe vers le dispositif électronique (100) et la ligne verticale entre le dispositif mobile (100) et l'affichage (211, 280) sur la base de la distance entre la première station de base UWB et l'autre station de base UWB, de la distance entre l'étiquette UWB (170) et chacune des au moins deux stations de base UWB, et de l'emplacement de l'étiquette UWB (170), et

• après que le dispositif mobile (100) s'est déplacé vers l'emplacement du dispositif électronique (300) :

○ la réception (S410) d'une première entrée ;
○ l'enregistrement (S410) d'un emplacement du dispositif mobile (100) en réponse à la première entrée, dans lequel l'emplacement du dispositif mobile (100) est l'emplacement du dispositif électronique (300) ; et
○ l'apparition (S420) d'une première fenêtre de commande pour le dispositif électronique (300) lorsque le dispositif mobile (100) se déplace vers un autre emplacement et pointe vers le dispositif électronique (300), dans lequel l'apparition de la première fenêtre de commande pour le dispositif électronique (300) lorsque le dispositif mobile (100) se déplace vers un autre emplacement et pointe vers le dispositif électronique (300) comprend :

- lorsque le dispositif mobile (100) se déplace vers l'autre emplacement et qu'une différence entre le premier angle inclus α et le second angle inclus θ tombe dans une première plage prédéfinie, la détermination que le dispositif mobile pointe vers le dispositif électronique (300) et, en réponse à cela, l'apparition de la première fenêtre de commande pour le dispositif électronique (300).

2. Dispositif mobile (100) selon la revendication 1, dans lequel le dispositif mobile (100) réalise également les étapes suivantes :

○ l'affichage de la première fenêtre de commande sur le dispositif mobile (100) dans une durée prédéfinie s'écoulant après que le dispositif mobile (100) a fait apparaître la première fenêtre de commande pour le dispositif électronique (300), dans lequel la première fenêtre de commande est utilisée pour recevoir une première entrée utilisateur pour commander le dispositif électronique (300) ; et
○ l'affichage de la première fenêtre de commande sera ignoré si la première entrée utilisateur n'est pas reçue dans la durée prédéfinie.

3. Dispositif mobile (100) selon la revendication 1 ou 2, dans lequel le dispositif mobile (100) communique sans fil avec le dispositif d'annotation (200) et le dispositif électronique (300) à l'aide d'un dispositif de routage ; et
le dispositif mobile (100) fait apparaître une seconde fenêtre de commande pour le dispositif d'annotation (200) après que le dispositif mobile (100) a pointé vers le dispositif d'annotation (200).

4. Dispositif mobile (100) selon la revendication 3, dans lequel le dispositif mobile (100) réalise également les étapes suivantes :

○ l'affichage de la seconde fenêtre de commande sur le dispositif mobile (100) dans une durée prédéfinie s'écoulant après que le dispositif mobile (100) a fait apparaître la seconde fenêtre de commande pour le dispositif d'annotation (200), dans lequel la seconde fenêtre de commande est utilisée pour recevoir une seconde entrée utilisateur pour commander le dispositif d'annotation (200) ; et
○ l'affichage de la seconde fenêtre de commande sera ignoré si la seconde entrée utilisateur n'est pas reçue dans la durée prédéfinie.

5. Dispositif mobile (100) selon l'une quelconque des revendications précédentes, dans lequel le premier angle inclus α est composé d'un premier angle d'azimut et d'un premier angle de roulis.

6. Dispositif mobile (100) selon la revendication 5, dans lequel le fait que la différence entre le premier angle inclus α et le second angle inclus θ tombe dans la première plage prédéfinie signifie que la différence entre le premier angle d'azimut et le second angle d'azimut tombe dans une deuxième plage prédéfinie, et que la différence entre le premier angle de roulis et le second angle de roulis tombe dans une troisième plage prédéfinie.

7. Dispositif mobile (100) selon l'une quelconque des revendications précédentes, dans lequel l'obtention de la distance entre la première station de base UWB et une autre station de base UWB, de la distance entre l'étiquette UWB (170) et chacune des au moins deux stations de base UWB, et de l'emplacement de l'étiquette UWB (170) comprend :

○ l'envoi d'un message de télémétrie à l'aide de l'étiquette UWB (170) ;
○ la réception d'un message de réponse de télémétrie de chacune des au moins deux stations de base UWB ;
○ l'obtention de la distance entre l'étiquette UWB (170) et chacune des au moins deux stations de base UWB en réponse au message de réponse de télémétrie de chacune des au moins deux stations de base UWB ;
○ la réception d'un message du dispositif d'annotation (200) ;
○ l'obtention de la distance entre la première station de base UWB et l'autre station de base UWB à partir du message ;
○ la sélection d'un emplacement de la première station de base UWB dans les au moins deux stations de base UWB comme origine de coordonnées d'un système de coordonnées tridimensionnel ; et
○ l'obtention de coordonnées d'emplacement d'une autre station de base UWB dans les au moins deux stations de base UWB et de coordonnées d'emplacement de l'étiquette UWB (170) sur la base de l'origine de coordonnées.

8. Dispositif mobile (100) selon l'une quelconque des revendications 1 à 7,

dans lequel la première entrée est utilisée pour sélectionner un identifiant d'un dispositif électronique (300), et l'identifiant du dispositif électronique (300) correspond à un paramètre du dispositif électronique (300) ;
dans lequel le paramètre comprend un ou plusieurs des éléments suivants : une adresse de commande d'accès au support MAC, une adresse de protocole Internet IP, un numéro de séquence SN ou un identifiant de dispositif du dispositif électronique (300) ; dans lequel le capteur de direction est une unité de mesure inertielle, IMU ; et l'IMU est une IMU à neuf axes, et l'IMU à neuf axes comprend un capteur accéléromètre, un capteur gyroscopique et un capteur magnétique ; ou l'IMU est une IMU à six axes, et l'IMU à six axes comprend un capteur accéléromètre et un capteur gyroscopique ;
dans lequel la première direction est une direction horizontale, et la seconde direction est une direction verticale ; ou la première direction est une direction verticale, et la seconde direction est une direction horizontale ; ou, dans lequel le dispositif mobile (100) comprend un smartphone (100) et une souris aérienne.

9. Procédé réalisé par un dispositif mobile (100),

• dans lequel le dispositif mobile (100) comprend :

- un processeur (110) ;
- une mémoire ;
- une étiquette ultra-large bande, UWB (170) ;
- un capteur de direction ; et
- un programme informatique,

○ dans lequel le dispositif mobile (100) communique sans fil avec un dispositif d'annotation (200) et un dispositif électronique à annoter (300),
○ dans lequel le dispositif d'annotation (200) comprend au moins deux stations de base UWB et un affichage (211,280), les au moins deux stations de base UWB comprennent une première station de base UWB,
○ dans lequel le dispositif électronique (300) ne comprend pas de station de base UWB,
○ dans lequel le programme informatique est stocké dans la mémoire, et lorsque le programme informatique est exécuté par le processeur (110), les étapes de procédé suivantes sont réalisées par le dispositif mobile (100) :

• avant que le dispositif mobile (100) ne se déplace vers un emplacement du dispositif électronique (300) :

○ lorsque le dispositif mobile (100) se déplace vers un premier emplacement, et lorsque la direction de pointage du dispositif mobile (100) est verticale par rapport à l'affichage (211, 280) du dispositif d'annotation, l'obtention (S501b) d'un premier angle d'azimut initial et d'un premier angle de roulis initial du dispositif mobile (100) sur la base du capteur de direction, calibrant ainsi la direction de pointage du dispositif mobile (100),

- dans lequel un angle d'azimut représente un angle inclus entre une direction de pointage du dispositif mobile (100) et une ligne verticale du dispositif mobile (100) au dispositif d'annotation (200) dans une seconde direction, et un angle de roulis représente un angle inclus entre la direction de pointage du dispositif mobile (100) et la ligne verticale du dispositif mobile (100) au dispositif d'annotation (200) dans une première direction, la première direction étant perpendiculaire à la seconde direction ;

∘ après avoir calibré le dispositif mobile (100), le démarrage de l'exécution en continu et en temps réel des étapes de procédé suivantes a.) à b.) :

a) lorsque le dispositif mobile (100) se déplace vers un second emplacement, l'obtention (S502b) d'un angle d'azimut en temps réel et d'un angle de roulis en temps réel du dispositif mobile (100) sur la base du capteur de direction ; et

b) l'obtention (S502b, S503b, S504b) d'un second angle inclus $\theta$ entre une direction de pointage actuelle du dispositif mobile (100) et la ligne verticale entre le dispositif mobile (100) et l'affichage (211, 280) sur la base de l'angle de roulis en temps réel du dispositif mobile (100), de l'angle d'azimut en temps réel du dispositif mobile (100), du premier angle d'azimut initial du dispositif mobile (100) et du premier angle de roulis initial du dispositif mobile (100), dans lequel le second angle inclus $\theta$ est composé d'un second angle d'azimut et d'un second angle de roulis,

∘ l'obtention d'une distance entre la première station de base UWB et une autre station de base UWB, d'une distance entre l'étiquette UWB (170) et chacune des au moins deux stations de base UWB, et d'un emplacement de l'étiquette UWB (170), dans lequel l'autre station de base UWB est une station de base UWB autre que la première station de base UWB parmi les au moins deux stations de base UWB ;

∘ l'obtention d'un premier angle inclus $\alpha$ entre une direction de pointage du dispositif mobile (100) lorsque le dispositif mobile (100) pointe vers le dispositif électronique (100) et la ligne verticale entre le dispositif mobile (100) et l'affichage (211, 280) sur la base de la distance entre la première station de base UWB et l'autre station de base UWB, de la distance entre l'étiquette UWB (170) et chacune des au moins deux stations de base UWB, et de l'emplacement de l'étiquette UWB (170), et

• après que le dispositif mobile (100) s'est déplacé vers l'emplacement du dispositif électronique (300) :

∘la réception (S410) d'une première entrée ;

∘ l'enregistrement (S410) d'un emplacement du dispositif mobile (100) en réponse à la première entrée, dans lequel l'emplacement du dispositif mobile (100) est l'emplacement du dispositif électronique (300) ; et

∘ l'apparition (S420) d'une première fenêtre de commande pour le dispositif électronique (300) lorsque le dispositif mobile (100) se déplace vers un autre emplacement et pointe vers le dispositif électronique (300), dans lequel l'apparition de la première fenêtre de commande pour le dispositif électronique (300) lorsque le dispositif mobile (100) se déplace vers un autre emplacement et pointe vers le dispositif électronique (300) comprend :

- lorsque le dispositif mobile (100) se déplace vers l'autre emplacement, et

qu'une différence entre le premier angle inclus $\alpha$ et le second angle inclus $\theta$ tombe dans une première plage prédéfinie, la détermination que le dispositif mobile pointe vers le dispositif électronique (300) et, en réponse à cela, l'apparition de la première fenêtre de commande pour le dispositif électronique (300).

FIG. 1

Mobile device 100

Wireless communication module
Wi-Fi/Bluetooth/ZigBee/wireless data transmission
module
[150]

Sensor module [160]

Internal memory
[121]

Processor

[110]

External memory
interface [120]

UWB label [170]

USB interface
[130]

Charging
input

Charging
management
module
[140]

Power management
module
[141]

Battery [142]

FIG. 2

Annotation device 200

FIG. 3

S410: After a mobile device moves to a location of a to-be-annotated electronic device, receive a first input, and record location coordinates of the mobile device as location coordinates of the electronic device

S420: The mobile device pops up a control window for the electronic device after the mobile device points to the electronic device

FIG. 4

45

```
┌──────────┐                                          ┌────────────┐
│  Mobile  │                                          │ Annotation │
│  device  │                                          │   device   │
└──────────┘                                          └────────────┘
```

S501a: The mobile device sends ranging messages to a first UWB base station, a second UWB base station, and a third UWB base station on the annotation device respectively by using a UWB label

S502a: The annotation device receives the ranging messages respectively by using the first UWB base station, the second UWB base station, and the third UWB base station

S503a: The annotation device sends ranging response messages to the UWB label on the mobile device respectively by using the first UWB base station, the second UWB base station, and the third UWB base station

S504a: The UWB label of the mobile device receives the three ranging response messages, and determines a distance $S_3$ between the first UWB base station and the UWB label, a distance $S_4$ between the second UWB base station and the UWB label, and a distance $S_5$ between the third UWB base station and the UWB label based on the three ranging response messages

S505a: The annotation device determines a distance $S_1$ between the first UWB base station and the second UWB base station and a distance $S_2$ between the first UWB base station and the third UWB base station

S506a: The annotation device sends the distance $S_1$ between the first UWB base station and the second UWB base station and the distance $S_2$ between the first UWB base station and the third UWB base station to the mobile device

S507a: The mobile device uses location coordinates of the first UWB base station as a coordinate origin, and determines location coordinates of the second UWB base station, the third UWB base station, and the UWB label in a three-dimensional coordinate system respectively based on $S_1$, $S_2$, $S_3$, $S_4$, and $S_5$

FIG. 5A

S501b: Obtain first measurement information of a direction sensor after a pointing direction of a mobile device is vertical to an annotation device

↓

S502b: Obtain second measurement information of the direction sensor after the pointing direction of the mobile device is not vertical to the annotation device

↓

S503b: Obtain a second azimuth and a second roll angle based on the second measurement information and the first measurement information

↓

S504b: Obtain a second included angle θ based on the second azimuth and the second roll angle

FIG. 5B

S601: After a mobile device moves to a location of a to-be-annotated electronic device, receive a first input, and record location coordinates of a UWB label of the mobile device as location coordinates of the electronic device

↓

S602: The mobile device determines a first included angle α based on $S_1$, $S_2$, $S_3$, $S_4$, and $S_5$, location coordinates of a first UWB base station, a second UWB base station, a third UWB base station, and the UWB label, and the location coordinates of the electronic device, where the first included angle is an included angle that exists when the mobile device points to the electronic device and that is between a straight line in a pointing direction of the mobile device and a vertical line between the mobile device and a display of an annotation device

↓

S603: The mobile device pops up a control window for the electronic device when a difference between the first included angle α and a second included angle θ falls within a preset first range

FIG. 6

FIG. 7

a

b

FIG. 8

a

b

FIG. 9

EP 4 250 775 B1

FIG. 10

FIG. 11

FIG. 12

EP 4 250 775 B1

FIG. 13

FIG. 14

200    211

Third UWB
base station

214

Vertical line
from a
smartphone
to a display

P

First UWB
base station

Second UWB
base station

212    213

300

θ

Straight line in a
pointing direction of
the smartphone

Q

UWB
label

Direction
sensor

100

101

102

FIG. 15

200

211

Third UWB
base station

214

P

Vertical line
from a
smartphone
to a display

First UWB
base station

Second UWB
base station

212

213

300

Straight line in a pointing
direction of the smartphone

α

100

101

Q

UWB
label

102

Direction
sensor

FIG. 16

FIG. 17

FIG. 18

200    211

Third UWB
base station

214

Vertical line from a
smartphone to a
display

P

First UWB
base station

Second UWB
base station

212    213

100

300

UWB
label

101

Direction
sensor

102

α

100

Q

UWB
label

101

Direction
sensor

102

FIG. 19

FIG. 20a

FIG. 20b

FIG. 21

FIG. 22

200   211

Third UWB
base station

214

Vertical line from
a smartphone to a
display

P

First UWB
base station

Second UWB
base station

212

213

300

θ

α

Straight line in a
pointing direction of the
smartphone

101   100

102

Q

UWB
label

Direction
sensor

FIG. 23

FIG. 24

EP 4 250 775 B1

FIG. 25

Third UWB
base station

214

200    211

Vertical line
from a
smartphone
to a display

P

First UWB
base station

Second UWB
base station

212    213

300

Straight line in a pointing
direction of the
smartphone

100

101

Q

UWB
label

Direction sensor

102

Vertical direction

Horizontal
direction

EP 4 250 775 B1

FIG. 26

FIG. 27

FIG. 28

**REFERENCES CITED IN THE DESCRIPTION**

**Patent documents cited in the description**

- CN 202110106639
- US 2017013112 A1
- US 2011312311 A1
- US 10701661 B1
- US 2011254683 A1